# EUROPEAN PATENT SPECIFICATION

(11) **EP 2 999 036 B1**
(45) Date of publication and mention of the grant of the patent: **25.10.2017**
(21) Application number: 14798085.8
(22) Date of filing: 09.05.2014
(51) Int. Cl.: H01M 4/485, H01M 4/505, C01G 53/00, H01M 4/36, H01M 4/525, H01M 4/587, H01M 10/0525, H01M 10/0567

(54) **POSITIVE ELECTRODE ACTIVE MATERIAL CONTAINING SOLID SOLUTION ACTIVE MATERIAL, POSITIVE ELECTRODE CONTAINING SAID POSITIVE ELECTRODE ACTIVE MATERIAL, AND NONAQUEOUS ELECTROLYTE SECONDARY BATTERY USING SAID POSITIVE ELECTRODE**
AKTIVMATERIAL FÜR POSITIVELEKTRODE MIT AKTIVMATERIAL AUS EINER FESTEN LÖSUNG, POSITIVELEKTRODE MIT DEM AKTIVMATERIAL FÜR POSITIVELEKTRODE UND SEKUNDÄRBATTERIE MIT WASSERFREIEM ELEKTROLYT MIT DIESER POSITIVELEKTRODE
MATIÈRE ACTIVE D'ÉLECTRODE POSITIVE CONTENANT UNE MATIÈRE ACTIVE EN SOLUTION SOLIDE, ÉLECTRODE POSITIVE CONTENANT LADITE MATIÈRE ACTIVE D'ÉLECTRODE POSITIVE, BATTERIE SECONDAIRE À ÉLECTROLYTE NON AQUEUX UTILISANT LADITE ÉLECTRODE POSITIVE

(30) Priority: 13.05.2013 JP 2013101722
(43) Date of publication of application: 23.03.2016
(73) Proprietor: NISSAN MOTOR CO., LTD., Yokohama-shi, Kanagawa 220-8623 (JP)
(72) Inventor: YAMAMOTO, Shinji, Atsugi-shi Kanagawa 243-0123 (JP); ITO, Atsushi, Atsugi-shi Kanagawa 243-0123 (JP); KOBAYASHI, Genki, Yokohama-shi Kanagawa 221-8686 (JP); MATSUMOTO, Futoshi, Yokohama-shi Kanagawa 221-8686 (JP)
(74) Representative: Grünecker Patent- und Rechtsanwälte PartG mbB
(86) International application number: PCT/JP2014/062434
(87) International publication number: WO 2014/185343

(56) References cited:
- WO-A1-2013/005737
- US-A1- 2013 015 396
- W. C. WEST ET AL.: "Electrochemical Behavior of Layered Solid Solution Li2Mn03-LiM02 (M=Ni, Mn, Co) Li-Ion Cathodes with and without Alumina Coatings", JOURNAL OF THE ELECTROCHEMICAL SOCIETY, vol. 158, no. ISSUE, 2011, pages A883-A889, XP002753780,
- GENKI KOBAYASHI ET AL.: 'Sankabutsu Coating o Hodokoshita Li Kajo Koyotaikei Seikyoku Li[Li0.2Ni0.183Co0.03Mn0.583]O2 no Denkyoku Tokusei' THE ELECTROCHEMICAL SOCIETY OF JAPAN DAI 79 KAI TAIKAI KOEN YOSHISHU 29 March 2012, page 115
- W. C. WEST ET AL.: 'Electrochemical Behavior of Layered Solid Solution Li2Mn03-LiM02 (M=Ni, Mn, Co) Li-Ion Cathodes with and without Alumina Coatings' JOURNAL OF THE ELECTROCHEMICAL SOCIETY vol. 158, no. ISSUE, 2011, pages A883 - A889

## Description

### Technical Field

The present invention relates to a positive electrode active material for a non-aqueous electrolyte secondary battery containing a solid solution active material, a positive electrode for a non-aqueous electrolyte secondary battery containing the positive electrode active material, and a non-aqueous electrolyte secondary battery using the positive electrode.

### Background Art

Currently, a non-aqueous electrolyte secondary battery including a lithium ion secondary battery, which is used for a mobile device such as a mobile phone, is available as a commercial product. In general, in the non-aqueous electrolyte secondary battery, a positive electrode and a negative electrode are connected to each other through an electrolyte layer. In the positive electrode, a current collector is coated with a positive electrode active material or the like. In the negative electrode, a current collector is coated with a negative electrode active material or the like. In the electrolyte layer, a non-aqueous electrolyte solution or a non-aqueous electrolyte gel is held within a separator. According to occlusion and release of ions such as lithium ions into and from the electrode active material, a charge-discharge reaction of a battery occurs.

In recent years, it is desired to reduce an amount of carbon dioxide in order to cope with the global warming. A non-aqueous electrolyte secondary battery having a small environmental burden has been used not only for a mobile device but also for a power source device of an electric vehicle such as a hybrid electric vehicle (HEV), an electric vehicle (EV), or a fuel cell vehicle.

The non-aqueous electrolyte secondary battery for application to an electric vehicle is required to have a high output and a high capacity. As a positive electrode active material used for a positive electrode of the non-aqueous electrolyte secondary battery for an electric vehicle, a solid solution active material containing a transition metal such as lithium or manganese is known. For example, Patent Literature 1 and 3 and Non-Patent Literature 1 and 2 disclose lithium-manganese complex oxides as positive electrode active material. Particularly, manganese is present relatively abundantly as a source. Therefore, a raw material of manganese is inexpensive and easily available. Manganese has a small environmental burden, and therefore, is suitably used for the positive electrode active material. It is known that, in such a solid solution active material, the transition metal is disadvantageously eluted into an electrolyte solution after repeated charge and discharge of the secondary battery. This is because a crystal structure of the solid solution active material changes by the elution of the transition metal, and a reduction of capacity of the non-aqueous electrolyte secondary battery is caused. In order to prevent the elution of the transition metal, for example, a related art is known, in which a surface of a solid solution active material is coated with a metal oxide (Patent Literature 3 below). A surface coat layer of the metal oxide obtained by coating the surface with the metal oxide prevents the elution of
the transition metal into the electrolyte solution. Reduction in the capacity of the battery (capacity retention rate) can be thereby prevented.

### Citation List

### Patent Literature and Non-Patent Literature

Patent Literature 1: US 2013/015396 A1
Patent Literature 2: WO 2013/005737 A1
Patent Literature 3: US 2011/0076556 A
Non-Patent Literature 1: W. C. West et al., Journal of The Electrochemical Society 2011, 158 (8), A883-A889
Non-Patent Literature 2: G. Kobayashi et al., The Electrochemical Society of Japan 2012, 115.

### Summary of Invention

### Technical Problem

However, the above-described related art cannot prevent the elution of the transition metal from the active material crystal of the solid solution. Therefore, reduction in the capacity retention rate of the battery cannot be prevented sufficiently due to the elution of the transition metal from the solid solution of the active material crystal, and further due to the elution of the metal oxide from the surface coat layer into the electrolyte solution.

An object of the present invention is to provide a method for being able to suppress elution of a transition metal, particularly manganese, in a positive electrode active material for a non-aqueous electrolyte secondary battery.

### Solution to Problem

The present invention is a positive electrode active material for a non-aqueous electrolyte secondary battery according to claim 1 and a method for producing this positive electrode active material for a non-aqueous electrolyte secondary battery according to claim 8. The present inventors have performed intensive studies to solve the above-described problems. As a result, the present inventors have found that elution of a transition metal during charge and discharge can be suppressed by using the following material as a positive electrode active material to obtain a non-aqueous electrolyte secondary battery having excellent cycle
characteristics. That is, in the positive electrode active material, an alumina cover layer is provided on the surface of the solid solution active material, and Al has invaded the side of the surface of the active material in the interface between the active material and the alumina layer. That is, the positive electrode active material of the present invention contains a solid solution active material represented by the composition formula (1) below.

### [Numerical formula 1]

Li_{1.5}[NiₐMn_{b}CO_{c}[Li]_{d}[X]ₑ]O_{z} (1)

Here, X represents at least one selected from Ti, Zr and Nb, and 0 < e ≤ 0.5, a + b + c + d + e = 1.5, 0.1 ≤ d ≤ 0.4, and 1.1 ≤ [a + b + c + e] ≤ 1.4. z represents a number of oxygen atoms satisfying an atomic valence. The positive electrode active material of the present invention further has an alumina cover layer that exists on the surfaces of particles of the solid solution active material, and a region in which Al element is present (invades) on the side of the surface of the solid solution active material in the interface between the solid solution active material particles and the alumina layer, wherein a content of the alumina is 1 to 5% by mass with respect to the total amount of the positive electrode active material.

### Brief Description of Drawings

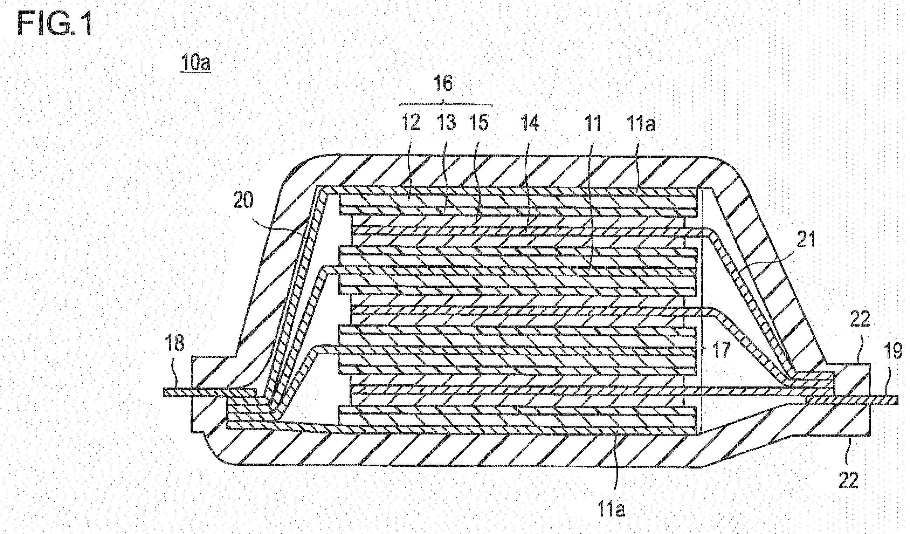

FIG. 1 is a schematic cross sectional view schematically illustrating a whole structure of a parallel laminated lithium ion secondary battery, according to an embodiment of the present invention.

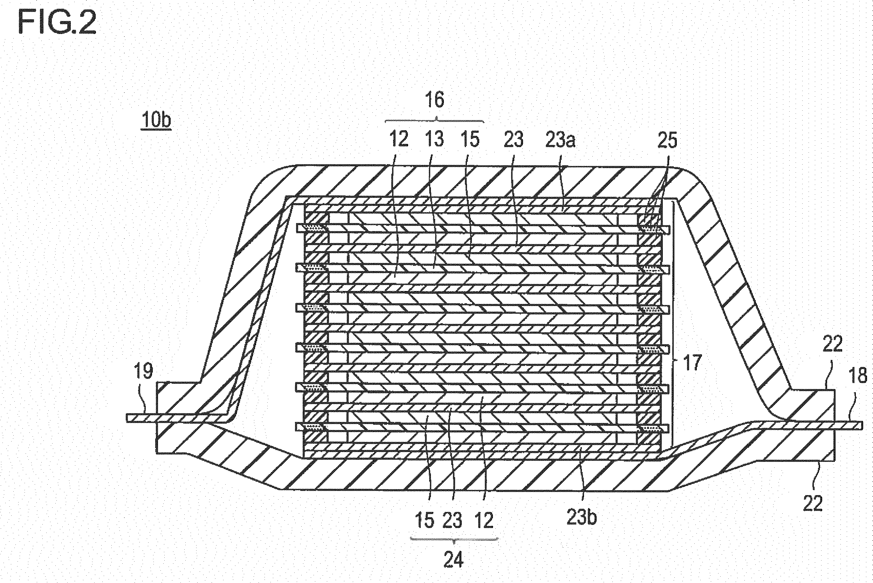

FIG. 2 is a schematic cross sectional view schematically illustrating a whole structure of a series laminated bipolar lithium ion secondary battery, according to an embodiment of the present invention.

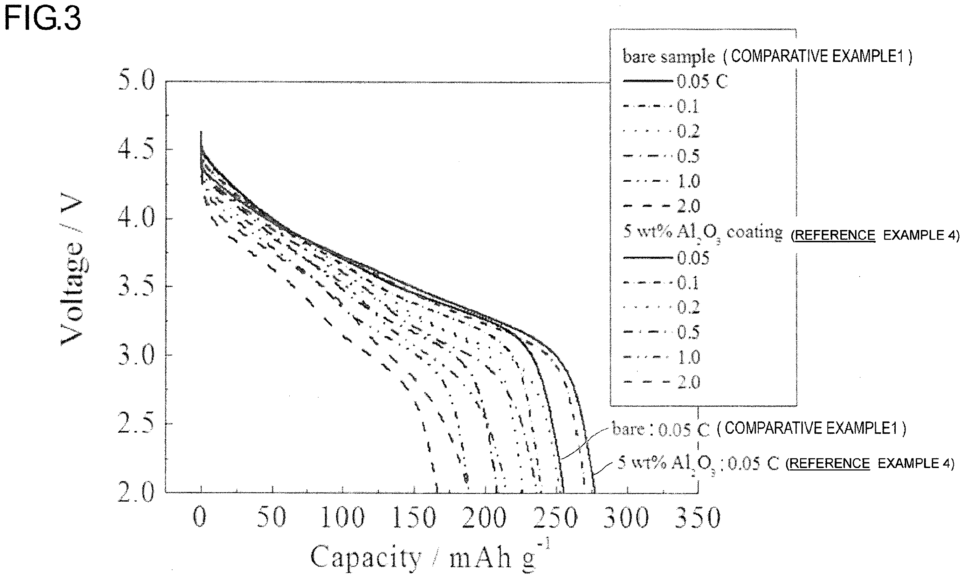

FIG. 3 is a diagram comparing discharge curves at the time of output characteristic test of electrodes.

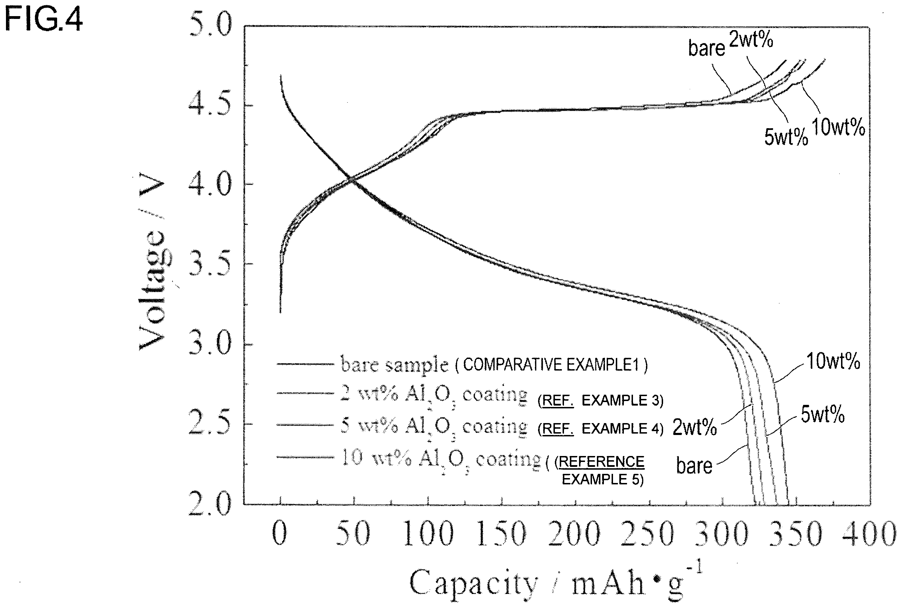

FIG. 4 is a diagram comparing charge-discharge curves of the electrodes at high temperature (50°C).

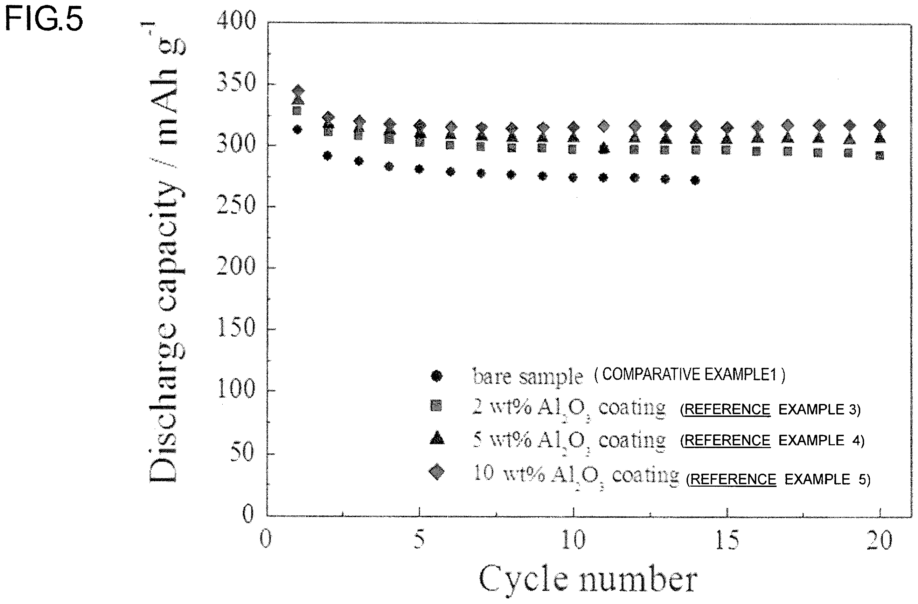

FIG. 5 is a diagram comparing cycle characteristics of the electrodes at high temperature (50°C).

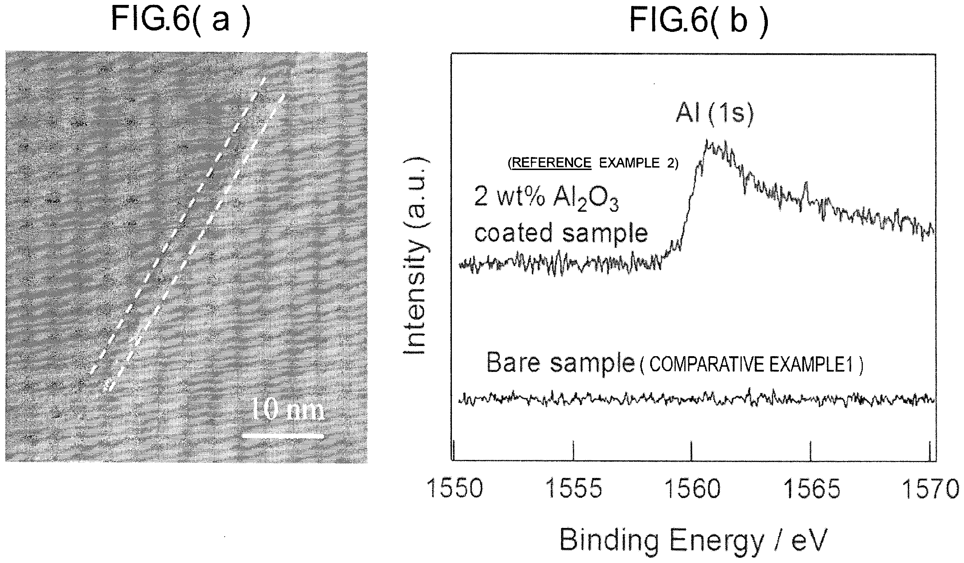

FIG. 6 (a) is a diagram illustrating a vicinity of an interface between an Al₂O₃ layer and a solid solution active material (particles), forming the positive electrode active material particles of the reference embodiment, observed using an electron microscope (SEM). FIG. 6(b) is a diagram illustrating the interface between the Al₂O₃ layer and the solid solution active material (particles), forming the positive electrode active material particles of the reference embodiment, observed using an XPS.

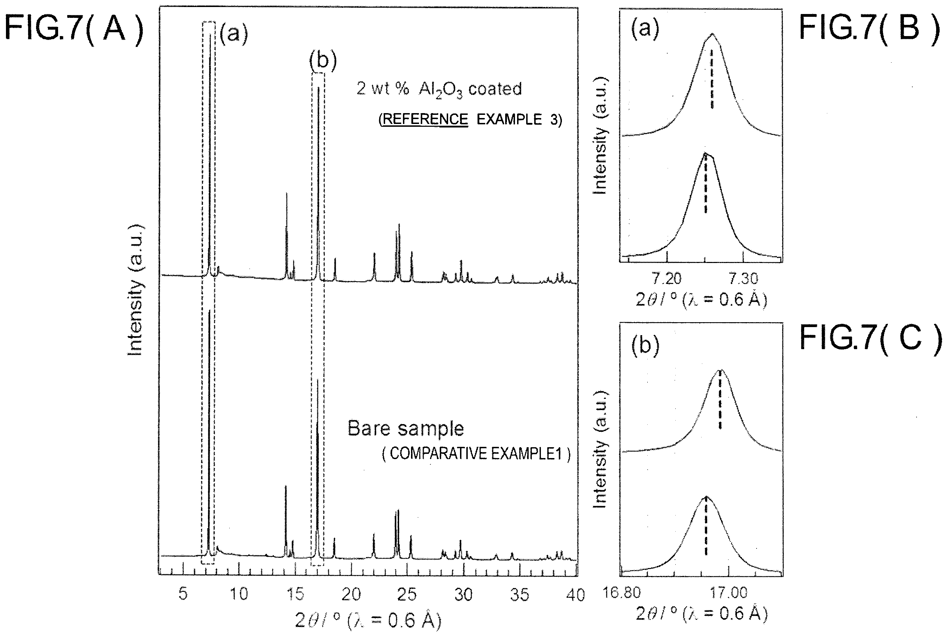

FIG. 7(A) is a chart illustrating an XRD (X-ray diffraction) pattern of the positive electrode active material in which a composition formula of the solid solution active material has been identified by elemental analysis. FIG. 7(B) is a diagram illustrating enlarged peaks shown in (a) of the two patterns (upper and lower diagrams) in FIG. 7 (A). FIG. 7(C) is a diagram illustrating enlarged peaks shown in (b) of the two patterns (upper and lower diagrams) in FIG. 7(A).

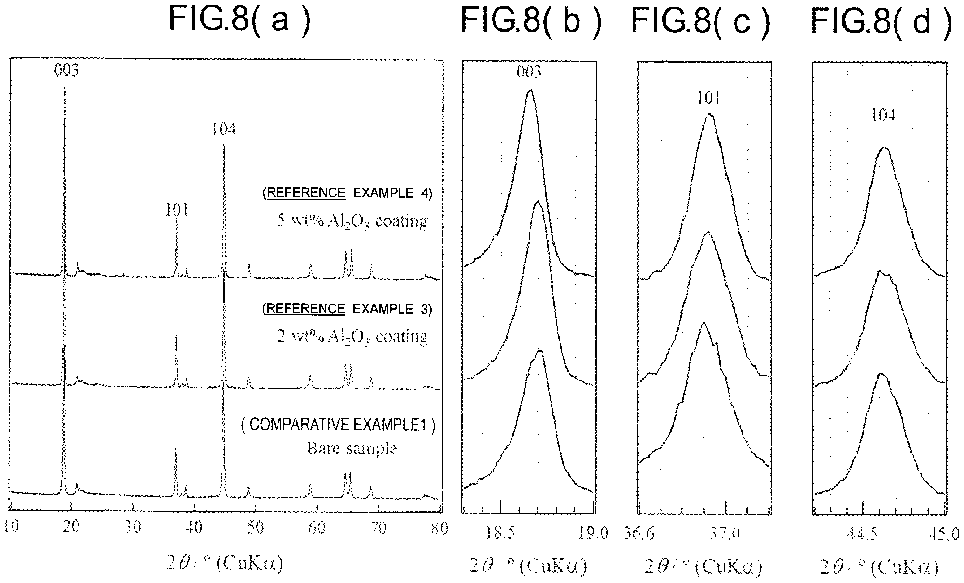

FIG. 8(a) is a chart illustrating an XRD (X-ray diffraction) pattern of the positive electrode active material in which a composition formula of the solid solution active material has been identified by elemental analysis. FIG. 8(b) is, a diagram illustrating enlarged layered rock salt structure peaks (003) of the three patterns (upper, middle, and lower diagrams) in FIG. 8(a) such that the peak shifts and shift widths thereof can be determined. FIG. 8(c) is a diagram illustrating enlarged layered rock salt structure peaks (101) of the three patterns (upper, middle, and lower diagrams) in FIG. 8(a) such that the peak shifts and shift widths thereof can be determined. FIG. 8(d) is a diagram illustrating enlarged layered rock salt structure peaks (104) of the three patterns (upper, middle, and lower diagrams) in FIG. 8(a) such that the peak shifts and shift widths thereof can be determined.

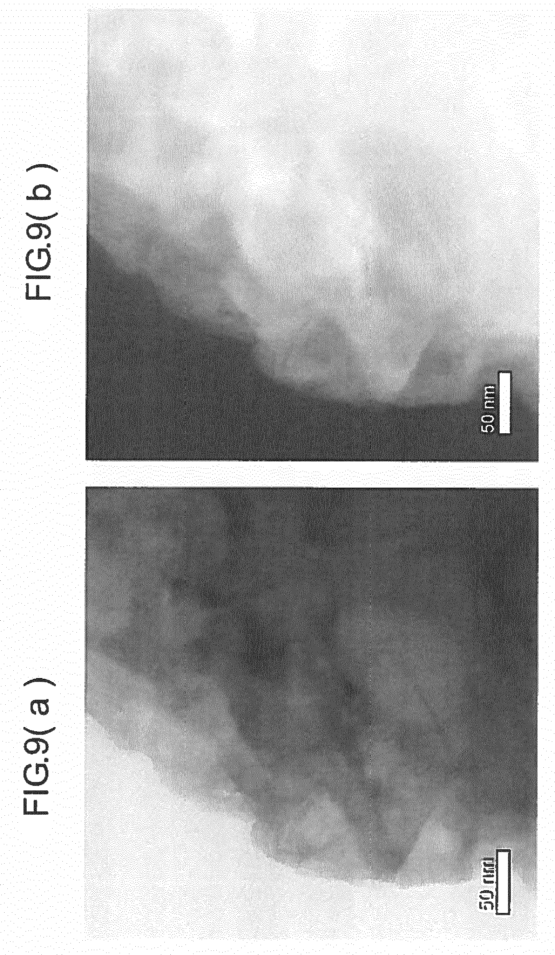

FIG. 9(a) is a diagram illustrating a BF (Bright-field)-STEM Image (bright field-scanning transmission electron microscope image) of the active material particles. FIG. 9(b) is a diagram illustrating a HAADF-STEM Image (high-angle scattering dark field-scanning transmission electron microscope image) of the active material particles in the same field as FIG. 9(a).

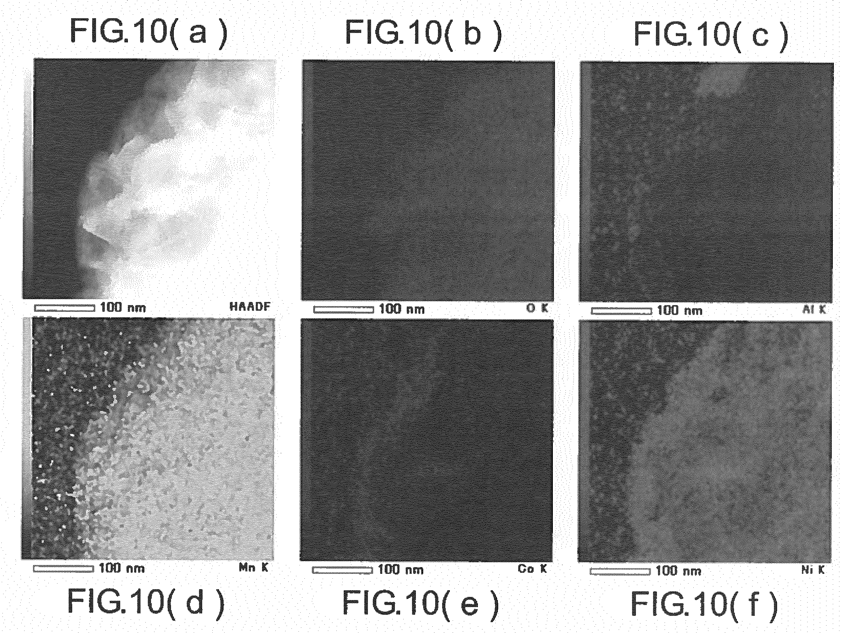

FIGS. 10(a) to 10(f) are diagrams illustrating quantitative mapping data by STEM-EDX (scanning transmission electron microscope-energy dispersive X-ray spectroscopy). FIG. 10 (a) illustrates the same HAADF-STEM image as FIG. 9(b). FIG. 10(b) illustrates mapping data of O (on the upper middle) measured in the same field as HAADF-STEM (FIG. 10(a) on the upper left). FIG. 10(c) illustrates mapping data of Al (on the upper right) measured in the same field as HAADF-STEM (FIG. 10(a) on the upper left). FIG. 10(d) illustrates mapping data of Mn (on the lower left) measured in the same field as HAADF-STEM (FIG. 10(a) on the upper left). FIG. 10(e) illustrates mapping data of Co (in the lower middle) measured in the same field as HAADF-STEM (FIG. 10(a) on the upper left). FIG. 10(f) illustrates mapping data of Ni (on the lower right) measured in the same field as HAADF-STEM (FIG. 10(a) on the upper left).

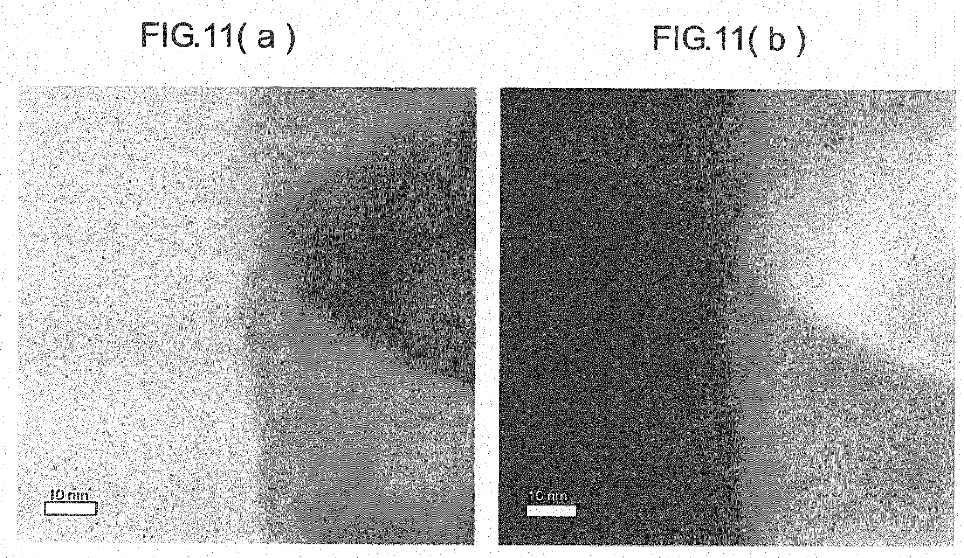

FIG. 11(a) is a diagram illustrating a BF (Bright field) -STEM Image (bright field-scanning transmission electron microscope image) of the active material particles. FIG. 11(b) is a diagram illustrating a HAADF-STEM Image (high-angle scattering dark field-scanning transmission electron microscope image) of the active material particles in the same field as FIG. 11(a).

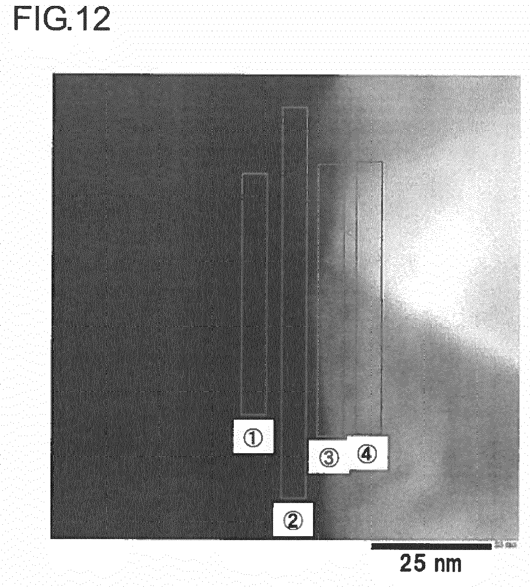

FIG. 12 illustrates the same HAADF-STEM image as FIG. 11(b). In the image, regions (four parts enclosed by rectangular frames) in which presence (invasion) of Al element is observed by elemental analysis are divided by the circled numbers 1 to 4.

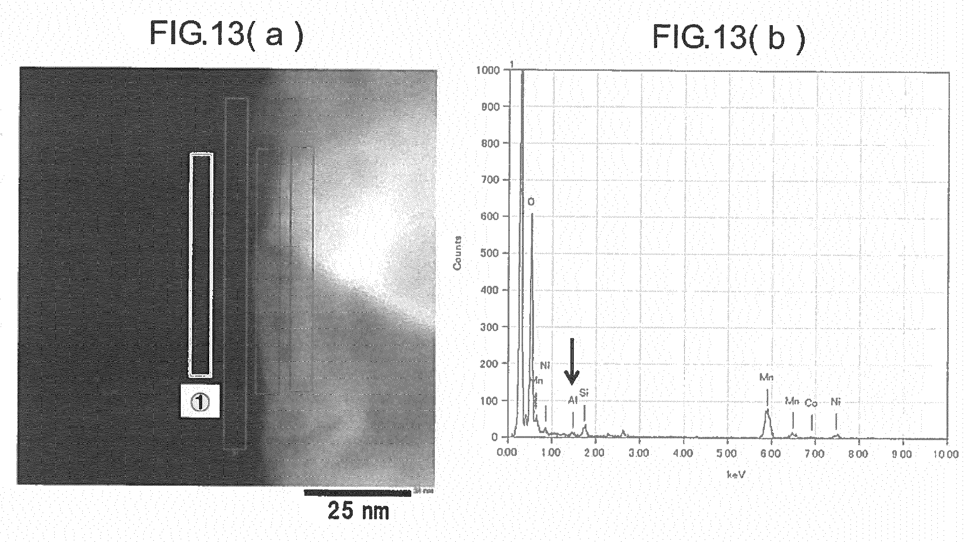

FIG. 13(a) illustrates the same HAADF-STEM image as FIG. 12. In the image, the rectangular frame of a part to be observed in elemental distribution (part of the circled number 1 in the image) is illustrated by a bold line. FIG. 13(b) is a diagram obtained by elemental analysis of the part to be observed in elemental distribution in FIG. 13(a).

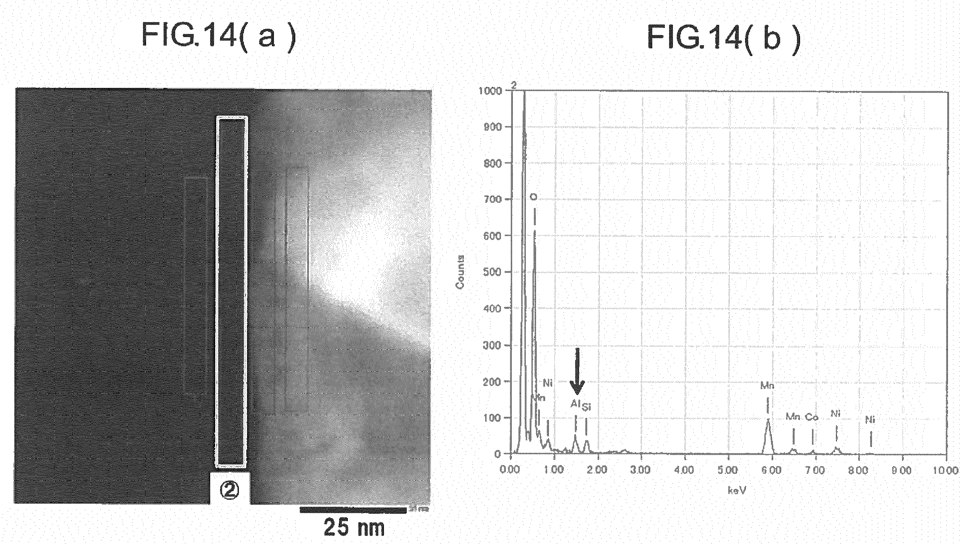

FIG. 14(a) illustrates the same HAADF-STEM image as FIG. 12. In the image, the rectangular frame of a part to be observed in elemental distribution (part of the circled number 2 in the image) is illustrated by a bold line. FIG. 14(b) is a diagram obtained by elemental analysis of the part to be observed in elemental distribution in FIG. 14(a).

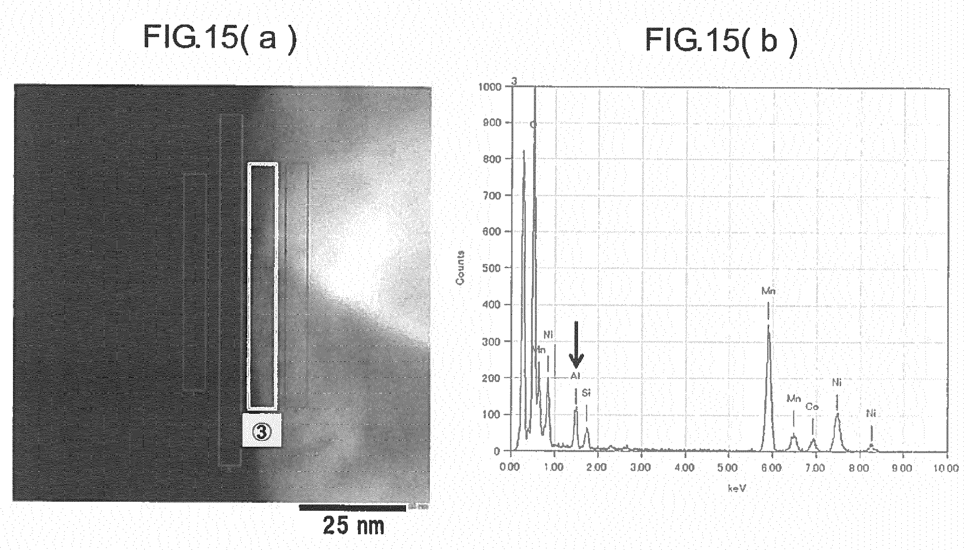

FIG. 15(a) illustrates the same HAADF-STEM image as FIG. 12. In the image, the rectangular frame of a part to be observed in elemental distribution (part of the circled number 3 in the image) is illustrated by a bold line. FIG. 15(b) is a diagram obtained by elemental analysis of the part to be observed in elemental distribution in FIG. 15(a).

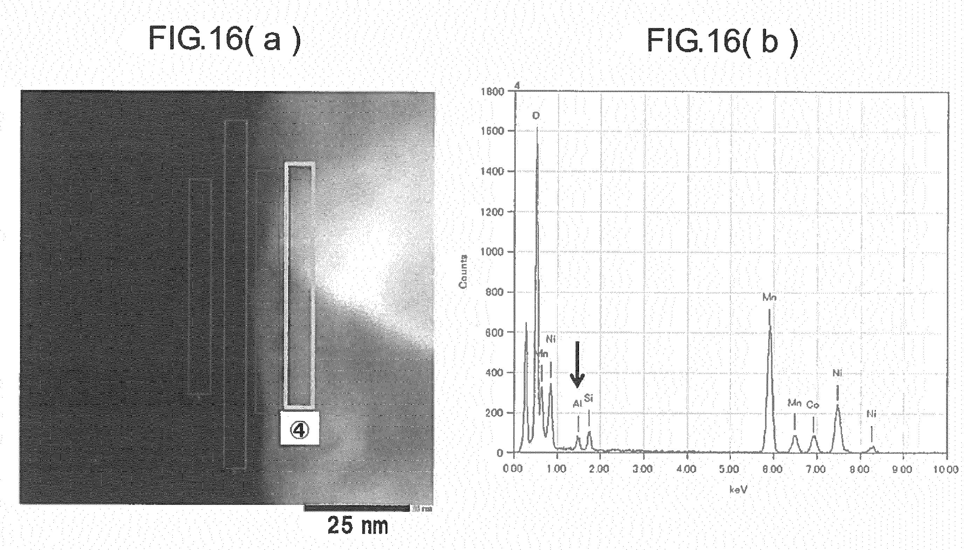

FIG. 16(a) illustrates the same HAADF-STEM image as FIG. 12. In the image, the rectangular frame of a.part to be observed in elemental distribution (part of the circled number 4 in the image) is illustrated by a bold line. FIG. 16(b) is a diagram obtained by elemental analysis of the part to be observed in elemental distribution in FIG. 16(a).

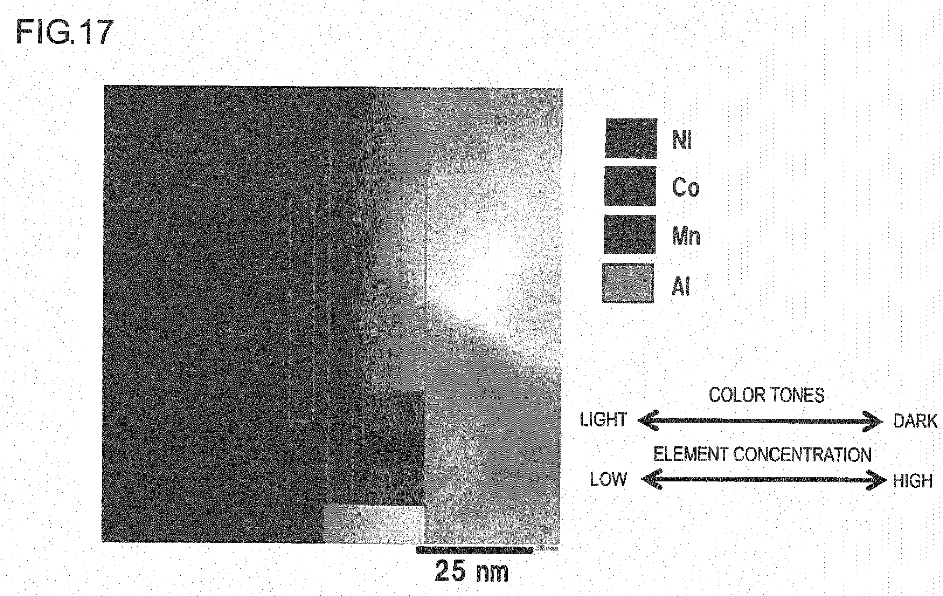

FIG. 17 is a diagram illustrating concentration distribution of Ni, Co, Mn, and Al with color tones based on the observation results of FIGS. 13 to 16 in the same HAADF-STEM image as FIG. 12. Description of Embodiments

An embodiment of the present invention is a positive electrode active material contained in a positive electrode active material layer on the surface of a current collector. The current collector and the positive electrode active material layer form a positive electrode. A non-aqueous electrolyte secondary battery contains a power generating element containing the positive electrode, a negative electrode, and an electrolyte layer. In the negative electrode, a negative electrode active material layer is formed on the surface of a current collector. For details, the positive electrode active material of the present embodiment contains a solid solution active material represented by the composition formula (1) below, an alumina cover layer on the surface of the solid solution active material, and a region in which Al element is present on the side of the surface of the solid solution active material in the interface between the solid solution active material and the alumina cover layer, wherein a content of the alumina is 1 to 5% by mass with respect to the total amount of the positive electrode active material.

Here, the composition formula (1) above is represented by Li_{1.5}[NiₐMn_{b}Co_{c}[Li]_{d}[X]ₑ]O_{z}. In the composition formula (1), X represents at least one selected from Ti, Zr and Nb, 0 < e ≤ 0.5, a + b + c + d + e = 1.5, 0.1 ≤ d ≤ 0.4, and 1.1 ≤ [a + b + c + e] ≤ 1.4, and z represents the number of oxygen atoms satisfying an atomic valence. By the above-described structure of the positive electrode active material of the present embodiment, a positive electrode containing the positive electrode active material, and a non-aqueous electrolyte secondary battery using the positive electrode, a most unstable surface layer of the solid solution active material particles is stabilized by the alumina cover layer and invasion of Al element. Therefore, in accordance with an activation of the solid solution active material by charge and discharge in a battery using the solid solution active material, it is possible to suppress elution of the transition metal out of the crystal structure without forming a spinel phase (without being fixed) when Mn in the transition metal layer moves into a Li layer and a phase transition into the spinel phase occurs partially. As a result, performance of the battery (rate characteristics and charge-discharge capacity) and durability (capacity retention rate) can be increased.

Hereinafter, the non-aqueous electrolyte secondary battery using the positive electrode active material of the present embodiment will be described with reference to the drawings.

### [Non-aqueous electrolyte secondary battery]

A non-aqueous electrolyte secondary battery according to the present embodiment is not particularly limited as long as the battery is a secondary battery using the positive electrode active material of the present embodiment. Typical examples thereof include a lithium ion secondary battery. That is, a typical example thereof is a non-aqueous electrolyte secondary battery including a positive electrode of the present embodiment, a negative electrode, and an electrolyte layer. The negative electrode contains a negative electrode active material capable of inserting and releasing lithium ions. The electrolyte layer is interposed between the positive electrode and the negative electrode. In the following description, the lithium ion secondary battery is exemplified.

FIG. 1 is a schematic cross sectional view schematically illustrating a whole structure of a parallel laminated lithium ion secondary battery (hereinafter, also simply referred to as a "parallel laminated type battery"), according to an embodiment of the present invention. As illustrated in FIG. 1, in a parallel laminated type battery 10a of the present embodiment, a substantially rectangular power generating element 17 in which a charge-discharge reaction proceeds actually is sealed in a laminate film 22 serving as a battery outer casing material. For details, a polymer-metal composite laminate film is used as a battery outer casing material, and the whole periphery thereof is joined by heat fusion. The power generating element 17 is thereby housed and sealed.

In the power generating element 17, a negative electrode, an electrolyte layer 13, and a positive electrode are laminated. In the negative electrode, negative electrode active material layers 12 are disposed on both sides of a negative electrode current collector 11 (only on one side for the bottom layer and the top layer of the power generating element). In the positive electrode, positive electrode active material layers 15 are disposed on both sides of a positive electrode current collector 14. Specifically, the negative electrode, the electrolyte layer 13, and the positive electrode are laminated in this order such that one negative electrode active material layer 12 faces a positive electrode active material layer 15 adjacent thereto through the electrolyte layer 13. As described later, the positive electrode active material layer uses a positive electrode active material having a specific composition and structure.

In this way, the negative electrode, the electrolyte layer 13, and the positive electrode adjacent to each other form one unit battery layer 16. Therefore, in the parallel laminated type battery 10 of the present embodiment, a plurality of unit battery layers 16 are laminated, and are thereby electrically connected in parallel. In an outer periphery of the unit battery layer 16, a sealing portion (insulating layer) (not illustrated) to insulate the positive electrode current collector 14 from the negative electrode current collector 11 adjacent thereto may be provided. The negative electrode active material layer 12 is disposed only on one surface of each of outermost layer negative electrode current collectors 11a positioned in outermost layers of the power generating element 17. By reversing the disposition of the negative electrode and the positive electrode in FIG. 1, outermost layer positive electrode current collectors may be positioned in outermost layers of the power generating element 17, and the positive electrode active material layer may be disposed only on one surface of each of the outermost layer positive electrode current collectors.

A negative electrode current collecting plate 18 and a positive electrode current collecting plate 19 conductive with the electrodes (negative electrode and positive electrode) are attached to the negative electrode current collector 11 and the positive electrode current collector 14, respectively. The negative electrode current collecting plate 18 and the positive electrode current collecting plate 19 are led to the outside of the laminate film 22 so as to be sandwiched between ends of the laminate film 22. The negative electrode current collecting plate 18 and the positive electrode current collecting plate 19 may be attached to the negative electrode current collector 11 and the positive electrode current collector 14 of the electrodes by ultrasonic welding, resistance welding, or the like, if necessary through a negative electrode terminal lead 20 and a positive electrode terminal lead 21, respectively (FIG.1 illustrates this form). However, the negative electrode current collector 11 may be extended to be used as the negative electrode current collecting plate 18, and may be led out from the laminate film 22. Similarly, the positive electrode current collector 14 may be extended to be used as the positive electrode current collecting plate 19, and may be led out from the battery outer casing material 22.

FIG. 2 is a schematic cross sectional view schematically illustrating a whole structure of a series laminated bipolar lithium ion secondary battery (hereinafter, also simply referred to as a "series laminated type battery"), according to an embodiment of the present invention. In a series laminated type battery 10b illustrated in FIG. 2, a substantially rectangular power generating element 17 in which a charge-discharge reaction proceeds actually is sealed in a laminate film 22 serving as a battery outer casing material.

As illustrated in FIG. 2, a power generating element 17 of the series laminated type battery 10b contains a plurality of bipolar electrodes 24. In the bipolar electrode 24, an electrically bonded positive electrode active material layer 15 is formed on one surface of a current collector 23, and an electrically bonded negative electrode active material layer 12 is formed on the other surface of a current collector 23. As described later, the positive electrode active material layer uses a positive electrode active material having a specific composition and structure. The bipolar electrodes 24 are laminated through electrolyte layers 13 to form the power generating element 17. The electrolyte layer 13 holds an electrolyte in the center in a plane direction of a separator as a substrate. In this case, the bipolar electrode 24 and the electrolyte layer 13 are laminated alternatively such that the positive electrode active material layer 15 of one bipolar electrode 24 faces the negative electrode active material layer 12 of the other bipolar electrode 24 adjacent to the one bipolar electrode 24 through the electrolyte layer 13. That is, the electrolyte layer 13 is sandwiched between the positive electrode active material layer 15 of one bipolar electrode 24 and the negative electrode active material layer 12 of the other bipolar electrode 24 adjacent to the one bipolar electrode 24.

The positive electrode active material layer 15, the electrolyte layer 13, and the negative electrode active material layer 12 adjacent to each other form one unit battery layer 16. Therefore, in the series laminated type battery 10b of the present embodiment, a plurality of unit battery layers 16 are laminated, and are thereby electrically connected in series. In order to prevent liquid junction due to leakage of an electrolyte solution from the electrolyte layer 13, a sealing portion (insulating part) 25 is disposed in an outer periphery of the unit battery layer 16. The positive electrode active material layer 15 is formed only on one surface of an outermost layer current collector 23a on a side of the positive electrode, positioned in an outermost layer of the power generating element 17. The negative electrode active material layer 12 is formed only on one surface of an outermost layer current collector 23b on a side of the negative electrode, positioned in an outermost layer of the power generating element 17. However, the positive electrode active material layers 15 may be formed on both surfaces of the outermost layer current collector 23a on the side of the positive electrode. Similarly, the negative electrode active material layers 12 may be formed on both surfaces of the outermost layer current collector 23b on the side of the negative electrode.

In the series laminated type battery 10b illustrated in FIG. 2, the positive electrode current collecting plate 19 is disposed so as to be adjacent to the outermost layer current collector 23a on the side of the positive electrode. The positive electrode current collecting plate 19 is extended and led out from the laminate film 22 serving as a battery outer casing material. On the other hand, the negative electrode current collecting plate 18 is disposed so as to be adjacent to the outermost layer current collector 23b on the side of the negative electrode. Similarly, the negative electrode current collecting plate 18 is extended and led out from the laminate film 22 serving as a battery outer casing.

In the series laminated type battery 10b illustrated in FIG. 2, the insulating part 25 is usually provided around each unit battery layer 16. The insulating part 25 is provided in order to prevent contact between the current collectors 23 adjacent to each other in the battery, or to prevent short circuit caused by slightly irregular ends of the unit battery layer 16 in the power generating element 17. By disposing the insulating part 25, long-term reliability and safety are ensured, and the series laminated type battery 10b having a high quality can be provided.

The number of laminating the unit battery layer 16 is adjusted according to a desired voltage. In the series laminated type battery 10b, the number of laminating the unit battery layer 16 may be small as long as a sufficient output can be ensured even when the battery is extremely thin. Even in the series laminated type battery 10b, it is necessary to prevent shock from the outside during use and environmental deterioration. Therefore, the power generating element 17 is preferably sealed in the laminate film 22 serving as a battery outer casing material under reduced pressure. The positive electrode current collecting plate 19 and the negative electrode current collecting plate 18 are preferably taken out of the laminate film 22.

The positive electrode active material layer 15 and the positive electrode in FIGS. 1 and 2 include a positive electrode active material having a specific composition and structure described later. This makes it possible to increase the output and the capacity of the non-aqueous electrolyte secondary battery for application to the electric vehicle. In addition, the capacity of the non-aqueous electrolyte secondary battery is not easily lowered even after repeated charge and discharge. Hereinafter, components of the non-aqueous electrolyte secondary battery will be described in detail.

### [Positive electrode]

The positive electrode generates electric energy through transfer of lithium ions together with the negative electrode. The positive electrode essentially contains a current collector and a positive electrode active material layer. The positive electrode active material layer is formed on a surface of the current collector.

### (Current collector)

The current collector is formed of a conductive material. The positive electrode active material layer(s) is/are disposed on one surface or both surfaces thereof. A material to form the current collector is not particularly limited. For example, a metal or a conductive resin obtained by adding a conductive filler to a conductive polymer material or a non-conductive polymer material can be used.

Examples of the metal include aluminum, nickel, iron, stainless steel (SUS), titanium, and copper. In addition to these materials, a clad material of nickel and aluminum, a clad material of copper and aluminum, a plating material of a combination of these metals, or the like can be preferably used. A foil obtained by covering a surface of a metal with aluminum may be used. Among these materials, aluminum, stainless steel, or copper is preferably used from a viewpoint of conductivity or a battery operating potential.

Examples of the conductive polymer material include polyaniline, polypyrrole, polythiophene, polyacetylene, polyparaphenylene, polyphenylene vinylene, polyacrylonitrile, and polyoxadiazole. Such a conductive polymer material is advantageous in terms of simplification of a manufacturing process or weight reduction of the current collector because the conductive polymer material has sufficient conductivity without adding a conductive filler.

Examples of the non-conductive polymer material include polyethylene (PE; high density polyethylene (HDPE), low density polyethylene (LDPE)), polypropylene (PP), polyethylene terephthalate (PET), polyether nitrile (PEN), polyimide (PI), polyamideimide (PAI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinyl chloride (PVC), polyvinylidene fluoride (PVdF), and polystyrene (PS). Such a non-conductive polymer material can have excellent potential resistance or solvent resistance.

A conductive filler may be added if necessary to the conductive polymer material or the non-conductive polymer material. In particular, when a resin serving as a base material of the current collector is made only of the non-conductive polymer, a conductive filler is essentially required in order to impart conductivity to the resin. The conductive filler can be used without particular limitation as long as the conductive filler has conductivity. Examples of a material having excellent conductivity, potential resistance, or lithium ion blocking include a metal and conductive carbon. The metal is not particularly limited, but preferably contains at least one metal selected from the group consisting of Ni, Ti, Al, Cu, Pt, Fe, Cr, Sn, Zn, In, Sb, and K, or an alloy or a metal oxide containing these metals. The conductive carbon is not particularly limited, but preferably contains at least one selected from the group consisting of acetylene black, vulcan, black pearl, carbon nanofiber, Ketjen black, carbon nanotube, carbon nanohorn, carbon nanoballoon, and fullerene. The addition amount of the conductive filler is not particularly limited as long as sufficient conductivity can be imparted to the current collector. In general, the addition amount is about 5 to 35% by mass.

The size of the current collector is determined according to use of the battery. For example, a current collector having a large area is used for a large battery requiring a high energy density. The thickness of the current collector is not particularly limited, but is usually about 1 to 100 µm.

### (Positive electrode active material layer)

The positive electrode active material layer essentially contains a positive electrode active material having a specific composition and structure. The positive electrode active material layer may further contain another positive electrode active material and an additive such as a conductive aid or a binder.

### (Positive electrode active material)

The positive electrode active material has a composition which can release lithium ions during charge and can absorb lithium ions during discharge. The positive electrode active material of the present embodiment contains a solid solution active material represented by the composition formula (1) below.

### [Numerical formula 2]

**Li_{1.5}[NiₐMn_{b}Co_{c}[Li]_{d}[X]ₑ]O_{z}** **(1)**

Here, X represents at least one selected from Ti, Zr and Nb, and a + b + c + d + e = 1.5, 1.1 ≤ [a + b + c + e] ≤ 1.4, 0.1 ≤ d ≤ 0.4, and 0 < e ≤ 0.5. z represents the number of oxygen atoms satisfying an atomic valence. An alumina cover layer is present on the surface of particles of the solid solution active material. The side of the surface of the solid solution active material in the interface between the solid solution active material particles and the alumina cover layer has a region in which Al element is present (invades).

In the related art, it is necessary to increase an amount of electricity stored per unit mass of an active material used for the positive electrode or the negative electrode in order to obtain a secondary battery having a high energy density. As the positive electrode active material, a solid solution type positive electrode material (solid solution active material) is studied. As the solid solution type positive electrode material, a layered lithium-containing transition metal oxide made of a solid solution of an electrochemically inactive layered Li₂MnO₃ and an electrochemically active layered LiMO₂ (here, [M] is a transition metal such as Co, Ni, Mn, or Fe) is studied. In a battery using the solid solution active material, it is necessary to charge the battery to a plateau potential or more (for example, 4.4 to 4.8 V) in order to activate the solid solution type positive electrode material (Li₂MnO₃ composition) (in order to change a part of the crystal structure to a spinel phase: perform a phase transition). It is considered that the phase transition into the spinel phase (gradual change of the LiMnO₂ system generated into the spinel phase by moving of Mn) is caused by oxidation (for example, Mn³⁺ → Mn⁴⁺) (irreversible phase transition caused by charge) of a transition metal element (Mn or the like) contained in the transition metal layer in the crystal structure of the positive electrode active material. However, a part of the transition metal element involved in the phase transition does not form the spinel phase (is not fixed), and is eluted outside the crystal structure. In addition, in accordance with the oxidation of the transition metal, a part of lattice oxygen is released, and oxygen gas is generated. Also by the generation of an oxygen defect in the crystal structure, the transition metal element is eluted. Furthermore, also by repetition of a charge-discharge cycle around the plateau potential (4.3 to 4.5 V), or by exposure to a potential around the plateau potential for a long time, elution occurs in accordance with the oxidation of the transition metal (Mn or the like) contained in the solid solution active material. Therefore, it is required to stabilize a rock salt layered structure and to suppress the elution of the transition metal such as Mn while the Li₂MnO₃ composition is electrochemically activated.

In the related art, it is known that, in the positive electrode using the solid solution active material, the charge-discharge capacity and the rate characteristics are reduced because an overvoltage (resistance) of the layered Li₂MnO₃ at the end of charge or at the end of discharge is high with respect to the layered LiMO₂ (for example, LiNi_{1/2}Mn_{1/2}O₂ or the like). In addition, Ni or Mn is easily eluted disadvantageously because a use upper limit potential is high (4.3 V or more).

In the related art, when a battery is made by using a positive electrode using a solid solution active material, battery performance (charge-discharge characteristics, C-rate characteristics) and life time characteristics (capacity retention rate) are disadvantageously reduced due to deterioration of a positive electrode active material and a negative electrode active material, deterioration of an electrolyte solution (liquid shortage), generation of Li-byproduct, or the like: An impedance (DCR) is disadvantageously increased because a gap is generated between the electrodes due to accumulation of sediment or generation of gas. In addition, the charge-discharge capacity, the C-rate characteristics, and the capacity retention rate are disadvantageously further reduced due to increase of the overvoltage. In the solid solution active material in the related art, it is necessary to charge the battery to a plateau potential or more (for example, 4.4 to 4.8 V) for activation (accompanied by change of a part of the crystal structure to a spinel phase structure (phase transition)). It is considered that the partial phase transition into the spinel phase (LiMnO₂ system) is caused by a process of oxidation (for example, Mn³⁺ → Mn⁴⁺; irreversible phase transition caused by charge) of a transition metal element (Mn, Ni, or the like) contained in the transition metal layer and a process of release of lattice oxygen in accordance with the above process in the crystal structure of the positive electrode active material. Therefore, when a charge-discharge cycle is repeated around the plateau potential (4.4 to 4.5V) in order to obtain a high capacity, the partial phase transition and the release of oxygen proceed gradually. As a result, an average voltage, the capacity, and the rate characteristics are reduced in accordance with the change of the crystal structure (phase transition and release of oxygen). A part of the transition metal element involved in the phase transition does not form the spinel phase (is not fixed), and is eluted outside the crystal structure. In accordance with the oxidation of the transition metal, a part of lattice oxygen is released, and oxygen gas is generated. Also by the generation of an oxygen defect in the crystal structure, the transition metal element is eluted. Furthermore, not only by repetition of the charge-discharge cycle around the plateau potential, but also by exposure to a full charge state (potential around the plateau potential) for a long time, the elution of the transition metal (Mn, Ni, or the like) contained in the solid solution active material occurs in accordance with the oxidation of the transition metal. As a result, the elution of the transition metal in accordance with the change of the crystal structure on the surface layer lowers durability.

Therefore, in the present embodiment, as the positive electrode active material, a solid solution active material including an alumina layer coated (covered) with Al₂O₃ on the surface thereof is used. By using the positive electrode active material having such a structure, it is possible to suppress a change in the crystal structure caused by repetition of the charge-discharge cycle (for example, 4.3 to 4.5 V) after an activation treatment at a high potential (for example, 4.4 to 4.8 V) of the plateau potential or more. By covering the surface with the Al₂O₃ layer, an amount of the transition metal (Mn) eluted outside the crystal structure without forming the spinel phase (without being fixed) is reduced when Mn in the transition metal layer moves to the Li layer and a part thereof performs a phase transition into the spinel phase in accordance with the activation. Performance and durability can be improved.

In addition, in the present embodiment, a covalent bond with oxygen is strengthened by invasion (by obtaining a region of presence) of a part of Al element in the Al₂O₃ coat (cover) layer into the surface layer of the active material particles. Therefore, release of lattice oxygen in accordance with oxidation of other transition metals occurs less. Therefore, a generation amount of oxygen gas is reduced, and a generation amount of an oxygen defect in the crystal structure is also reduced. Furthermore, even by repetition of the charge-discharge cycle around the plateau potential (4.3 to 4.5 V), or by exposure to a potential around the plateau potential for a long time, the crystal structure is stabilized and release of oxygen occurs less. Therefore, the elution of the transition metal (Mn or the like) contained in the solid solution active material, caused in accordance with the oxidation of the transition metal, is suppressed. Therefore, performance and durability can be improved. The most unstable surface layer (to 20 nm or 30 nm; FIGS. 16(a) and 16(b) and Example 5) of the active material particles is stabilized by the Al₂O₃ coat and invasion of Al element. Therefore, performance and durability can be improved more than the Al₂O₃ coat technique as in Patent Literature 3, in which invasion (presence) of Al element in the surface layer of the active material particles is difficult. Al element in the Al₂O₃ coat layer does not invade the particles (bulk) or replace the particles. Therefore, insertion and release of Li in accordance with oxidation-reduction of Ni or Mn in the bulk are not hindered. Therefore, it is possible to obtain a high capacity.

The above will be described with reference to the drawings. FIG. 3 is a diagram comparing discharge curves at the time of output characteristic test of electrodes (positive electrodes). In FIG. 3, output characteristic tests of batteries using two kinds of electrodes (positive electrodes) were performed under the same condition. A battery using a positive electrode using a solid solution active material not covered with alumina as a positive electrode active material (bare sample; Comparative Example 1), and a battery using a positive electrode using a positive electrode active material (5 wt% Al₂O₃ coating; Reference Example 4) obtained by providing a 5% by mass alumina layer on the surface of a solid solution active material, were used. For each of the solid solution active materials, a compound represented by the composition formula of Reference Example 1:
Li_{1.5}[Ni_{0.40}Mn_{0.60}Co_{0.40}[Li]_{0.1}]O_{z} was used. In the batteries using the positive electrodes made by using these positive electrode active materials, tests were performed by changing discharge rate characteristics. For the battery using the positive electrode using the solid solution active material not covered with alumina as the positive electrode active material, a laminate type battery of Comparative Example 1 was used. For the battery using the positive electrode using the positive electrode active material obtained by providing the 5% by mass alumina layer on the surface of the solid solution active material, a laminate type battery of Reference Example 4 was used. In the discharge test condition of FIG. 3, an initial charge treatment, a gas removing treatment 1, an activation treatment, and a gas removing treatment 2 were performed as an evaluation of battery characteristics of Reference Example 1. Thereafter, the performance evaluation was performed in a similar manner to Reference Example 1 except that a 0.1 C rate was changed to a 0.05 C, 0.1 C, 0.2 C, 0.5 C, 1.0 C, or 2.0 C rate illustrated in FIG. 3 to obtain discharge curves.

FIG. 4 is a diagram comparing charge-discharge curves of the electrodes (positive electrodes) at high temperature (50°C). In FIG. 4, the charge-discharge tests of batteries using four kinds of electrodes (positive electrodes) were performed under the same condition. A battery using a positive electrode using a solid solution active material not covered with alumina as a positive electrode active material (bare sample), and a battery using a positive electrode using a positive electrode active material (2, 5, or 10 wt% Al₂O₃ coating) obtained by providing a 2, 5, or 10% by mass alumina layer on the surface of a solid solution active material, were used. For each of the solid solution active materials, a compound represented by the composition formula of Reference Example 1:
Li_{1.5}[Ni_{0.40}Mn_{0.60}Co_{0.40}[Li]₀₁]O_{z} was used. For the battery using the positive electrode using the solid solution active material not covered with alumina as the positive electrode active material, a laminate type battery of Comparative Example 1 was used. For the battery using the positive electrode using the positive electrode active material obtained by providing the 2% by mass alumina layer on the surface of the solid solution active material, a laminate type battery of Reference Example 3 was used. For the battery using the positive electrode using the positive electrode active material obtained by providing the 5% by mass alumina layer on the surface of the solid solution active material, a laminate type battery of Reference Example 4 was used. For the battery using the positive electrode using the positive electrode active material obtained by providing the 10% by mass alumina layer on the surface of the solid solution active material, a laminate type battery of Reference Example 5 was used. In the charge-discharge test condition of FIG. 4, the initial charge treatment, the gas removing treatment 1, the activation treatment, and the gas removing treatment 2 were performed as an evaluation of battery characteristics of Example 1, and then the performance evaluation was performed in a similar manner to Reference Example 1 except that the temperature was changed from room temperature to high temperature (50°C).

FIG. 5 is a diagram comparing cycle characteristics of the electrodes (positive electrodes) at high temperature (50°C). In FIG. 5, the charge-discharge cycle tests of batteries using four kinds of electrodes (positive electrodes) were performed under the same condition. A battery using a positive electrode using a solid solution active material not covered with alumina as a positive electrode active material (bare sample), and a battery using a positive electrode using a positive electrode active material (2, 5, or 10 wt% Al₂O₃ coating) obtained by providing a 2, 5, or 10% by mass alumina layer on the surface of a solid solution active material, were used. For each of the solid solution active materials, a compound represented by the composition formula of Reference Example 1: Li_{1.5}[Ni_{0.40}Mn_{0.60}Co_{0.40}[Li]_{0.1}]O_{z} was used. For the battery using the positive electrode using the solid solution active material not covered with alumina as the positive electrode active material, a laminate type battery of Comparative Example 1 was used. For the battery using the positive electrode using the positive electrode active material obtained by providing the 2% by mass alumina layer on the surface of the solid solution active material, a laminate type battery of Reference Example 3 was used. For the battery using the positive electrode using the positive electrode active material obtained by providing the 5% by mass alumina layer on the surface of the solid solution active material, a laminate type battery.of Reference Example 4 was used. For the battery using the positive electrode using the positive electrode active material obtained by providing the 10% by mass alumina layer on the surface of the solid solution active material, a laminate type battery of Reference Example 5 was used. In the cycle characteristic test condition of FIG. 5, the initial charge treatment, the gas removing treatment 1, the activation treatment, the gas removing treatment 2, and the performance evaluation were performed as an evaluation of battery characteristics of Reference Example 1, and then the life time evaluation was performed in a similar manner to Reference Example 1 to obtain the cycle characteristics.

In the present reference embodiment, by Al₂O₃ coating (that is, providing an alumina layer), it is possible to suppress elution of the transition metal (Mn⁴⁺, Ni²⁺) from the crystal structure on the surface layer and release of oxygen. Furthermore, by forming an (Al-Li) compound at the interface between the Al₂O₃ layer and the solid solution active material (providing a region in which Al element is present on a side of the active material), a Li diffusion property (Li conductivity) can be improved. As a result, not only interface resistance can be reduced, but also Li diffusion resistance in the particles can be reduced. By the reduction in the resistance and the improvement in the Li diffusion property, as illustrated in FIGS. 3, 4, and 5, the battery performance (capacity, rate characteristics, and cycle characteristics) can be improved. By suppressing the elution of the transition metal, it is possible to suppress a reaction between the surface layer of the solid solution active material (particles) and the electrolyte solution, and to suppress reduction in the average voltage after the cycles.

In the reference embodiment, in the X-ray diffraction of the positive electrode active material, a shift is preferably present in each of (003), (101), and (104) which are layered rock salt structure peaks. For details, as for the peak shifts, (003) is preferably shifted to a lower angle side, (101) is preferably shifted to a higher angle side, and (104) is preferably shifted to a higher angle side, with respect to a layered rock salt structure peak in the X-ray diffraction only of the solid solution active material. A width of each peak shift is preferably (003): -0.08° ≤ Δθ < 0.00°, (101) : 0.00° < Δθ ≤ 0.05°, (104) : 0.00° < Δθ ≤ 0.05°, with respect to the layered rock salt structure peak in the X-ray diffraction only of the solid solution active material.

In the related art, when the solid solution active material is used as the positive electrode active material, LiMO₂ indicates a layered rock salt structure (rock salt type layered structure) as an XRD (X-ray diffraction) peak. Li₂MnO₃ indicates a superlattice diffraction peak at 20-23°, but the other peaks indicate the same layered rock salt structure (rock salt type layered structure) as LiMO₂. Therefore, the solid solution active material of Li₂MnO₃ and LiMO₂ indicates a layered rock salt structure (rock salt type layered structure) having a superlattice diffraction peak at 20-23°. In the solid solution active material, when a solid solution state of the transition metal such as Mn is insufficient, LiMnO₂ is present as impurities from an initial stage, or a part of the crystal structure changes after an activation treatment at a high potential of the plateau potential or more (for example, 4.4 to 4.8 V). Furthermore, by repetition of the charge-discharge cycle (for example, 4.3 to 4.5 V), a part of the crystal structure changes, and LiMnO₂ which is present as impurities or has been generated in accordance with the change in a part of the crystal structure gradually changes to the spinel phase after the cycles. An XRD diffraction peak characteristic of the spinel phase comes to appear. As described above, when the crystal structure changes after the charge-discharge cycles, the solid solution active material is deteriorated, that is, a potential plateau region characteristic of lithium manganese spinel comes to appear around 4V and 3V. As a result, the capacity and the average voltage are reduced. With respect to the problems, in the solid solution active material of the present reference embodiment, in which an Al₂O₃ layer is disposed, shifts of layered rock salt structure peaks ((003), (101), and (104)) are observed by providing a region in which Al element is present on a side of the active material. When a coat amount of Al₂O₃ is 0.5% by mass or less, the XRD peak shift
is not observed due to a small amount of invasion of Al element. However, the effect brought by providing the region in which Al element is present on the side of the active material is obtained sufficiently (refer to Reference Example 1 or the like). When the coat amount of Al₂O₃ is large, the shift becomes clear (can be observed). Therefore, the clear shift can be used as an evidence of invasion (presence) of Al element on the side of the active material. Specifically, as described above, (003) is shifted to a lower angle side in a range of -0.08° ≤ Δθ < 0.00°, (101) is shifted to a higher angle side in a range of 0.00° < Δθ ≤ 0.05°, and (104) is shifted to a higher angle side in a range of 0.00° ≤ Δθ ≤ 0.05°. In the solid solution active material the surface of which is coated (covered) with Al₂O₃ (inorganic substance such as Al₂O₃), as described above, by having a shift in the layered rock salt structure peak, it is possible to suppress the change in the crystal structure caused by repetition of the charge-discharge cycle (for example, 4.3 to 4.5 V) after an activation treatment at a high potential (for example, 4.4 to 4.8 V) of the plateau potential or more. By covering the surface with the Al₂O₃ layer, an amount of the transition metal (Mn) eluted outside the crystal structure without forming the spinel phase (without being fixed) is reduced when Mn in the transition metal layer moves to the Li layer and a part thereof performs a phase transition into the spinel phase in accordance with the activation. Performance and durability can be improved. In addition, a covalent bond with oxygen is strengthened by having shifts in the layered rock salt structure peaks (003), (101), and (104) in the X-ray diffraction of the positive electrode active material (by invasion of a part of Al element in the Al₂O₃ coat (cover) layer into the surface layer of the active material particles). Therefore, release of lattice oxygen in accordance with oxidation of other transition metals occurs less. Therefore, a generation amount of oxygen gas is reduced, and a generation amount of an oxygen defect in the crystal structure is also reduced. Furthermore, by having the peak shifts within the above-described range in (003), (101), and (104), most unstable surface layer (to 20 nm) of the active material particles is stabilized by the Al₂O₃ coat and invasion (presence) of Al element. Therefore, performance and durability can be improved more than the Al₂O₃ coat technique in the related art, in which invasion (presence) of Al element in the surface layer of the active material particles is difficult. Furthermore, by having the peak shifts within the above-described range in (003), (101), and (104), Al element in the Al₂O₃ coat layer does not invade the particles (bulk) or replace the particles. Therefore, insertion and release of Li in accordance with oxidation-reduction of Ni or Mn in the bulk are not hindered. Therefore, it is possible to obtain a high capacity.

In the present reference embodiment, in order to confirm that the side of the surface of the solid solution active material in the interface between the solid solution active material particles and the alumina layer has a region in which Al element is present, presence of Al element on the surface layer of the active material particles can be confirmed qualitatively using a high-resolution measuring device. Examples of the analysis device (analysis method) include XPS (X-ray photoelectron spectroscopy), TEM-EDX (transmission electron microscope-energy dispersive X-ray spectroscopy), STEM-EDX/EELS (scanning transmission electron microscope-energy dispersive X-ray spectroscopy/electron energy loss spectroscope), and HAADF-STEM (high-angle scattering dark field-scanning transmission electron microscope image). Analysis examples of the presence of Al element on the surface layer of the active material particles using the
following analysis devices will be described below. However, the present reference embodiment is only required to be able to confirm the presence of Al element on the surface layer of the active material particles.

### (1) Analysis using an electron micrograph (scanning electron microscope (SEM), transmission electron microscope (TEM), and XPS (X-ray photoelectron spectroscopy))

FIG. 6 (a) is a diagram illustrating a vicinity of an interface between an Al₂O₃ layer and a solid solution active material (particles), forming the positive electrode active material particles of the present reference embodiment, observed using an electron microscope (SEM). FIG. 6 (b) is a diagram illustrating the interface between the Al₂O₃ layer and the solid solution active material (particles), forming the positive electrode active material particles of the present reference embodiment, observed using an XPS. In FIG. 6(a), a sample (2 wt% Al₂O₃ coated sample) obtained by providing a 2% by mass alumina layer on the surface of the solid solution active material, which was a positive electrode active material made in Reference Example 3, was used. In FIG. 6(b), a sample (bare sample) using the solid solution active material not covered with alumina, made in Comparative Example 1, as the positive electrode active material, was used. In addition, a positive electrode active material sample (2 wt% Al₂O₃ coated sample) obtained by providing a 2% by mass alumina layer on the surface of the solid solution active material, made in Reference Example 3, was used. Among these samples, in the positive electrode active material sample obtained by providing a 2% by mass alumina layer on the surface of, the solid solution active material, made in Reference Example 3, as illustrated in FIG. 6(a), argon etching was performed from the surface of the alumina layer (thickness 10 nm; refer to Reference Example 3 in Table 1) to the depth of 15 to 20 nm in the depth direction. It is thereby possible to obtain elemental distribution on the surface layer (depth direction; 5 to 10 nm) on the side of the active material of the interface between the Al₂O₃ layer and the solid solution active material (particles). For each of the solid solution active materials, a compound represented by the composition formula of Reference Example 1: Li_{1.5}[Ni_{0.40}Mn_{0.60}Co_{0.40}[Li]_{0.1}]O_{z} was used.

As illustrated in FIG. 6(a), the Al₂O₃ layer formed on the surface of the solid solution active material particles (a dense part on the left in the diagram, having a dark color) can be confirmed in a region sandwiched between the two lines. The part of the Al₂O₃ layer is formed by bonding of Al₂O₃ particles and is layered. Therefore, the part of the Al₂O₃ layer can be visually recognized as a granular part having relatively dark and light parts. In FIG. 6(b), in the spectrum of the X-ray photoelectron spectroscopy of the solid solution active material sample (bare sample) not covered with alumina, a peak of the photoelectron was not observed in a range of photoelectron energy (horizontal axis) 1550 to 1570 eV, and Al element was not observed. On the other hand, in the sample (2 wt% Al₂O₃ coated sample) obtained by providing a 2% by mass alumina layer on the surface of the solid solution active material, a strong peak of Al (1s) was able to be observed in the vicinity of 1562 eV as the elemental distribution on the surface layer (depth direction: 5 to 10 nm) on the side of the active material of the interface between the Al₂O₃ layer and the solid solution active material (particles). This makes it possible to confirm presence of Al element on the surface layer (depth direction: 5 to 10 nm) on the side of the active material of the interface between the Al₂O₃ layer and the solid solution active material (particles).

### (2) Al elemental analysis and analysis using X-ray diffraction (peak shift)

It is possible to perform elemental analysis of the solid solution active material or the positive electrode active material using an existing elemental analysis device. FIG. 7(A) is a chart illustrating an XRD (X-ray diffraction) pattern of the positive electrode active material in which a composition formula of the solid solution active material has been identified by elemental analysis. In FIG. 7(A), a chart illustrating an XRD (X-ray diffraction) pattern of a sample (bare sample) using a solid solution active material not covered with alumina as a positive electrode active material, is illustrated in the lower diagram. A chart illustrating an XRD (X-ray diffraction) pattern of a positive electrode active material sample (2 wt% Al₂O₃ coated sample) obtained by providing a 2% by mass alumina layer on the surface of the same solid solution active material (particles) as in the lower diagram, is illustrated in the upper diagram. For each of the solid solution active materials, a compound represented by the composition formula of Reference Example 1: Li_{1.5}[Ni_{0.40}Mn_{0.60}Co_{0.40}[Li]_{0.1}]O_{z} was used. For the sample (bare sample) using the solid solution active material not covered with alumina as the positive electrode active material, the positive electrode active material made in Comparative Example 1 was used. For the positive electrode active material sample obtained by providing a 2% by mass alumina layer on the surface of the solid solution active material (particles), the positive electrode active material made in Reference Example 3 was used. FIG. 7(B) is a diagram illustrating enlarged peaks shown in (a) of the two patterns (upper and lower diagrams) in FIG. 7(A). FIG. 7(C) is a diagram illustrating enlarged peaks shown in (b) of the two patterns (upper and lower diagrams) in FIG. 7(A). The XRD (X-ray diffraction) illustrated in FIGS. 7(A) to 7(C) was measured by radiation light X-ray diffraction of SPring-8, BL2B2, and having λ=0.6 Å.

As illustrated in FIGS. 7(B) and 7(C), a shift is slightly observed in the layered rock salt structure peaks (003) and (104). This indicates that the Al₂O₃ layer on the surface is not only all for covering.

FIG. 8(a) is a chart illustrating an XRD (X-ray diffraction) pattern of the positive electrode active material in which a composition formula of the solid solution active material has been identified by elemental analysis. In FIG. 8(a), a chart illustrating an XRD (X-ray diffraction) pattern of a sample (bare sample) using a solid solution active material not covered with alumina as a positive electrode active material, is illustrated in the lower diagram. A chart illustrating an XRD (X-ray diffraction) pattern of a positive electrode active material sample (2 wt% Al₂O₃ coated sample) obtained by providing a 2% by mass alumina layer on the surface of the same solid solution active material (particles) as in the lower diagram, is illustrated in the middle diagram. A chart illustrating an XRD (X-ray diffraction) pattern of a positive electrode active material sample (5 wt% Al₂O₃ coated sample) obtained by providing a 5% by mass alumina layer on the surface of the same solid solution active material (particles) as in the lower diagram, is illustrated in the upper diagram. For each of the solid solution active materials, a compound represented by the composition formula of Reference Example 1: Li_{1.5}[Ni_{0.40}Mn_{0.60}Co_{0.40}[Li]_{0.1}]O_{z} was used. For the sample (bare sample) using the solid solution active material not covered with alumina as the positive electrode active material, the positive electrode active material made in Comparative Example 1 was used. For the positive electrode active material sample obtained by providing a 2% by mass alumina layer on the surface of the solid solution active material (particles), the positive electrode active material made in Reference Example 3 was used. For the positive electrode active material sample obtained by providing a 5% by mass alumina layer on the surface of the solid solution active material (particles), the positive electrode active material made in Reference Example 4 was used. FIG. 8(b) is a diagram illustrating enlarged layered rock salt structure peaks (003) of the three patterns (upper, middle, and lower diagrams) in FIG. 8(a) such that the peak shifts and shift widths thereof can be determined. FIG. 8(c) is a diagram illustrating enlarged layered rock salt structure peaks (101) of the three patterns (upper, middle, and lower diagrams) in FIG. 8(a) such that the peak shifts and shift widths thereof can be determined. FIG. 8(d) is a diagram illustrating enlarged layered rock salt structure peaks (104) of the three patterns (upper, middle, and lower diagrams) in FIG. 8(a) such that the peak shifts and shift widths thereof can be determined. The XRD (X-ray diffraction) illustrated in FIGS. 8(a) to 8(d) was measured by powder X-ray diffraction using Rigaku, Ultima III and CuKα as a radiation source.

As illustrated in FIG. 8(a), a peak was observed in each of the layered rock salt structure peaks (003), (101), and (104). In FIGS. 8(b) to 8(d), a peak shift was slightly observed in each of the layered rock salt structure peaks (003), (101), and (104) in the sample obtained by providing an alumina layer in each of the middle and upper diagrams with respect to the sample (bare sample) of the solid solution active material in the lower diagram. This indicates that the Al₂O₃ layer on the surface of the solid solution active material is not only for covering. For more details, it can be observed in FIG. 8(b) that (003) is shifted to a lower angle side, in FIG. 8(c) that (101) is shifted to a higher angle side, and in FIG. 8(d) that (104) is shifted to a higher angle side. Furthermore, the following facts were observed. That is, the width of each peak shift depends on the coat amount of Al₂O₃. (003) is shifted to a lower angle side in a range of -0.08° ≤ Δθ < 0.00°, (101) is shifted to a higher angle side in a range of 0.00° < Δθ ≤ 0.05°, and (104) is shifted to a higher angle side in a range of 0.00° ≤ Δθ ≤ 0.05° (refer to FIGS. 8(b) to 8(d)). From the above, it is considered that generation of a compound (or generation of a solid solution) partially occurs at the interface between the alumina layer and the solid solution active material (particles). Therefore, as Table 1 of Examples indicates, it was possible to confirm that performance and durability were improved largely by improving an effect of preventing the elution of the transition metal (Mn or the like) significantly.

### (3) (Quantitative mapping) analysis by STEM-EDX (scanning transmission electron microscope-energy dispersive X-ray spectroscopy)

FIG. 9(a) is a diagram illustrating a BF (Bright field)-STEM Image (bright field-scanning transmission electron microscope image) of the active material particles. FIG. 9(b) is a diagram illustrating a HAADF-STEM Image (high-angle scattering dark field-scanning transmission electron microscope image) of the active material particles in the same field as FIG. 9(a). As a measuring object, the positive electrode active material particles (secondary particles) of Reference Example 3, made by coating the surface of the solid solution active material (particles) having a size of the active material particle (secondary particle) of about 2 µm with 2% by mass alumina, were used. For the solid solution active material, a compound represented by the composition formula of Reference Example 1: Li_{1.5}[Ni_{0.40}Mn_{0.60}Co_{0.40}[Li]_{0.1}]O_{z} was used. FIGS. 10(a) to 10(f) are diagrams illustrating quantitative mapping data by STEM-EDX (scanning transmission electron microscope-energy dispersive X-ray spectroscopy). FIG. 10(a) illustrates the same HAADF-STEM image as FIG. 9(b). FIG. 10(b) illustrates mapping data of O (on the upper middle) measured in the same field as HAADF-STEM (FIG. 10(a) on the upper left). FIG. 10(c) illustrates mapping data of Al (on the upper right) measured in the same field as HAADF-STEM (FIG. 10(a) on the upper left). FIG. 10(d) illustrates mapping data of Mn (on the lower left) measured in the same field as HAADF-STEM (FIG. 10(a) on the upper left). FIG. 10(e) illustrates mapping data of Co (in the lower middle) measured in the same field as HAADF-STEM (FIG. 10(a) on the upper left). FIG. 10(f) illustrates mapping data of Ni (on the lower right) measured in the same field as HAADF-STEM (FIG. 10(a) on the upper left).

In the mapping data of Al in FIG. 10(c) on the upper right, Al (white part in the diagram) can be observed on the surface layer of the active material particles. This indicates that the alumina (Al₂O₃) coat layer is distributed on the (entire) surface of the solid solution active material. In addition, presence of O, Al, Mn, Co, and Ni which are constituent elements of a positive electrode active material Cl_{2.0} (positive electrode active material of Example 3) as a measuring object and a distribution state thereof can be confirmed.

In the above-described analysis, observation of the STEM image contains two types of observation methods of a bright-field (BF) STEM image and a dark-field (DF) STEM image. The bright-field (BF) STEM image images using an electron beam passing through the sample. The dark-field (DF) STEM image images using an electron beam scattered from the sample. In the BF-STEM image illustrated in FIG. 9 (a), a transmission image showing an inner structure of the sample can be observed as in a normal TEM image. In the (HAA) DF-STEM image illustrated in FIG. 9 (b), a composition image from which a contrast reflecting the composition of the sample can be obtained can be observed. Particularly, in the HAADF (high-angle scattering annular dark field), a contrast of elastically scattered electrons due to atomic number (Z) is superior. Therefore, the HAADF is an imaging method also referred to as a Z-contrast image. A substance having a large atomic number is seen brightly (refer to FIG. 9 (b), FIG. 11 (b), and FIGS. 12 to 17). In the HAADF-STEM (high-angle scattering annular dark field scanning transmission electron microscopy), an image is obtained by irradiating a sample with a narrow electron beam during an operation and by detecting transmission electrons scattered at a high angle with an annular detector. A material having a higher Z²ρ is scattered at a higher angle. Therefore, a heavy element is dark in the STEM image, and bright in the HAADF-STEM image. A contrast proportional to an atomic weight (Z) is obtained. Therefore, the image is also referred to as the Z contrast image. In the STEM-EDX quantitative mapping, information of composition distribution of a sample can be obtained by taking a characteristic X-ray generated at each point into an EDS (Energy-Dispersive-Spectroscopy) detector while the sample is scanned with a narrow electron beam. In the TEM measurement, diffusion of an electron beam as in the SEM measurement hardly occurs, and the measurement can be performed with nanometric spatial resolution.

### (4) HAADF-STEM Image (high-angle scattering dark field-scanning transmission electron microscope image) and analysis by elemental analysis

FIG.11 (a) is a diagram illustrating a BF (Bright field)-STEM Image (bright field-scanning transmission electron microscope image) of the active material particles. FIG. 11(b) is a diagram illustrating a HAADF-STEM Image (high-angle scattering dark field-scanning transmission electron microscope image) of the active material particles in the same field as FIG. 11(a). As a measuring object, the interface between the solid solution active material and the alumina layer of the positive electrode active material particles (primary particles) of Reference Example 3, made by coating the surface of the solid solution active material with 2% by mass alumina, was used. Particularly, the elemental distribution of the surface layer on the side of the solid solution active material was observed. For the solid solution active material, a compound represented by the composition formula of Reference Example 1: Li_{1.5}[Ni_{0.40}Mn_{0.60}Co_{0.40}[Li]_{0.1}]O_{z} was used. The whitish part (the right side) is an alumina layer, and the black part (the left side) is the solid solution active material in FIG. 11(b). FIG. 12 illustrates the same HAADF-STEM image as FIG. 11(b). In the image, regions (four parts enclosed by rectangular frames) in which presence (invasion) of Al element is observed by elemental analysis are divided by the circled numbers 1 to 4. FIG. 13(a) illustrates the same HAADF-STEM image as FIG. 12. In the image, the rectangular frame of a part to be observed in elemental distribution (part of the circled number 1 in the image) is illustrated by a bold line. FIG. 13(b) is a diagram obtained by elemental analysis of the part to be observed in elemental distribution in FIG. 13(a).

In FIG. 13(b), in the part of the circled number 1 in FIG. 13(a) to be observed in elemental distribution, Al element is hardly observed. The thickness of the alumina layer is about 10 to 20 nm. The part to be observed is outside the alumina layer.

FIG. 14(a) illustrates the same HAADF-STEM image as FIG. 12. In the image, the rectangular frame of a part to be observed in elemental distribution (part of the circled number 2 in the image) is illustrated by a bold line. FIG. 14(b) is a diagram obtained by elemental analysis of the part to be observed in elemental distribution in FIG. 14(a).

In FIG. 14(b), in the part of the circled number 2 in FIG. 14(a) to be observed in elemental distribution, Al element peak was able to be observed. In the HAADF-STEM image of FIG. 14(a), the alumina layer is made of a light element having a smaller atomic number than the solid solution active material, and is positioned in the dark part. When a distance from the interface between the active material and the alumina layer (interface between the white part and the black part) in FIG. 14(a) is considered, the thickness of the alumina layer is about 10 to 20 nm. This indicates that the part to be observed is the alumina layer.

FIG. 15(a) illustrates the same HAADF-STEM image as FIG. 12. In the image, the rectangular frame of a part to be observed in elemental distribution (part of the circled number 3 in the image) is illustrated by a bold line. FIG. 15(b) is a diagram obtained by elemental analysis of the part to be observed in elemental distribution in FIG. 15(a).

In FIG. 15(b), in the part of the circled number 3 in FIG. 15(a) to be observed in elemental distribution, Al element peak was able to be observed. When a distance from the interface between the active material and the alumina layer (interface between the white part and the black part) is considered, the part of the circled number 3 in the HAADF-STEM image in FIG. 15(a) is a region from the interface between the active material and the alumina layer to the outermost layer of the solid solution active material particles (5 to 10 nm). The observation of Al element in this region indicates presence (invasion) of Al element from the interface between the active material and the alumina layer into the side of the active material.

FIG. 16(a) illustrates the same HAADF-STEM image as FIG. 12. In the image, the rectangular frame of a part to be observed in elemental distribution (part of the circled number 4 in the image) is illustrated by a bold line. FIG. 16(b) is a diagram obtained by elemental analysis of the part to be observed in elemental distribution in FIG. 16(a). FIG. 17 is a diagram illustrating concentration distribution of Ni, Co, Mn, and Al with color tones based on the observation results of FIGS. 13 to 16 in the same HAADF-STEM image as FIG. 12.

In FIG. 16(b), in the part of the circled number 4 in FIG. 16(a) to be observed in elemental distribution, Al element peak was able to be observed. However, the Al concentration is decreased. When a distance from the interface between the active material and the alumina layer (interface between the white part and the black part) is considered, the part of the circled number 4 in the HAADF-STEM image in FIG. 16(a) is a region from the interface between the active material and the alumina layer to the bottom of the outermost layer of the solid solution active material particles (10 to 20 nm). The observation of Al element also in this region indicates presence (invasion) of Al element from the interface between the active material and the alumina layer into the surface layer (to about 20 nm) on the side of the active material. In FIGS. 15(b) and 16(b), the Al concentration is decreased than in the outermost layer of the active material. Therefore, it is considered that such a concentration gradient that the Al concentration is highest in the outermost layer due to the invasion of Al element as illustrated in FIG. 17, and is gradually decreased toward the inside, is formed. From the observation results of FIG. 6a, FIGS. 10(a) to 10(f), and FIGS. 13(a) to 16(b), as illustrated in FIG. 17, the alumina (Al₂O₃) coat layer is distributed on the surface of the solid solution active material particles (refer to FIG. 6a and FIGS. 10(a) to 10(f)). Al element invades (is present in) the inside to the depth of about 10 to 20 nm from the surface of the solid solution active material particles. The invasion depth depends on the thickness (coating amount) of the alumina layer. However, it is understood that the Al element can invade (be present in) the inside to the depth of about 30 nm (refer to Example 19 in Table 1). In view of the use of the positive electrode active material prepared in a similar manner to Reference Example 3, formation of Al element solid solution (or formation of a compound containing Al and Li) in the surface layer of the solid solution active material can be confirmed regardless of the low calcination temperature (400 to 450°C) after the surface of the solid solution active material particles is coated with alumina. The compound containing Al and Li, existing as a solid solution in the surface layer, cannot be identified, but is considered to be close to LiAlO₂. That is, the Al₂O₃ layer is present in a part or the whole (almost the whole from FIG. 6a) of the surface of the solid solution active material particles. Al element invades the surface layer of the solid solution active material particles (to 20 nm or 35 nm, FIGS. 16(a) and 16(b) and Example 19).

### (Solid solution active material having the composition formula (1))

The positive electrode active material of the present embodiment contains a solid solution active material represented by the composition formula (1) : Li_{1.5}[NiₐMn_{b}Co_{c}[Li]_{d}[X]ₑ]O_{z}. Here, X represents at least one selected from Ti, Zr and Nb, 0 < e ≤ 0.5, a + b + c + d + e = 1.5, 0.1 ≤ d ≤ 0.4, 1.1 ≤ [a + b + c + e] ≤ 1.4, and z represents the number of oxygen atoms satisfying an atomic valence. In the solid solution active material of the composition formula (1), LiMO₂ indicates a rock salt type layered structure as an X-ray diffraction (XRD) peak. Li₂MnO₃ indicates a superlattice diffraction peak at 20-23°, but the other peaks indicate the same rock salt type layered structure as LiMO₂. Therefore, the solid solution system of Li₂MnO₃ and LiMO₂ indicates a rock salt type layered structure having a superlattice diffraction peak at 20-23°. That is, the positive electrode active material of the composition formula (1) has a plurality of specific diffraction peaks in the X-ray diffraction (XRD) measurement. The positive electrode active material of the above-described composition formula is a solid solution system of Li₂MnO₃ and LiMnO₂. Among the plurality of diffraction peaks, the diffraction peak at 20-23° is a superlattice diffraction peak characteristic of Li₂MnO₃. Normally, diffraction peaks at 36.5-37.5° (101), 44-45° (104), and 64-65 (108) /65-66 (110) are characteristic of the rock salt type layered structure of LiMnO₂. In the present embodiment, the diffraction peak indicating the rock salt type layered structure contains the diffraction peaks at (003), (101), and (104) (refer to bare sample in FIG. 8(a)). Preferably, the solid solution active material of the present embodiment does not include a peak other than the diffraction peak indicating the rock salt type layered structure, for example, other peaks derived from impurities, in the angle range. Existence of these other peaks indicates that the solid solution active material contains a structure other than the rock salt type layered structure. When the solid solution active material does not include a structure other than the rock salt type layered structure, the cycle characteristics can be surely improved in the present embodiment.

In the solid solution active material represented by the composition formula (1) of the present embodiment, at least one selected from Ti, Zr, and Nb is introduced to a solid solution by replacing Mn⁴⁺ in the transition metal layer including Ni, Co, and Mn to form the rock salt type layered structure. That is, the valence.e of X in the general formula (1) is larger than 0. That is, the solid solution active material contains at least one selected from Ti, Zr and Nb, corresponding to X in the general formula (1) (refer to Examples 14 to 19).

That is, in the solid solution in which a part of Mn is replaced with Ti, Zr, or Nb, it is possible to suppress a change in the crystal structure caused by repetition of the charge-discharge cycle (for example, 4.3 to 4.5 V) after an activation treatment at a high potential (for example, 4.4 to 4.8 V) of the plateau potential or more. By formation of a solid solution including an element such as Ti, Zr, or Nb in the transition metal layer and replacement of Mn4⁺, an amount of the transition metal (Mn or the like) eluted outside the crystal structure without forming the spinel phase (without being fixed) is reduced when Mn in the transition metal layer moves to the Li layer and a part thereof performs a phase transition into the spinel phase in accordance with the activation. Performance and durability can be improved. Furthermore, a covalent bond between oxygen and the replacement element is strengthened. Therefore, release of lattice oxygen in accordance with oxidation of other transition metals occurs less. Therefore, a generation amount of oxygen gas is reduced, and a generation amount of an oxygen defect in the crystal structure is also reduced. Even by repetition of the charge-discharge cycle around the plateau potential (4.3 to 4.5 V), or by exposure to a potential around the plateau potential for a long time, the crystal structure is stabilized and release of oxygen occurs less. Therefore, the elution of the transition metal (Mn or the like) contained in the solid solution based active material, caused in accordance with the oxidation of the transition metal, is suppressed. Therefore, performance and durability can be improved. As a result, in the solid solution the surface of which is coated (covered) with Al₂O₃, it is possible to suppress the change in the crystal structure caused by repetition of the charge-discharge cycle (for example, 4.3 to 4.5 V) after an activation treatment at a high potential (for example, 4.4 to 4.8 V) of the plateau potential or more. By covering the surface with the Al₂O₃ layer, an amount of the transition metal (Mn) eluted outside the crystal structure without forming the spinel phase (without being fixed) is reduced when Mn in the transition metal layer moves to the Li layer and a part thereof performs a phase transition into the spinel phase in accordance with the activation. Performance and durability can be improved: Furthermore, a covalent bond with oxygen is strengthened by invasion of a part of Al element in the Al₂O₃ coat (cover) layer into the surface layer of the active material particles. Therefore, release of lattice oxygen in accordance with oxidation of other transition metals occurs less. Therefore, a generation amount of oxygen gas is reduced, and a generation amount of an oxygen defect in the crystal structure is also reduced. A most unstable surface layer (to 35 nm) of the active material particles is stabilized by the Al₂O₃ coat and invasion of Al element. Therefore, performance and durability can be improved more than the Al₂O₃ coat technique in the related art, in which invasion (presence) of Al element in the surface layer of the active material particles is difficult. Al element in the Al₂O₃ coat layer does not invade the particles (bulk) or replace the particles. Therefore, insertion and release of Li in accordance with oxidation-reduction of Ni or Mn in the bulk are not hindered. Therefore, it is possible to obtain a high capacity.

Furthermore, when the solid solution active material of the composition formula (1) above contains at least one selected from Ti, Zr and Nb, the diffraction peak indicating the rock salt type layered structure of the solid solution active material is preferably shifted to a lower angle side. That is, the solid solution active material of the composition formula (1) above, including at least one selected from Ti, Zr and Nb, preferably has diffraction peaks at 20-23°, 35.5-36.5° (101), 43.5-44.5° (104) , and 64-65° (108) /65-66° (110) in the X-ray diffraction (XRD) measurement. The shift of the diffraction peak to a lower angle side indicates formation of a solid solution containing a larger amount of Ti or the like in the solid solution active material of the composition formula (1) above and replacement of Mn with Ti or the like. It is considered that Mn is prevented from being eluted more largely.

Furthermore, when the solid solution active material of the composition formula (1) above contains at least one selected from Ti, Zr and Nb, the covalent bond between oxygen and the replacement element is strengthened by formation of a solid solution containing Ti or the like by replacement of Mn⁴⁺ with Ti or the like in the transition metal layer of the solid solution active material of the composition formula (1) above. It is possible to make the release of oxygen in the crystal lattice in accordance with oxidation of the transition metal occur less. This can suppress the generation of oxygen gas, and can reduce a generation amount of an oxygen defect in the crystal structure.

In the solid solution active material represented by the composition formula (1) of the present embodiment, a + b + c + e satisfies 1.1 ≤ [a + b + c + e] ≤ 1.4. In general, it is known that nickel (Ni), cobalt (Co), and manganese (Mn) contribute to a capacity and output characteristics from viewpoints of improving purity of the material and improving electron conductivity. Ti or the like partially replaces Mn in the crystal lattice. It is possible to optimize the elements and further improve the capacity and the output characteristics by satisfying 1.1 ≤ [a + b + c + e] ≤ 1.2. Therefore, when a positive electrode active material satisfying this relationship is used for a lithium ion secondary battery, it is possible to maintain a high capacity and exhibit an excellent initial charge-discharge efficiency by maintaining a high reversible capacity.

Furthermore, in the composition formula (1) above, the values of a, b, and c are not particularly limited as long as a + b + c + d + e = 1.5, and 1.1 ≤ [a + b + c + e] ≤ 1. 4 are satisfied. However, a satisfies preferably 0 < a < 1.5, more preferably 0.1 ≤ a ≤ 0.75. When a is within the above-described range, a secondary battery having a better capacity retention rate is obtained. When a does not satisfy at ≤ 0. 75, the positive electrode active material contains nickel in the above-described range of d with the proviso that the valence of nickel (Ni) is two. Therefore, the crystal structure may not be stabilized. On the other hand, when a satisfies a ≤ 0.75, the crystal structure of the positive electrode active material easily becomes a rock salt type layered structure.

Furthermore, in the composition formula (1) above, b satisfies preferably 0 < b < 1.5, more preferably 0.2 ≤ b ≤ 0.9. When b is within the above-described range, a secondary battery having a better capacity retention rate is obtained. When b does not satisfy b ≤ 0.9, the positive electrode active material contains manganese in the above-described range of d with the proviso that the valence of manganese is four, and further contains nickel (Ni). Therefore, the crystal structure may not be stabilized. On the other hand, when b satisfies b ≤ 0.9, the crystal structure of the positive electrode active material easily becomes a rock salt type layered structure.

In the composition formula (1), c preferably satisfies 0 ≤ c < 1.5. When c does not satisfy c ≤ 0. 6, the positive electrode active material contains nickel and manganese in the above-described range of d with the proviso that the valence of cobalt is three. The positive electrode active material further contains cobalt (Co) in the above range of d with the proviso that the valence of nickel (Ni) is two and the valence of manganese (Mn) is four. Therefore, the crystal structure of the positive electrode active material may not be stabilized. On the other hand, when c satisfies c ≤ 0.6, the crystal structure of the positive electrode active material easily becomes a rock salt type layered structure.

In the composition formula (1), a + b + c + d + e = 1.5. It is possible to stabilize the crystal structure of the positive electrode active material by satisfying this formula.

In the composition formula (1), 0.1 ≤ d ≤ 0.4. When d does not satisfy 0.1 ≤ d ≤ 0.4, the crystal structure of the positive electrode active material may not be stabilized. On the contrary, when d satisfies 0.1 ≤ d ≤ 0.4, the positive electrode active material easily becomes a rock salt type layered structure. The range of d is more preferably 0.15 ≤ d ≤ 0.35. When d is 0.1 or more, the composition does not easily become close to Li₂MnO₃, and charge and discharge are performed easily. Therefore, d of 0.1 or more is preferable.

In the composition formula (1), 0 < e ≤ 0.5. When at least one selected from Ti, Zr and Nb is contained, if 0.01 ≤ e ≤ 0.5, at least one selected from Ti, Zr and Nb can replace Mn⁴⁺ sufficiently such that the elution of Mn⁴⁺ is suppressed. From these viewpoints, e satisfies preferably 0.02 ≤ e ≤ 0.5, more preferably 0.05 ≤ e ≤ 0.3.

The ionic radius of Mn⁴⁺ is 0. 54 Å. On the other hand, the ionic radii of Ti⁴⁺, Zr⁴⁺, and Nb⁵⁺ are 0.61 Å, 0.72 Å, and 0.64 Å, respectively. Each of Ti, Zr, and Nb is larger than Mn. Therefore, as Mn⁴⁺ in the positive electrode active material is replaced with Ti or the like, the crystal lattice expands, and the diffraction peak indicating the rock salt type layered structure is shifted to a lower angle side. On the contrary, when the diffraction peak is shifted to a lower angle side, the replacement amount of Mn⁴⁺ with Ti or the like is larger, and the crystal structure is stabilized easily. That is, the elution of Mn at the time of charge and discharge is suppressed more. It is possible to prevent reduction in the capacity of the secondary battery more effectively.

The specific surface area of the solid solution active material is preferably 0.2 to 0. 6 m²/g, more preferably 0.25 to 0.5 m²/g. When the specific surface area is 0.2 m²/g or more, it is possible to obtain a sufficient output of the battery. Therefore, the specific surface area of 0.2m²/g or more is preferable. On the other hand, when the specific surface area is 0.6 m²/g or less, it is possible to suppress the elution of manganese more. Therefore, the specific surface area of 0.6 m²/g or less is preferable. Here, as the values of the specific, surface area, values measured using a measurement device BELSORP-mini II manufactured by Bel Japan, Inc. were used.

The average particle diameter of the solid solution active material (secondary particles) is preferably 10 to 20 µm, more preferably of 12 to 18 µm. When the average particle diameter is 10 µm or more, it is possible to suppress the elution of manganese. Therefore, the average particle diameter of 10 µm or more is preferable. On the other hand, when the average particle diameter is 20 µm or less, it is possible to cover every part of the surface of the primary particles forming the secondary particles with alumina in the coating of alumina during manufacturing the positive electrode active material. In addition, it is possible to suppress foil break, clogging, or the like in the coating step onto a current collector during manufacturing the positive electrode. Therefore, the average particle diameter of 20 µm or less is preferable. As the average particle diameter, values measured using a particle size distribution measuring device of a laser diffraction scattering method are used. The average particle diameter can be measured, for example, using a particle size distribution analyzer (model LA-920) manufactured by Horiba, Ltd.

The positive electrode active material of the present embodiment contains the solid solution active material of the composition formula (1) above, (a) an alumina cover layer on the surface of the solid solution active material, and (b) a region in which Al element is present on the side of the surface of the solid solution active material in the interface between the solid solution active material and the alumina cover layer.

Among these components, by containing the solid solution active material of the composition formula (1) above, an amount of the transition metal eluted outside the crystal structure without forming the spinel phase (without being fixed) is reduced at the time of a partial phase transition of the spinel phase in accordance with the activation of the solid solution active material. Performance and durability can be improved.

### (a) Alumina layer (alumina coat layer, alumina cover layer, Al₂O₃ layer, or the like)

In the present embodiment, an alumina layer is present on the surface of the solid solution active material (particles) of the composition formula (1) above. By such a structure, in addition to the effects by the solid solution active material of the composition formula (1) above, release of lattice oxygen in accordance with oxidation of the transition metal occurs less due to the presence of the alumina cover layer on the surface of the solid solution active material. Therefore, a generation amount of oxygen gas is reduced, and a generation amount of an oxygen defect in the crystal structure is also reduced. Even by repetition of the charge-discharge cycle around the plateau potential, or by exposure to a potential around the plateau potential for a long time, the elution of the transition metal (Mn, Ni, or the like) contained in the solid solution active material in accordance with oxidation of the transition metal is suppressed, and release of oxygen occurs less. Therefore, performance and durability are improved.

The alumina layer covers 50% or more, preferably 60% or more, more preferably 70% or more, still more preferably 80% or more, particularly preferably 90% or more, of the surface of the .solid solution active material particles. Above all, the alumina layer desirably covers the entire surface thereof (about 100%: approximately 97 to 98%). A part where the solid solution active material is exposed does not remain thereby. Therefore, it is possible to further enhance the above-described effects. Particularly in the present embodiment, it has been found that 50% or more of the surface of the solid solution active material particles, or the entire surface thereof (about 100%: approximately 97 to 98%) can be covered by preparing the positive electrode active material in a manufacturing method and conditions different from the existing manufacturing methods in a method for manufacturing the positive electrode active material described later (refer to FIG. 6 (a)). For details, it has been found that 50% or more of the surface of the solid solution active material particles, or the entire surface thereof (about 100%: approximately 97 to 98%) can be covered and Al element easily invades the surface layer of the solid solution active material, by optimizing pH and calcination temperature using aluminum nitrate as a raw material source. When the entire surface of the solid solution active material particles (about 100%: approximately 97 to 98%) can be covered, which has been difficult in the related art, a new problem that the electrolyte solution cannot pass through the dense Al₂O₃ cover layer and Li ions cannot be dispersed, occurs. With respect to the problem, it has been found that the new problem can be also solved by obtaining η-Al₂O₃ (calcination temperature 400 to 450°C) as a crystal structure formed from Al(OH)₃ by preparing the positive electrode active material in a manufacturing method and conditions different from the existing manufacturing methods (particularly by optimizing the calcination temperature) in the method for manufacturing the positive electrode active material described later. However, needless to.say, in the present embodiment, an embodiment in which the alumina layer covers a part (less than 50%) of the surface of the solid solution active material particles is included in the technical scope of the present embodiment as long as the embodiment can exhibit the effects of the present embodiment effectively.

The average thickness of the alumina layer is 1 to 60 nm, preferably 2 to 55 nm, more preferably 3 to 30 nm, still more preferably 3 to 20 nm, particularly preferably 5 to 15 nm. When the average thickness of the alumina layer is within the above-described range, release of lattice oxygen in accordance with oxidation of the transition metal occurs less. A generation amount of oxygen gas is thereby reduced, and a generation amount of an oxygen defect in the crystal structure is also reduced. Even by repetition of the charge-discharge cycle around the plateau potential, or by exposure to a potential around the plateau potential for a long time, the elution of the transition metal (Mn, Ni, or the like) contained in the solid solution active material in accordance with oxidation of the transition metal is suppressed, and release of oxygen occurs less. Therefore, performance and durability are improved. When the average thickness of the Al₂O₃ layer disposed on the surface of the solid solution active material particles is 1 nm or more, particularly 3 or more, durability is sufficiently improved by the Al₂O₃ coat layer. When the average thickness of the Al₂O₃ layer is 60 nm or less, particularly 20 nm or less, Li ions easily move and performance is improved sufficiently. The average thickness of the alumina layer can be measured, for example, using an observation image of SEM or TEM. In addition to this method, the average particle diameter of the solid solution active material and the average particle diameter of the positive electrode active material having the alumina layer may be measured using a particle size distribution measuring device of a laser diffraction scattering method, and a difference therebetween may be used as the average thickness of the alumina layer.

A content of alumina (Al₂O₃) is 1 to 5% by mass, with respect to the total amount of the positive electrode active material. When the content of alumina is within the above-described range, release of lattice oxygen in accordance with oxidation of the transition metal occurs less. A generation amount of oxygen gas is thereby reduced, and a generation amount of an oxygen defect in the crystal structure is also reduced. Even by repetition of the charge-discharge cycle around the plateau potential, or by exposure to a potential around the plateau potential for a long time, the elution of the transition metal (Mn, Ni, or the like) contained in the solid solution active material in accordance with oxidation of the transition metal is suppressed, and release of oxygen occurs less. Therefore, performance and durability are improved. When the content of alumina (Al₂O₃) is 5% by mass or less, Li ions easily move and performance is improved sufficiently. The content of alumina (Al₂O₃) can be measured by an elemental analysis method such as ICP, EDX, or EPMA.

### (b) Al element on the surface layer of solid solution active material layer

In the present embodiment, the solid solution active material of the composition formula (1) above and a region in which Al element is present on the side of the surface of the solid solution active material in the interface between the solid solution active material and the alumina cover layer coated on the surface thereof are contained. By this structure, in addition to the effects by the solid solution active material of the composition formula (1) above and the alumina layer, the above-described improvement effects are increased by provision of the Al₂O₃ cover layer on the surface layer of the solid solution active material particles and invasion (presence) of Al element in the surface layer of the solid solution active material particles. It is considered that a compound containing Li and Al (α-Li₁-ₓAlO₂ having a crystal system and a space group similar to layered LiCoO₂) is generated by the invasion of Al element and contributes to (is involved in) the increase of the above-described improvement effects.

Al element is preferably present in a region inside the solid solution active material of the composition formula (1) above from the surface of the active material to a thickness (invasion depth) of 35 nm, preferably from the surface to 30 nm, more preferably from the surface to 25 nm. This is desirable because the effects by the solid solution active material of the composition formula (1) above and the alumina layer are further increased. In other words, the maximum depth (maximum distance from the surface) at which Al element invades (is present in) the surface of the solid solution active material of the composition formula (1) above is 1 nm or more and 35 nm or less, preferably 3 nm or more and 30 nm or less, more preferably 5 nm or more and 25 nm or less. When the maximum depth (maximum distance from the surface) at which Al element invades (is present in) the surface of the solid solution active material of the composition formula (1) above is 1 nm or more, preferably 3 nm or more, performance can be improved sufficiently by the Al₂O₃ coat layer. When the maximum depth (maximum distance from the surface) at which Al element invades (is present in) the surface of the solid solution active material of the composition formula (1) above is 35 nm or less, preferably 30 nm or less, durability is sufficiently improved without destabilizing the crystal structure in the surface layer of the solid solution active material. Furthermore, Li ions easily move and performance is improved sufficiently. The invasion depth of Al element into the surface layer of the solid solution active material can be measured using XPS (X-ray photoelectron spectroscopy), TEM-EDX (transmission electron microscope-energy dispersive X-ray spectroscopy), STEM-EDX/EELS (scanning transmission electron microscope-energy dispersive X-ray spectroscopy/electron energy loss spectroscope), HAADF-STEM (high-angle scattering dark field-scanning transmission electron microscope image), or the like. However, the measuring method is not limited thereto.

The specific surface area of the positive electrode active material of the present embodiment is preferably 0.2 to 0.6 m²/g, more preferably of 0.25 to 0.5 m²/g. When the specific surface area is 0.2 m²/g or more, it is possible to obtain a sufficient output of the battery. Therefore, the specific surface area of 0.2 m²/g or more is preferable. On the other hand, when the specific surface area is 0.6 m²/g or less, it is possible to suppress the elution of manganese more. Therefore, the specific surface area of 0.6 m²/g or less is preferable.

The average particle diameter of the positive electrode active material of the present embodiment is preferably 10 to 20 µm, more preferably of 12 to 18 µm. When the average particle diameter is 10 µm or more, it is possible to suppress the elution of manganese. Therefore, the average particle diameter of 10 µm or more is preferable. On the other hand, when the average particle diameter is 20 µm or less, it is possible to suppress foil break, clogging, or the like in the coating step onto a current collector during manufacturing the positive electrode. Therefore, the average particle diameter of 20 µm or less is preferable. As the average particle diameter, values measured using a particle size distribution measuring device of a laser diffraction scattering method are used. The average particle diameter can be measured, for example, using a particle size distribution analyzer (model LA-920) manufactured by Horiba, Ltd.

The positive electrode active material can be prepared by the following method.

That is, the method for manufacturing the positive electrode active material includes a step of coating a surface of the solid solution active material represented by the composition formula (1) : Li_{1.5}[NiₐMn_{b}Co_{c}[Li]_{d}[X]ₑ]O_{z} (wherein X represents at least one selected from Ti, Zr and Nb, 0 < e ≤ 0.5, a + b + c + d + e = 1.5, 0.1 ≤ d ≤ 0.4, and 1.1 ≤ [a + b + c + e] ≤ 1.4, and z represents the number of oxygen atoms satisfying an atomic valence) with alumina. The method preferably further includes a step of preparing the solid solution active material. The step is characterized by containing a first step of mixing an organic acid salt of a transition metal having a melting point of 100°C to 350°C; a second step of melting the mixture obtained in the first step at 100°C to 350°C; a third step of subjecting the molten substance obtained in the second step to pyrolysis at a temperature equal to higher than the melting point; and a fourth step of calcining the pyrolysate obtained in the third step. In the first step, a citrate of at least one of Ti, Zr and Nb is further mixed. In the first step, an organic acid salt of an alkali metal is further mixed. The step of coating the surface of the solid solution active material with alumina further includes a fifth step of mixing the solid solution active material and an aluminum nitrate solution at pH of 7 to 8; a sixth step of drying the solid solution active material precursor obtained in the fifth step; and a seventh step of calcining the dry solid solution active material precursor obtained in the sixth step at a temperature of 450°C ± 50°C.

First, the preparation of the solid solution active material of the composition formula (1) above includes a first step of mixing a citrate of at least one of Ti, Zr and Nb to be added, and an organic acid salt of a transition metal having a melting point of 100°C to 350°C; a second step of melting the mixture obtained in the first step at 100°C to 350°C; a third step of subjecting the molten substance obtained in the second step to pyrolysis at a temperature equal to or higher than the melting point; and a fourth step of calcining the pyrolysate obtained in the third step. Next, the preparation of the positive electrode active material (coating the surface of the solid solution active material with Al₂O₃) includes a step of mixing the solid solution active material obtained in the above-described "preparation of the solid solution active material of the composition formula (1)" with an aluminum nitrate solution at pH of 7 to 8, drying the solid solution active material precursor obtained, and calcining the solid solution active material precursor at a temperature of 450°C ± 50°C. Hereinafter, each step will be described.

### (1) Preparation of solid solution active material of the composition formula (1)

### (a) First step

In the first step, a citrate of at least one of Ti, Zr and Nb is mixed with an organic acid salt of a transition metal having a melting point of 100°C to 350°C. The citrate of at least one of Ti, Zr, and Nb is preferably mixed in a form of a citric acid complex aqueous solution. The citric acid complex aqueous solution of at least one of Ti, Zr, and Nb is not limited to the following solutions, but can be preferably prepared as follows.

That is, anhydrous citric acid is dissolved in an organic solvent such as acetone. An alkoxide of at least one of Ti, Zr, and Nb is added to the solution. At this time, a molar ratio between the at least one of Ti, Zr, and Nb and the citric acid is preferably (at least one of Ti, Zr, and Nb)/citric acid = 1/1 to 1/2. When the alkoxide is added, a precipitate is generated in the solution. Therefore, the precipitate is subjected to suction filtration. Subsequently, water is added to the resulting precipitate. The resulting mixture is stirred while the mixture is heated to 50 to 60°C for dissolution. Water is appropriately added such that the citric acid complex aqueous solution finally has a concentration of 1 to 10% by mass in terms of an oxide of at least one of Ti, Zr, and Nb. The aqueous solution is allowed to stand for one day. The precipitate is filtered to obtain a citric acid complex aqueous solution of at least one of Ti, Zr, and Nb as a filtrate.

Examples of the alkoxide of at least one of Ti, Zr, and Nb include titanium tetraisopropoxide, zirconium tetraisopropoxide, niobium isopropoxide, titanium ethoxide, titanium n-propoxide, titanium butoxide, zirconium ethoxide, zirconium n-propoxide, zirconium butoxide, niobium ethoxide, and niobium butoxide.

Subsequently, an organic acid salt of a transition metal having a melting point of 100°C to 350°C is added to the resulting citric acid complex aqueous solution of at least one of Ti, Zr and Nb to obtain a mixture. Examples of the organic acid salt of a transition metal having a melting point of 100°C to 350°C include nickel acetate, manganese acetate, cobalt acetate, and manganese citrate.

An organic acid salt of an alkali metal is preferably further mixed with the citric acid complex aqueous solution of at least one of Ti, Zr, and Nb. Preferable examples of the organic acid salt of an alkali metal include lithium acetate and lithium citrate. Mixing the organic acid salt of an alkali metal at this stage is preferable due to a simple manufacturing method.

### (b) Second step

In this step, the mixture obtained in the first step is melted at 100°C to 350°C, preferably 200 to 300°C.

### (c) Third step

In this step, the heated molten substance (slurry) obtained in the second step is subjected to pyrolysis at a temperature equal to or higher than the melting point of the organic acid salt of a transition metal used in the first step to obtain a pyrolysate as a dry powder. When the melting points of a plurality of organic acid salts of a transition metal are different from each other, pyrolysis is performed at the highest melting point or higher. For more details, the molten substance can be heated and sprayed at 200 to 600°C, more preferably 200 to 400°C using a spray device.

### (d) Fourth step

In this step, the pyrolysate obtained in the third step is calcined at 600 to 1200°C, more preferably 800 to 1100°C for 5 to 20 hours, preferably 10 to 15 hours. Before calcination, temporary calcination may be performed. In this case, the temporary calcination can be performed at 200 to 700°C, more preferably 300 to 600°C for 1 to 10 hours, more preferably 2 to 6 hours. In this way, the solid solution active material of the composition formula (1) of the present embodiment is obtained.

### (2) Preparation of positive electrode active material (coating the surface of solid solution active material with alumina)

The step of preparation of the positive electrode active material (the step of coating the surface of the solid solution active material with alumina) includes a fifth step of mixing the solid solution active material obtained in the above-described "preparation of the solid solution active material of the composition formula (1)" with an aluminum nitrate solution at pH of 7 to 8; a sixth step of drying the solid solution active material precursor obtained in the fifth step; and a seventh step of calcining the dry solid solution active material precursor obtained in the sixth step at a temperature of 450°C ± 50°C. The Al₂O₃ layer formed in a part or the whole (50 to 100%) of the surface of the solid solution active material particles through these steps preferably has high mobility of Li ions, and preferably suppresses the elution of the transition metal highly. Furthermore, by performing a precipitation reaction of aluminum hydroxide at pH of 7 to 8 and setting the calcination temperature to 450°C ± 50°C, preferably 420°C to 480°C, it is possible to manufacture the solid solution active material in which the Al₂O₃ layer is present in a part or the whole (50 to 100%) of the surface of the solid solution active material particles and Al element has invaded the surface layer of the solid solution active material particles (that is, the positive electrode active material of the present embodiment). As a result, a battery having excellent performance and durability can be provided. Hereinafter, each step will be described.

### (e) Fifth step

In this step, the solid solution active material obtained in the fourth step is mixed with an aluminum nitrate solution at pH of 7 to 8. The solid solution active material precursor can be thereby obtained.

As a raw material of aluminum, aluminum nitrate is preferable. This is because a nitrate ion can be decomposed and removed in the calcination step (seventh step) and a battery using the positive electrode active material has thereby excellent performance. When aluminum sulfate or aluminum chloride is used, a sulfate ion or a chloride ion remains. A battery using the positive electrode active material has lower performance. Aluminum acetate is not suitable for the present method (precipitation reaction).

It is only required to appropriately adjust the blending amount of aluminum nitrate as a raw material of aluminum (Al₂O₃ layer) so as to be the above content of Al₂O₃ of the positive electrode active material.

In this step, a precipitant is further used. As the precipitant, ammonium water is preferable. This is because an ammonium ion can be decomposed and removed in the calcination step (seventh step) and a battery using the positive electrode active material has thereby excellent performance. When sodium hydroxide is used, Na remains as impurities of the positive electrode active material. A battery using the positive electrode active material has lower performance.

When the pH at the time of mixing of the solid solution active material, the aluminum nitrate solution, and ammonium water as a precipitant is less than 7, a reaction between aluminum nitrate and ammonium water is not performed sufficiently, aluminum hydroxide is precipitated badly, and a desired coat amount cannot be obtained with respect to the charged amount. On the other hand, when the pH is more than 8, aluminum hydroxide is dissolved again, and a desired coat amount cannot be obtained with respect to the charged amount.

The mixing temperature and mixing time are not particularly limited as long as the reaction between aluminum nitrate and ammonium water is performed sufficiently and a desired solid solution active material precursor (the solid solution active material on the surface of which aluminum hydroxide is precipitated) is formed by the mixing operation. As a guide, the mixing temperature (solution temperature of the reaction system) can be 20 to 50°C, and the mixing time can be 30 minutes to 3 hours. After mixing, the resulting solid solution active material precursor may be soaked in the solution for about 3 hours or less. This forms a preferable coat of an alumina layer. Charge-discharge characteristics and cycle durability are improved.

A mixing method (device) is not particularly limited. A mixing and stirring method (device) known in the art can be used.

### (f) Sixth step

In this step, the solid solution active material precursor obtained in the fifth step is dried.

First, the solid solution active material precursor is filtered from the mixed solution of the fifth step. A filtering method (device) is not particularly limited. A filtering method (device) known in the related art can be used.

Subsequently, the filtered solid solution active material precursor is dried. Drying conditions are not particularly limited as long as the solid solution active material precursor can be dried sufficiently. That is, when the steps from drying to calcination are performed continuously, the drying step (sixth step) may not be distinguished from the calcination step (seventh step) strictly. This is because the steps from drying to calcination may be performed at predetermined calcination temperature. From the above, as the drying conditions, the drying temperature can be 80 to 200°C, and the drying time can be 30 minutes to 12 hours, preferably 1 to 6 hours. An atmosphere during drying is not particularly limited. Drying can be performed in the air atmosphere or the like.

A drying method (device) is not particularly limited. A drying method (device) known in the art can be used. Specifically, for example, it is possible to use vacuum drying, hot air drying, infrared (IR) drying, and natural drying appropriately in combination thereof.

### (g) Seventh step

In this step, the solid solution active material precursor obtained in the sixth step is calcined at a temperature of 450°C ± 50°C.

As the calcination conditions of the solid solution active material precursor, by performing the calcination at calcination temperature of 450°C ± 50°, preferably 420°C to 480°C, for 1 to 12 hours, preferably 2 to 6 hours, it is possible to manufacture the solid solution active material in which the Al₂O₃ layer is present in a part or the whole (50 to 100%) of the surface of the solid solution active material particles and A1 element has invaded the surface layer of the solid solution active material particles (that is, the positive electrode active material of the present embodiment). When the calcination temperature is lower than 400°C, decomposition of aluminum hydroxide is not sufficient, a desired Al₂O₃ coat layer cannot be formed, and a battery using the positive electrode active material has poor durability. On the other hand, when the calcination temperature is higher than 500°C, the Al₂O₃ layer becomes dense, mobility of Li ions is lowered, and a battery using the positive electrode active material has poor performance. An atmosphere during calcination is not particularly limited. Calcination can be performed in the air atmosphere or the like.

A calcination method (device) is not particularly limited. A calcination method (device) known in the art can be used.

The positive electrode active material of the present embodiment and the method for manufacturing the same have been described hereinabove. Hereinafter, components (conductive aid, binder, or the like) of the positive electrode, other than the positive electrode active material, and components (negative electrode, electrolyte layer, outer casing material, or the like) of a battery using the positive electrode, other than the positive electrode, will be described.

### (Conductive aid)

The conductive aid means an additive blended in order to enhance conductivity of the active material layer. When the positive electrode active material layer contains a conductive material, an electron network inside the positive electrode active material layer is formed effectively, and the output characteristics of a battery can be improved.

The conductive aid is not particularly limited. However, examples thereof include carbon powder such as acetylene black, carbon black, channel black, thermal black, Ketjen black, or graphite, various carbon fibers such as a vapor grown carbon fiber (VGCF; registered trademark), and expanded graphite.

The content of the conductive aid with respect to the total amount of the positive electrode active material layer is normally 0 to 30% by mass, preferably 1 to 10% by mass, more preferably 3 to 7% by mass.

### (Binder)

The binder is added in order to bind the components in the active material layer or to bind the active material layer to the current collector so as to maintain the electrode structure.

The binder is not particularly limited. However, examples thereof include polyvinylidene fluoride (PVdF), carboxymethylcellulose (CMC), polytetrafluoroethylene (PTFE), polyvinyl acetate, an acrylic resin, polyimide, an epoxy resin, a polyurethane resin, a urea resin, and a synthetic rubber-based binder such as styrene-butadiene rubber (SBR).

The content of the binder with respect to the total amount of the positive electrode active material layer is normally 0 to 50% by mass, preferably 5 to 45% by mass, more preferably 10 to 25% by mass, particularly preferably 15 to 20% by mass.

### [Negative electrode]

The negative electrode generates electric energy through transfer of lithium ions together with the positive electrode. The negative electrode essentially contains a current collector and a negative electrode active material layer. The negative electrode active material layer is formed on a surface of the current collector.

### (Current collector)

The current collector which can be used for the negative electrode is similar to the current collector which can be used for the positive electrode. Therefore, description thereof will be omitted here.

### (Negative electrode active material layer)

The negative electrode active material layer contains a negative electrode active material. The negative electrode active material layer may further contain an additive such as a conductive aid or a binder.

### (Negative electrode active material)

The negative electrode active material has a composition which can release lithium ions during discharge and absorb lithium ions during charge. The negative electrode active material is not particularly limited as long as the negative electrode active material can absorb or release lithium reversibly. However, preferable examples thereof include a metal such as Si or Sn, a metal oxide such as TiO, Ti₂O₃, TiO₂, SiO₂, SiO, or SnO₂, a composite oxide of lithium and a transition metal such as Li_{4/3}Ti_{5/3}O₄ or Li₇MnN, a Li-Pb based alloy, a Li-Al based alloy, Li, a carbon material such as carbon powder, natural graphite, artificial graphite, carbon black, activated carbon, carbon fiber, coke, soft carbon, or hard carbon. Among these substances, by using an element to form an alloy with lithium, it is possible to obtain a battery having a high capacity and excellent output characteristics and having a higher energy density than conventional carbon-based materials. The negative electrode active materials may be each used alone, or may be used in a form of a mixture of two or more kinds thereof. The element to form an alloy with lithium is not limited to the following elements. However, specific examples thereof include Si, Ge, Sn, Pb, Al, In, Zn, H, Ca, Sr, Ba, Ru, Rh, Ir, Pd, Pt, Ag, Au, Cd, Hg, Ga, Tl, C, N, Sb, Bi, O, S, Se, Te, and Cl.

Among the negative electrode active materials, a negative electrode active material containing a carbon material and/or at least one element selected from the group consisting of Si, Ge, Sn, Pb, Al, In, and Zn is preferable. A negative electrode active material containing a carbon material, Si, or Sn is more preferable. A carbon material is particularly preferably used.

As the carbon material, carbonaceous particles having a low discharge potential with respect to lithium is preferable. Examples thereof include natural graphite, artificial graphite, a blend of natural graphite and artificial graphite, a material obtained by coating natural graphite with amorphous carbon, soft carbon, and hard carbon. The shape of the carbonaceous particle is not particularly limited, and may be massive, spherical, fibrous, or the like. However, preferably, the shape is not scaly. The shape is preferably spherical or massive. A carbonaceous particle not having a scaly shape is preferable from viewpoints of performance and durability.

In addition, as a carbonaceous particle, the carbonaceous particle the surface of which is covered with amorphous carbon is preferable. In this case, the whole surface of the carbonaceous particle is more preferably covered with the amorphous carbon. However, only a part thereof may be covered. By covering the surface of the carbonaceous particle with the amorphous carbon, it is possible to prevent graphite and an electrolyte solution from reacting with each other during charge and discharge of a battery. A method for covering the surface of graphite particles with amorphous carbon is not particularly limited. An example thereof is a wet method. In the wet method, carbonaceous particles (powder) serving as a core are dispersed in and mixed with a mixed solution in which amorphous carbon is dissolved or dispersed in a solvent, and then the solvent is removed. Other examples thereof include a dry method and a gas phase method such as a CVD method. In the dry method, solid carbonaceous particles are mixed with solid amorphous carbon, and a mechanical energy is added to the resulting mixture so that the carbonaceous particles are covered with the amorphous carbon. It is possible to confirm by laser spectroscopy or the like that the carbonaceous particles are covered with the amorphous carbon.

A BET specific surface area of the negative electrode active material is preferably 0.8 to 1.5 m²/g. When the specific surface area is within the above range, cycle characteristics of a non-aqueous electrolyte secondary battery can be improved. A tap density of the negative electrode active material is preferably 0.9 to 1.2 g/cm³. The tap density within the above range is preferable from a viewpoint of an energy density.

From the above, it is desirable that the surface of the negative electrode active material is covered with an amorphous carbon layer, the negative electrode active material is made of a graphite material not having a scaly shape, the negative electrode material has a BET specific surface area of 0.8 to 1.5 m²/g and a tap density of 0.9 to 1.2 g/cm³. This is because it is desirable in a non-aqueous electrolyte solution secondary battery using the above-described positive electrode active material to control the BET specific surface area or material properties in order to improve diffusion of Li ions into a graphite layered structure and to improve a cycle life as the negative electrode active material.

The average particle diameter of the negative electrode active material is not particularly limited, but is preferably 1 to 100 µm, more preferably 1 to 20 µm from viewpoints of increase in capacity, reactivity, and cycle durability of the negative electrode active material.

### (Conductive aid)

The conductive aid which can be used for the negative electrode is similar to the conductive aid which can be used for the positive electrode. Therefore, description thereof will be omitted here.

### (Binder)

The binder which can be used for the negative electrode is similar to the binder which can be used for the positive electrode. Therefore, description thereof will be omitted here.

### [Electrolyte layer]

The electrolyte layer functions as a spacial partition wall (spacer) between the positive electrode and the negative electrode. In addition to this function, the electrolyte layer also holds an electrolyte which is a moving medium of lithium ions between the positive and negative electrodes during charge and discharge. The electrolyte forming the electrolyte layer is not particularly limited. It is possible to appropriately use a liquid electrolyte and a polymer electrolyte such as a polymer gel electrolyte or a polymer solid electrolyte. In the present embodiment, the liquid electrolyte is preferable.

In the liquid electrolyte, a lithium salt is dissolved in an organic solvent. From a viewpoint of dissolving the Li salt, preferable examples of the organic solvent include at least one of dimethyl carbonate (DMC), diethyl carbonate (DEC), dipropyl carbonate (DPC), methylpropyl carbonate (MPC), ethylpropyl carbonate (EPC), methyl ethyl carbonate (MEC), ethylene carbonate (EC), propylene carbonate (PC), butylene carbonate (BC), fluorine-containing cyclic carbonate (such as fluoroethylene carbonate (FEC)), fluorine-containing chain carbonate, fluorine-containing chain ether, and fluorine-containing chain ester.

As the lithium salt, it is preferable to use at least LiPF₆. In addition, LiN(SO₂C₂F₅)₂, LiN(SO₂CF₃)₂, LiBF₄, LiClO₄, LiAsF₆, LiSO₃CF₃, or the like can be used. The concentration of the lithium salt is preferably 0.1 to 5 mol/L, more preferably 0.1 to 2 mol/L.

Furthermore, in the case of the liquid electrolyte, it is preferable to contain as an additive at least one selected among organic sulfone compounds, organic disulfone compounds, vinylene carbonate derivatives, ethylene carbonate derivatives, ester derivatives, dihydric phenol derivatives, terphenyl derivatives, phosphate derivatives, and lithium fluorophosphate derivatives. By containing these additives, a film (SEI) is formed on the surface of the negative electrode active material, and the cycle life can be improved advantageously. Among these additives, lithium fluorophosphate derivatives such as lithium monofluorophosphate or lithium difluorophosphate are more preferable. As to the compound (additive) added to the liquid electrolyte (electrolyte solution), examples of the organic sulfone compounds (sultone derivatives, cyclic sulfonates) include 1,3-propane sultone (saturated sultone) and 1,3-propene sultone (unsaturated sultone); examples of the organic disulfone compounds (disultone derivatives, cyclic disulfonate) include methylene methane disulfonate; examples of the vinylene carbonate derivatives include vinylene carbonate (VC); examples of the ethylene carbonate derivatives include fluoroethylene carbonate (FEC); examples of the ester derivatives include 4-biphenylyl acetate, 4-biphenylyl benzoate, 4-biphenylyl benzyl carboxylate, and 2-biphenylyl propionate; examples of the dihydric phenol derivatives include 1,4-diphenoxy benzene and 1,3-diphenoxy benzene; examples of the ethylene glycol derivatives include 1,2-diphenoxy ethane, 1-(4-biphenylyloxy)-2-phenoxy ethane, and 1-(2-biphenylyloxy)-2-phenoxy ethane; examples of the terphenyl derivatives include o-terphenyl, m-terphenyl, p-terphenyl, 2-methyl-o-terphenyl, and2,2-dimethyl-o-terphenyl; examples of the phosphate derivatives include triphenyl phosphate; examples of the lithium fluorophosphate derivatives include lithium monofluorophosphate and lithium difluorophosphate. However, the present embodiment is not limited in any way thereto. Use of these additives is preferable from viewpoints of performance and life characteristics. The additive is contained in the electrolyte solution preferably at 0.1 to 5% by mass, more preferably at 0.5 to 3.5% by mass.

Meanwhile, the polymer electrolyte is classified into the gel electrolyte containing an electrolyte solution and the polymer solid electrolyte not containing an electrolyte solution.

In the gel electrolyte, the above-described liquid electrolyte is injected into a matrix polymer having lithium ion conductivity. Examples of the matrix polymer having lithium ion conductivity include polyethylene oxide (PEO), polypropylene oxide (PPO), and a copolymer thereof. An electrolyte salt such as a lithium salt can be dissolved well in such a matrix polymer.

When the electrolyte layer is formed by a liquid electrolyte or a gel electrolyte, a separator may be used in the electrolyte layer. A specific form of the separator is, for example, a microporous film made of a polyolefin such as polyethylene or polypropylene, a hydrocarbon such as polyvinylidenefluoride-hexafluoropropylene (PVdF-HFP), glassfiber, or the like.

In the polymer solid electrolyte, a lithium salt is dissolved in the above-described matrix polymer. The polymer solid electrolyte does not contain an organic solvent. Therefore, when the electrolyte layer is formed by the polymer solid electrolyte, there is no risk of liquid leakage from a battery, and reliability of the battery can be improved.

The matrix polymer of the polymer gel electrolyte or the polymer solid electrolyte can exhibit excellent mechanical strength by forming a crosslinked structure. In order to form the crosslinked structure, using an appropriate polymerization initiator, a polymerizable polymer for forming a polymer electrolyte (for example, PEO or PPO) can be subjected to a polymerization treatment such as thermal polymerization, ultraviolet polymerization, radiation polymerization, or electron beam polymerization. The above-described electrolyte may be contained in an active material layer of an electrode.

### [Current collecting plate (tab)]

In the lithium ion secondary battery, in order to extract a current outside the battery, a current collecting plate (tab) electrically connected to the current collector is taken out of the laminate film serving as an outer casing material.

A material for forming the current collecting plate is not particularly limited, and a known highly conductive material conventionally used for a current collecting plate for a lithium ion secondary battery can be used. Preferable examples of the material for forming the current collecting plate include a metal material such as aluminum, copper, titanium, nickel, stainless steel (SUS), or an alloy thereof. From viewpoints of light weightiness, corrosion resistance, and high conductivity, aluminum and copper are more preferable, and aluminum is particularly preferable. The same material or different materials can be used for the positive electrode current collecting plate (positive electrode tab) and the negative electrode current collecting plate (negative electrode tab).

### [Sealing portion]

A sealing portion is a member specific to a series laminated type battery, and prevents leakage of an electrolyte layer. In addition to this, the sealing portion can prevent contact between current collectors adjacent to each other in the battery, or can prevent short circuit caused by slightly irregular ends of the laminated electrodes.

A material for forming the sealing portion is not particularly limited. However, examples thereof include a polyolefin resin such as polyethylene or polypropylene, an epoxy resin, rubber, and polyimide. Among these materials, the polyolefin resin is preferably used from viewpoints of corrosion resistance, chemical resistance, a film forming property, economical efficiency, and the like.

### [Positive electrode terminal lead and negative electrode terminal lead]

A lead used in a known laminated type secondary battery can be used as a material of a negative electrode terminal lead and a positive electrode terminal lead. A portion taken out from a battery outer casing material is preferably covered with a heat resistant and insulating heat-shrinkable tube or the like so that the part has no influence on a product (for example, an automobile component, in particular, an electronic device or the like) according to electric leak due to contact with neighboring instruments, wiring, or the like.

### [Outer casing material; laminate film]

As the outer casing material, a metal can case conventionally known can be used. In addition, the laminate film 22 illustrated in FIG. 1 may be used as an outer casing material to pack the power generating element 17. The laminate film can have a three-layer structure formed by laminating polypropylene, aluminum, and nylon in this order. By using such a laminate film, it is possible to open the outer casing material, add a capacity recovering material, and reseal the outer casing material easily.

### [Method for manufacturing non-aqueous electrolyte secondary battery]

A method for manufacturing a non-aqueous electrolyte secondary battery is not particularly limited. The non-aqueous electrolyte secondary battery can be manufactured by a known method. Specifically, the method includes (1) manufacturing an electrode, (2) manufacturing a unit battery layer, (3) manufacturing a power generating element, and (4) manufacturing a laminated type battery. Hereinafter, the method for manufacturing a non-aqueous electrolyte secondary battery will be described using an example, but is not limited thereto.

### (1) Manufacturing an electrode (positive electrode and negative electrode)

An electrode (positive electrodes or negative electrode) can be manufactured, for example, by preparing an active material slurry (positive electrode active material slurry or negative electrode active material slurry), coating a current collector with the active material slurry, and drying and then pressing the active material slurry. The active material slurry contains the above-described active material (positive electrode active material or negative electrode active material) and a solvent. The active material slurry may further contain a conductive aid and a binder. The positive electrode active material slurry essentially contains the above-described positive electrode active material having a specific composition and structure. Therefore, the present embodiment also provides a positive electrode.

The solvent is not particularly limited. Examples thereof include N-methyl-2-pyrrolidone (NMP), dimethylformamide, dimethylacetamide, methylformamide, cyclohexane, hexane, and water.

A method for coating the current collector with the active material slurry is not particularly limited. Examples thereof include a screen printing method, a spray coating method, an electrostatic spray coating method, an inkjet method, and a doctor blade method.

A method for drying the coating film formed on the surface of the current collector is not particularly limited as long as at least a part of the solvent in the coating film is removed. Examples thereof include heating. Drying conditions (drying time, drying temperature, or the like) can be appropriately set in accordance with a volatilization rate of a solvent contained in a utilized active material slurry, a coating amount of the active material slurry, or the like. A part of the solvent may remain. The remaining solvent can be removed in a pressing step described later, or the like.

A pressing method is not particularly limited. Examples thereof include calender roll and flat plate press.

### (2) Manufacturing unit battery layer

A unit battery layer can be manufactured by laminating the electrodes (positive electrode and negative electrode) manufactured in (1) through the electrolyte layer.

### (3) Manufacturing power generating element

A power generating element can be manufactured by laminating the unit battery layers while an output and a capacity of the unit battery layer, an output and a capacity required for a battery, and the like are taken into account appropriately.

### (4) Manufacturing laminated type battery

It is possible to use various shapes such as a rectangular shape, a paper type, a laminated type, a cylindrical type, or a coin type for the battery. A current collector, an insulating plate, or the like as a component is not particularly limited, and can be selected according to the above-described shape. However, in the present embodiment, a laminated type battery is preferable. In the laminated type battery, a lead is bonded to the current collector of the power generating element obtained above, and the positive electrode lead or the negative electrode lead is bonded to a positive electrode tab or a negative electrode tab. The power generating element is then put into the laminate sheet such that the positive electrode tab and the negative electrode tab are exposed to the outside of the battery. An electrolyte solution is injected thereinto using an injector and vacuum sealed. The laminated type battery can be thereby manufactured.

### (5) Activation treatment or the like

In the present embodiment, it is desirable to further perform an initial charge treatment, a gas removing treatment, and an activation treatment under the following conditions from a viewpoint of improving performance and durability of the laminated type battery obtained above (refer to Example 1). In this case, in order to be able to perform the gas removing treatment, in the above (4) manufacturing laminated type battery, at the time of sealing, three sides of the laminate sheet (outer casing material) are completely sealed (regularly sealed) by thermocompression bonding into a rectangular shape, and the remaining one side is temporarily sealed by thermocompression bonding. The remaining one side, for example, may be freely opened or closed by clipping or the like. However, it is preferable to temporarily seal the one side by thermocompression bonding from a viewpoint of mass production (productivity). This is because this case only requires adjusting the temperature and the pressure for bonding. When the side is temporarily sealed by thermocompression bonding, the side can be unsealed by applying a slight pressure. After degassing, the side may be temporarily sealed again by thermocompression bonding. Finally, the side can be completely sealed (regularly sealed) by thermocompression bonding.

### (Initial charge treatment)

It is desirable to perform an aging treatment of the battery as follows. Charging is performed at 25°C at 0.05 C for 4 hours (SOC: about 20%) by a constant current charging method. Subsequently, the battery is charged at 25°C at 0.1 C rate to 4.45 V. Thereafter, charging is stopped, and the battery is allowed to stand in the state (SOC: about 70%) about for two days (48 hours).

### (Initial (first) gas removing treatment)

Next, as an initial (first) gas removing treatment, the following treatment is performed. First, the one side temporarily sealed by thermocompression bonding is unsealed. Gas is removed at 10 ± 3 hPa for five minutes. Thereafter, the one side is subjected to thermocompression bonding again to perform temporary sealing. In addition, pressure molding (contact pressure: 0.5 ± 0.1 MPa) is performed using a roller to make the electrode adhere to the separator sufficiently.

### (Activation treatment)

Next, as the activation treatment method, the following electrochemical pretreatment method is performed.

First, two cycles of charging at 25°C at 0.1 C until the voltage becomes 4.45 V by a constant current charging method and thereafter, discharging at 0.1 C to 2.0 V, are performed. Similarly, one cycle of charging at 25°C at 0.1 C until the voltage becomes 4.55 V by a constant current charging method, and then discharging at 0.1 C to 2.0 V, and one cycle of charging at 0.1 C until the voltage becomes 4.65 V and thereafter, discharging at 0.1 C to 2. 0 V, are performed. Furthermore, one cycle of charging at 25°C at 0.1 C until the voltage becomes 4.75 V by a constant current charging method and then discharging at 0.1 C to 2.0 V, can be performed.

. Here, as the activation treatment method, an electrochemical pretreatment method where the constant current charging method is used and the voltage is used as a stop condition has been described as an example. However, as the charging method, a constant current constant voltage charging method may be used. In addition to the voltage, a charge amount or time may be used as the stop condition.

### (Last (second) gas removing treatment)

Next, as an initial (first) gas removing treatment, the following treatment is performed. First, the one side temporarily sealed by thermocompression bonding is unsealed. Gas is removed at 10 ± 3 hPa for five minutes. Thereafter, the one side is subjected to thermocompression bonding again to perform regular sealing. In addition, pressure molding (contact pressure: 0.5 ± 0.1 MPa) is performed using a roller to make the electrode adhere to the separator sufficiently.

In the present embodiment, it is possible to enhance performance and durability of the obtained battery by performing the above-described initial charge treatment, gas removing treatment, and activation treatment.

### EXAMPLES

Hereinafter, the present embodiment will be described more specifically with Examples, Reference Examples and Comparative Examples.

In the following Reference Examples 1 to 5, the solid solution active materials had the same composition and Al₂O₃ amounts were different from one another.

### [REFERENCE EXAMPLE 1]

### (Preparation of solid solution active material C1)

1. To 200 g of pure water were added 20.84 g of manganese sulphate monohydrate (molecular weight 223.06 g/mol), 14.04 g of nickel sulfate hexahydrate (molecular weight 262.85 g/mol), and 15.02 g of cobalt sulfate heptahydrate (molecular weight 281.10 g/mol). The resulting mixture was stirred and dissolved to prepare a mixed solution.

2. Subsequently, ammonia water was dropwise added to the mixed solution until the pH became 7. A Na₂CO₃ solution was further dropwise added thereto, and a composite carbonate was precipitated (the pH was maintained to 7 with ammonia water while the Na₂CO₃ solution was dropwise added).

3. Thereafter, the precipitate was subjected to suction filtration, washed with water sufficiently, and then dried at 120°C for 5 hours in a dry oven.

4. The dry powder was pulverized with a mortar, and then subjected to temporary calcination at 500°C for 5 hours.

5. With the powder subjected to temporary calcination, 10.08 g of lithium hydroxide monohydrate (molecular weight 41.96 g/mol) was mixed. The resulting mixture was pulverized and mixed for 30 minutes.

6. This powder was subjected to temporary calcination at 500°C for 2 hours. Thereafter, the powder was subjected to calcination at 900°C for 12 hours to obtain solid solution active material C1.

The composition of solid solution active material C1 obtained in this way is as follows.

### [Numerical formula 3]

### Composition formula; Li_{1.5}[Ni_{0.40}Mn_{0.60}Co_{0.40}[Li]_{0.1}]O_{z}

When this composition formula is applied to the composition formula (1), e = 0, a + b + c + d + e = 1.5, d = 0.1, a + b + c + e = 1.40, and z represents the number of oxygen atoms satisfying an atomic valence, meeting the requirement of the composition formula (1).

### (Preparation of positive electrode active material C1 : Al₂O₃ coating onto the surface of solid solution active material C1)

1. To 100 g of pure water, 10.0 g of solid solution active material C1 obtained in the above "Preparation of solid solution active material C1" and 0.37 g of aluminum nitrate.nonahydrate (molecular weight 375.13 g/mol) were added, and stirred and mixed to prepare a mixed solution.

2. Subsequently, 5%-ammonia water was dropwise added to this mixed solution gradually while the mixed solution was stirred until the pH became 7 to 8. Aluminum hydroxide was precipitated on the surface of the particles of solid solution active material C1. Stirring and mixing were further continued for 5 hours.

3. Thereafter, the precipitate was subjected to suction filtration and washed with water sufficiently. Thereafter, the precipitate was dried at 100°C for 1 hour in a dry oven.

4. The dry powder was pulverized with a mortar, and then subjected to temporary calcination at 450°C for 5 hours to obtain positive electrode active material C1.

Positive electrode active material C1 obtained in this way was powder in which the surface of the particles of solid solution active material C1 obtained in the above "Preparation of solid solution active material C1" was coated with 0.5% by mass of Al₂O₃ with respect to the total amount of positive electrode active material C1. The average particle diameter of obtained positive electrode active material C1 was 8 µm. The average particle diameters of positive electrode active materials C2 to 20 obtained in other Reference Examples 2 to 13, Examples 14 to 19 and Comparative Example 1 were the same as that of Reference Example 1.

### (Morphological observation and surface analysis)

- An X-ray diffraction measurement was performed using XPertPRO MPD manufactured by PANalytical Inc.

The crystal structure and crystallinity of obtained positive electrode active material C1 were evaluated by X-ray diffraction. A Cu-Kα ray was used for an X-ray source. The measurement was performed under the conditions of tube voltage 40 KV, tube current 20 mA, scanning speed 2°/min, divergence slit width 0.5°, and light receiving slit width 0.15° (refer to FIGS. 8(a) to (d)).

- An HAADF-STEM measurement was performed using model: HD-2700 manufactured by Hitachi High-Technologies Corporation.
- A TEM-EDX measurement was performed using model: H-8100 manufactured by Hitachi High-Technologies Corporation + EDX (Genesis 4000 manufactured by EDAX Inc.).
- An SEM-EDX measurement was performed using ULTRAplus manufactured by CarlZeiss Corporation + EDX (QUANTAX Flash 5010 manufactured by Bruker Corporation).

### (Structural analysis)

- An XPS measurements was performed using Quantum 2000 manufactured by ULVAC-PHI, Incorporated.

### (Preparation of positive electrode C1 in which an active material layer is formed on one surface of current collecting foil)

### (Composition of slurry for positive electrode)

The slurry for a positive electrode had the following composition.

Positive electrode active material: positive electrode active material C1 obtained above 9.2 parts by weight
Conductive aid:
   scaly-shaped graphite 0.2 parts by weight
   Acetylene black 0.2 parts by weight
Binder: polyvinylidene fluoride (PVDF) 0.4 parts by weight
Solvent: N-methyl-2-pyrrolidone (NMP) 8.2 parts by weight.

### (Manufacturing slurry for positive electrode)

The slurry for a positive electrode having the above-described composition was prepared as follows. First, 2.0 parts by weight of a 20% binder solution in which a binder was dissolved in a solvent (NMP) and 4.0 parts by weight of the solvent (NMP) were added to a 50 ml disposable cup. The resulting mixture was stirred with a stirring deaerator (rotating and revolving mixer: Awatori Rentaro AR-100) for one minute to manufacture a binder diluted solution. Subsequently, 0.4 parts by weight of a conductive aid, 9.2 parts by weight of positive electrode active material C1, and 2.6 parts by weight of the solvent (NMP) were added to this binder diluted solution. The resulting mixture was stirred for 3 minutes using the stirring deaerator to obtain a slurry for a positive electrode (solid concentration: 55% by weight).

### (Coating and drying slurry for positive electrode)

One surface of aluminum current collecting foil having a thickness of 20 µm was coated with the slurry for a positive electrode using an automatic coating device (doctor blade: PI-1210 automatic coating apparatus manufactured by Tester Sangyo Co., Ltd.). Subsequently, this current collecting foil coated with the slurry for a positive electrode was dried using a hot plate (100°C to 110°C, drying time: 30 minutes) to form a sheet-like positive electrode having a remaining NMP amount of 0.02% by weight or less in the positive electrode active material layer.

### (Press of positive electrode)

The above sheet-like positive electrode was subjected to compression molding by applying a roller press, and cut to manufacture positive electrode C1 having a weight of one surface of the positive electrode active material layer of about 11.0 mg/cm² and a density of 2.65 g/cm³.

### (Drying positive electrode)

Subsequently, positive electrode C1 was dried in a vacuum drying furnace. Positive electrode C1 was disposed in the drying furnace, and then the pressure was reduced (100 mmHg (1.33 × 10⁴ Pa)) at room temperature (25°C) to remove the air in the drying furnace. Subsequently, the temperature was raised to 120°C at 10°C/min while nitrogen gas was circulated (100 cm³/min), and the pressure was reduced again at 120°C. Positive electrode C1 was allowed to stand for 12 hours while nitrogen in the furnace was discharged, and then the temperature was lowered to room temperature. Positive electrode C1 from the surface of which water had been removed was obtained in this way.

### (Preparation of negative electrode A1 in which active material layer is formed on one surface of current collecting foil)

### (Composition of slurry for negative electrode)

The slurry for a negative electrode had the following composition.

Negative electrode active material: natural graphite 9.4 parts by weight
Conductive aid: acetylene black 0.1 parts by weight
Binder: polyvinylidene fluoride (PVDF) 0.5 parts by weight
Solvent: N-methyl-2-pyrrolidone (NMP) 10.0 parts by weight.

### (Manufacturing slurry for negative electrode)

The slurry for a negative electrode having the above-described composition was prepared as follows. First, 5 parts by weight of (NMP) was added to 2.5 parts by weight of a 20% binder solution in which a binder was dissolved in the solvent (NMP). The resulting mixture was stirred with a stirring deaerator for one minute to manufacture a binder diluted solution. To this binder diluted solution, 0.1 parts by weight of a conductive aid, 9.4 parts by weight of negative electrode active material powder, and 3.0 parts by weight of the solvent (NMP) were added. The resulting mixture was stirred for 3 minutes using the stirring deaerator to obtain a slurry for a negative electrode (solid concentration: 50% by weight).

It was confirmed by SEM that the shape of the natural graphite powder of the negative electrode active material was not scaly. The specific surface area was 1.05 m²/g (measurement device: BELSORP-mini II manufactured by Bel Japan), and the tap density was 1.1 g/cm³ (measurement device: tap density measurement device manufactured by Nippon Rufuto Co., Ltd.). The average particle diameter of the obtained negative electrode active material was 24 µm.

### (Coating and drying slurry for negative electrode)

One surface of electrolytic copper current collecting foil having a thickness of 10 µm was coated with the slurry for a negative electrode using an automatic coating device. Subsequently, this current collecting foil coated with the slurry for a negative electrode was dried using a hot plate (100°C to 110°C, drying time: 30 minutes) to form a sheet-like negative electrode having a remaining NMP amount of 0.02% by weight or less in the negative electrode active material layer.

### (Press of negative electrode)

The obtained sheet-like negative electrode was subjected to compression molding by applying a roller press, and cut to manufacture negative electrode A1 having a weight of one surface of the negative electrode active material layer of about 9.50 mg/cm² and a density of 1.45 g/cm³. When the surface of negative electrode A1 was observed, generation of crack was not observed.

### (Drying electrode)

Subsequently, negative electrode A1 manufactured by the above procedure was dried in a vacuum drying furnace. Negative electrode A1 was disposed in the drying furnace, and then the pressure was reduced (100 mmHg (1.33 × 10⁴ Pa)) at room temperature (25°C) to remove the air in the drying furnace. Subsequently, the temperature was raised to 135°C at 10°C/min while nitrogen gas was circulated (100 cm³/min), and the pressure was reduced again at 135°C. Negative electrode A1 was allowed to stand for 12 hours while nitrogen in the furnace was discharged, and then the temperature was lowered to room temperature. Negative electrode A1 from the surface of which water had been removed was obtained in this way.

### [Manufacturing battery]

Positive electrode C1 obtained above was cut so as to have an active material layer area of length 2.5 cm × width 2.0 cm. Uncoated surfaces (surfaces of aluminum current collecting foil, not coated with slurry) of these two pieces were stuck to each other such that the current collectors thereof face each other, and the current collecting foil part was subjected to spot welding. A positive electrode having active material layers formed on both surfaces of the two-layered current collecting foil integrated by spot welding in the outer periphery thereof, was thereby formed. Thereafter, a positive electrode tab (positive electrode current collecting plate) of aluminum was welded to the current collecting foil part to form positive electrode C11. That is, positive electrode C11 has the active material layers formed on both surfaces of the current collecting foil. Negative electrode A1 obtained above was cut so as to have an active material layer area of length 2.7 cm × width 2.2 cm. Thereafter, a negative electrode tab of electrolytic copper was welded to the current collecting foil part to form negative electrode A11. That is, negative electrode A11 has the active material layer formed on one surface of the current collecting foil.

A five-layered laminated type power generating element was manufactured by sandwiching a separator (S) made of porous polypropylene (length 3. 0 cm × width 2.5 cm, thickness 25 µm, porosity 55%) between these negative electrode A11 and positive electrode C11 to which tabs had been welded. The laminated type power generating element had a structure of negative electrode (one surface)/separator/positive electrode (both surfaces)/separator/negative electrode (one surface), that is, a structure in which A11, (S), C11, (S), and A11 were laminated in this order. Subsequently, both sides thereof were sandwiched by a laminate film made of aluminum (length 3.5 cm × width 3.5 cm). Three sides thereof were sealed by thermocompression bonding to house the power generating element. Into this power generating element, 0.4 cm³/cell (the above five layered structure has a two-cell structure and an injection amount per cell was 0.4 cm³) of an electrolyte solution was injected. Thereafter, the remaining one side was temporarily sealed by thermocompression bonding to manufacture a laminate type battery. In order to make the electrolyte solution go inside electrode pores sufficiently, the laminate type battery was allowed to stand at 25°C for 24 hours while a contact pressure of 0.5 Mpa was applied.

Here, the following substance was used for the electrolyte solution. First, 1.0 mol/liter of LiPF₆ (electrolyte) was dissolved in a mixed solvent of 30% by volume of ethylene carbonate (EC) and 70% by volume of diethyl carbonate (DEC). Thereafter, 1.8% by weight of lithium difluorophosphate (LiPO₂F₂) as lithium fluorophosphate acting as an additive and 1.5% by weight of methane disulfonic acid were dissolved therein to obtain an electrolyte solution.

Thereafter, the power generating element was set to an evaluate cell attachment jig, and a positive electrode lead and a negative electrode lead were each attached to a tab end of the power generating element. A test was performed.

### [Evaluation of battery characteristics]

The laminate type battery manufactured in Reference Example 1 was subjected to an initial charge treatment and an activation treatment under the following conditions to evaluate performance thereof.

### [Initial charge treatment]

An aging treatment of the battery was performed as follows. Charging was performed at 25°C at 0.05 C for 4 hours (SOC: about 20%) by a constant current charging method. Subsequently, the battery was charged at 25°C at 0.1 C rate to 4.45 V. Thereafter, charging was stopped, and the battery was allowed to stand in the state (SOC: about 70%) about for two days (48 hours).

### [Gas removing treatment 1]

The one side temporarily sealed by thermocompression bonding was unsealed. Gas was removed at 10 ± 3 hPa for five minutes. Thereafter, the one side was subjected to thermocompression bonding again to perform temporary sealing. In addition, pressure molding (contact pressure 0.5 ± 0.1 MPa) was performed using a roller to make the electrode adhere to the separator sufficiently.

### [Activation treatment]

Two cycles of charging at 25°C at 0. 1 C until the voltage became 4.45 V by a constant current charging method and thereafter, discharging at 0.1 C to 2.0 V, were performed. Similarly, one cycle of charging at 25°C at 0.1 C until the voltage became 4.55 V by a constant current charging method and then discharging at 0.1 C to 2.0 V, and one cycle of charging at 0.1 C until the voltage became 4.65 V and then discharging at 0.1 C to 2.0 V, were performed. Furthermore, one cycle of charging at 25°C at 0.1 C until the voltage became 4.75 V by a constant current charging method and then discharging at 0.1 C to 2.0 V was performed.

### [Gas removing treatment 2]

The one side temporarily sealed by thermocompression bonding was unsealed. Gas was removed at 10 ± 3 hPa for five minutes. Thereafter, the one side was subjected to thermocompression bonding again to perform regular sealing. In addition, pressure molding (contact pressure: 0.5 ± 0.1 MPa) was performed using a roller to make the electrode adhere to the separator sufficiently.

### [Performance evaluation]

Battery evaluation was performed as follows. That is, the battery was charged by a constant current constant voltage charging method in which the battery was charged at 0.1 C rate until the maximum voltage became 4.5 V, and then the battery was allowed to stand about for 1 hour to 1.5 hours. The battery was discharged by a constant current discharge method in which the battery was discharged at 0.1 C rate until the battery minimum voltage became 2.0 V. Any test was performed at room temperature. At this time, a discharge capacity at 0.1 C rate was referred to as "0.1 C discharge capacity (mAh/g)", and was compared with those in other Examples and Reference and Comparative Examples. Results are shown in Table 1.

### [Life time evaluation]

In a life time test of the battery, 200 cycles of the above charge-discharge at 1.0 C were repeated at 25°C. Battery evaluation was performed as follows. That is, the battery was charged by a constant current constant voltage charging method in which the battery was charged at 0.1 C rate until the maximum voltage became 4.5 V, and then the battery was allowed to stand about for 1 hour to 1.5 hours. The battery was discharged by a constant current discharge method in which the battery was discharged at 0.1 C rate until the battery minimum voltage became 2.0 V. Any test was performed at room temperature.

A ratio of the discharge capacity at the 200-th cycle with respect to the discharge capacity at the first cycle was referred to as "capacity retention rate (%)", and was compared with those in other Examples and Reference and Comparative Examples. Results are shown in Table 1.

### [REFERENCE EXAMPLES 2 to 5]

In Reference Examples 2 to 5, positive electrodes C2 to C5 of Reference Examples 2 to 5 were manufactured using positive electrode active materials C2, C3, C4, and C5 obtained by coating solid solution active material C1 obtained in Reference Example 1 with 1% by mass, 2% by mass, 5% by mass, and 10% by mass of Al₂O₃, respectively, according to Reference Example 1. Thereafter, laminate type batteries of Reference Examples 2 to 5 were manufactured according to Reference Example 1 to evaluate battery characteristics. Obtained results are shown in Table 1.

Here, as for the coat amount of alumina (change of 0.5 (% by mass) in Reference Example 1 to 1, 2, 5, and 10 (% by mass) in Reference Examples 2 to 5), only the charged amount of aluminum nitrate nonahydrate in Reference Example 1 was changed to twice, four times, 10 times, and 20 times. Other conditions were the same as in Reference Example 1.

In the following Reference Examples 6 and 7, the Al₂O₃ amount was 1% by mass, the same as that in Reference Example 2, and the solid solution active materials had different compositions from one another.

### [Reference Example 6]

In Reference Example 6, solid solution active material C6 obtained in the following preparation was used, and other conditions were the same as in Reference Example 2. Positive electrode C6 of Reference Example 6 was manufactured using positive electrode active material C6 obtained by coating solid solution active material C6 with 1% by mass of Al₂O₃. Thereafter, a laminate type battery of Reference Example 6 was manufactured according to Reference Example 2 to evaluate battery characteristics. Obtained results are shown in Table 1.

### (Preparation of solid solution active material C6)

1. Predetermined amounts of manganese sulphate monohydrate (molecular weight 223.06 g/mol), nickel sulfate hexahydrate (molecular weight 262.85 g/mol), and cobalt sulfate heptahydrate (molecular weight 281.10 g/mol) were added to 200 g of pure water. The resulting mixture was stirred and dissolved to prepare a mixed solution.
2. Subsequently, ammonia water was dropwise added to the mixed solution until the pH became 7. A Na₂CO₃ solution was further dropwise added thereto, and a composite carbonate was precipitated (the pH was maintained to 7 with ammonia water while the Na₂CO₃ solution was dropwise added).
3. Thereafter, the precipitate was subjected to suction filtration, washed with water sufficiently, and then dried at 120°C for 5 hours in a dry oven.
4. The dry powder was pulverized with a mortar, and then subjected to temporary calcination at 500°C for 5 hours.
5. With the powder subjected to temporary calcination, a predetermined amount of lithium hydroxide monohydrate (molecular weight 41.96 g/mol) was mixed. The resulting mixture was pulverized and mixed for 30 minutes.
6. This powder was subjected to temporary calcination at 500°C for 2 hours. Thereafter, the powder was subjected to calcination at 900°C for 12 hours to obtain solid solution active material C6.

The composition of solid solution active material C6 obtained in this way was as follows.

### [Numerical formula 4]

### Composition formula; Li_{1.5} [Ni_{0.25}Mn_{0.75}Co_{0.25} [Li]_{0.25}]O_{z}

When this composition formula is applied to the composition formula (1), e = 0, a + b + c + d + e = 1.5, d = 0.25, a + b + c + e = 1.25, and z represents the number of oxygen atoms satisfying an atomic valence, meeting the requirement of the composition formula (1).

### [Reference Example 7]

In Reference Example 7, solid solution active material C7 obtained in the following preparation was used, and other conditions were the same as in Reference Example 2. Positive electrode C7 of Reference Example 7 was manufactured using positive electrode active material C7 obtained by coating solid solution active material C7 with 1% by mass of Al₂O₃. Thereafter, a laminate type battery of Reference Example 7 was manufactured according to Reference Example 2 to evaluate battery characteristics. Obtained results are shown in Table 1.

### (Preparation of solid solution active material C7)

1. Predetermined amounts of manganese sulphate monohydrate (molecular weight 223.06 g/mol), nickel sulfate hexahydrate (molecular weight 262.85 g/mol), and cobalt sulfate heptahydrate (molecular weight 281.10 g/mol) were added to 200 g of pure water. The resulting mixture was stirred and dissolved to prepare a mixed solution.
2. Subsequently, ammonia water was dropwise added to the mixed solution until the pH became 7. A Na₂CO₃ solution was further dropwise added thereto, and a composite carbonate was precipitated (the pH was maintained to 7 with ammonia water while the Na₂CO₃ solution was dropwise added).
3. Thereafter, the precipitate was subjected to suction filtration, washed with water sufficiently, and then dried at 120°C for 5 hours in a dry oven.
4. The dry powder was pulverized with a mortar, and then subjected to temporary calcination at 500°C for 5 hours.
5. With the powder subjected to temporary calcination, a predetermined amount of lithium hydroxide monohydrate (molecular weight 41.96 g/mol) was mixed. The resulting mixture was pulverized and mixed for 30 minutes.
6. This powder was subjected to temporary calcination at 500°C for 2 hours. Thereafter, the powder was subjected to calcination at 900°C for 12 hours to obtain solid solution active material C7.

The composition of solid solution active material C7 obtained in this way was as follows.

### [Numerical formula 5]

### Composition formula;Li_{1.5} [Ni_{0.15}Mn_{0.85}Co_{0.15}[Li]_{0.35}]O_{z}

When this composition formula is applied to the composition formula (1), e = 0, a + b + c + d + e = 1.5, d = 0.35, a + b + c + e = 1.15, and z represents the number of oxygen atoms satisfying an atomic valence, meeting the requirement of the composition formula (1).

In the following Reference Examples 8 to 11, the solid solution active materials had the same composition (system not containing Co) and Al₂O₃ amounts were different from one another.

### [Reference Example 8]

In Reference Example 8, solid solution active material C8 obtained in the following preparation was used, and other conditions were the same as in Reference Example 1. Positive electrode C8 of Reference Example 8 was manufactured using positive electrode active material C8 obtained by coating solid solution active material C8 with 0.5% by mass of Al₂O₃. Thereafter, a laminate type battery of Reference Example 8 was manufactured according to Reference Example 1 to evaluate battery characteristics. Obtained results are shown in Table 1.

### (Preparation of solid solution active material C8)

1. Predetermined amounts of manganese sulphate monohydrate (molecular weight 223.06 g/mol), nickel sulfate hexahydrate (molecular weight 262.85 g/mol), and cobalt sulfate heptahydrate (molecular weight 281.10 g/mol) were added to 200 g of pure water. The resulting mixture was stirred and dissolved to prepare a mixed solution.
2. Subsequently, ammonia water was dropwise added to the mixed solution until the pH became 7. A Na₂CO₃ solution was further dropwise added thereto, and a composite carbonate was precipitated (the pH was maintained to 7 with ammonia water while the Na₂CO₃ solution was dropwise added).
3. Thereafter, the precipitate was subjected to suction filtration, washed with water sufficiently, and then dried at 120°C for 5 hours in a dry oven.
4. The dry powder was pulverized with a mortar, and then subjected to temporary calcination at 500°C for 5 hours.
5. With the powder subjected to temporary calcination, a predetermined amount of lithium hydroxide monohydrate (molecular weight 41.96 g/mol) was mixed. The resulting mixture was pulverized and mixed for 30 minutes.
6. This powder was subjected to temporary calcination at 500°C for 2 hours. Thereafter, the powder was subjected to calcination at 900°C for 12 hours to obtain solid solution active material C8.

The composition of solid solution active material C8 obtained in this way was as follows.

### [Numerical formula 6]

### Composition formula; Li_{1.5}[Ni_{0.60}Mn_{0.80}[Li]_{0.10}]O_{z}

When this composition formula is applied to the composition formula (1), e = 0, a + b + c + d + e = 1.5, d = 0.10, a + b + c + e = 1.40, and z represents the number of oxygen atoms satisfying an atomic valence, meeting the requirement of the composition formula (1).

### [Reference Examples 9 to 11]

In Reference Examples 9 to 11, positive electrodes C9 to C11 of Reference Examples 9 to 11 were manufactured using positive electrode active materials C9 to C11 obtained by coating solid solution active material C8 obtained in Reference Example 8 with 1% by mass, 2% by mass, and 5% by mass of Al₂O₃, respectively, according to Reference Example 8. Thereafter, laminate type batteries of Reference Examples 9 to 11 were manufactured according to Reference Example 8 to evaluate battery characteristics. Obtained results are shown in Table 1.

Here, as for the coat amount of alumina (change of 0.5 (% by mass) in Reference Example 8 to 1, 2, and 5 (% by mass) in Reference Examples 9 to 11), only the charged amount of aluminum nitrate nonahydrate in Reference Example 8 was changed to twice, four times, and 10 times. Other conditions were the same as in Reference Example 8.

In the following Reference Examples 12 and 13, the Al₂O₃ amount was 1% by mass, the same as that in Reference Example 8, and the solid solution active materials (system not containing Co) had different compositions from one another.

### [Reference Example 12]

In Reference Example 12, solid solution active material C12 obtained in the following preparation was used, and other conditions were the same a,s in Reference Example 8. Positive electrode C12 of Reference Example 12 was manufactured using positive electrode active material C12 obtained by coating solid solution active material C12 with 1% by mass of Al₂O₃. Thereafter, a laminate type battery of Reference Example 12 was manufactured according to Example 8 to evaluate battery characteristics. Obtained results are shown in Table 1.

### (Preparation of solid solution active material C12)

1. Predetermined amounts of manganese sulphate monohydrate (molecular weight 223.06 g/mol), nickel sulfate hexahydrate (molecular weight 262.85 g/mol), and cobalt sulfate heptahydrate (molecular weight 281.10 g/mol) were added to 200 g of pure water. The resulting mixture was stirred and dissolved to prepare a mixed solution.
2. Subsequently, ammonia water was dropwise added to the mixed solution until the pH became 7. A Na₂CO₃ solution was further dropwise added thereto, and a composite carbonate was precipitated (the pH was maintained to 7 with ammonia water while the Na₂CO₃ solution was dropwise added).
3. Thereafter, the precipitate was subjected to suction filtration, washed with water sufficiently, and then dried at 120°C for 5 hours in a dry oven.
4. The dry powder was pulverized with a mortar, and then subjected to temporary calcination at 500°C for 5 hours.
5. With the powder subjected to temporary calcination, a predetermined amount of lithium hydroxide monohydrate (molecular weight 41.96 g/mol) was mixed. The resulting mixture was pulverized and mixed for 30 minutes.
6. This powder was subjected to temporary calcination at 500°C for 2 hours. Thereafter, the powder was subjected to calcination at 900°C for 12 hours to obtain solid solution active material C12.

The composition of solid solution active material C12 obtained in this way was as follows.

### [Numerical formula 7]

### Composition formula; Li_{1.5}[Ni_{0.375}Mn_{0.875}[Li]_{0.25}]O_{z}

When this composition formula is applied to the composition formula (1), e = 0, a + b + c + d + e = 1.5, d = 0.25, a + b + c + e = 1.25, and z represents the number of oxygen atoms satisfying an atomic valence, meeting the requirement of the composition formula (1).

### [Reference Example 13]

In Reference Example 13, solid solution active material C13 obtained in the following preparation was used, and other conditions were the same as in Reference Example 8. Positive electrode C13 of Reference Example 13 was manufactured using positive electrode active material C13 obtained by coating solid solution active material C13 with 1% by mass of Al₂O₃. Thereafter, a laminate type battery of Reference Example 13 was manufactured according to Reference Example 8 to evaluate battery characteristics. Obtained results are shown in Table 1.

### (Preparation of solid solution active material C13)

1. Predetermined amounts of manganese sulphate monohydrate (molecular weight 223.06 g/mol), nickel sulfate hexahydrate (molecular weight 262.85 g/mol), and cobalt sulfate heptahydrate (molecular weight 281.10 g/mol) were added to 200 g of pure water. The resulting mixture was stirred and dissolved to prepare a mixed solution.
2. Subsequently, ammonia water was dropwise added to the mixed solution until the pH became 7. A Na₂CO₃ solution was further dropwise added thereto, and a composite carbonate was precipitated (the pH was maintained to 7 with ammonia water while the Na₂CO₃ solution was dropwise added).
3. Thereafter, the precipitate was subjected to suction filtration, washed with water sufficiently, and then dried at 120°C for 5 hours in a dry oven.
4. The dry powder was pulverized with a mortar, and then subjected to temporary calcination at 500°C for 5 hours.
5. With the powder subjected to temporary calcination, a predetermined amount of lithium hydroxide monohydrate (molecular weight 41. 96 g/mol) was mixed. The resulting mixture was pulverized and mixed for 30 minutes.
6. This powder was subjected to temporary calcination at 500°C for 2 hours. Thereafter, the powder was subjected to calcination at 900°C for 12 hours to obtain solid solution active material C13.

The composition of solid solution active material C13 obtained in this way was as follows.

### [Numerical formula 8]

### Composition formula; Li_{1.5}[Ni_{0.225}Mn_{0.925}[Li]_{0.35}]O_{z}

When this composition formula is applied to the composition formula (1), e = 0, a + b + c + d + e = 1.5, d = 0.25, a + b + c + e = 1.25, and z represents the number of oxygen atoms satisfying an atomic valence, meeting the requirement of the composition formula (1).

In the following Examples 14 to 17, the solid solution active materials (containing Ti as X) had the same composition and Al₂O₃ amounts were different from one another.

### [Example 14]

In Example 14, solid solution active material C14 obtained in the following preparation was used, and other conditions were the same as in Reference Example 1. Positive electrode C14 of Example 14 was manufactured using positive electrode active material C14 obtained by coating solid solution active material C14 with 0.5% by mass of Al₂O₃. Thereafter, a laminate type battery of Example 14 was manufactured according to Reference Example 1 to evaluate battery characteristics. Obtained results are shown in Table 1.

### (Preparation of titanium citrate complex aqueous solution)

1. 60 g (0.3 mol) of anhydrous citric acid (molecular weight 192.12 g/mol) was added to 400 ml of acetone, heated to 60°C, and dissolved.
2. Subsequently, 56 g (0.2 mol) of titanium tetraisopropoxide (molecular weight 284.22 g/mol) was added thereto, and a precipitate was formed.
3. The liquid of the above 2. including the precipitate was subjected to suction filtration to obtain a precipitate (pale yellow).
4. H₂O (200 ml) was added to the precipitate and heated to 50 to 60°C to dissolve the precipitate.
5. The solution obtained in the above 4. was allowed to stand for one day or more, and insolubles were precipitated. Thereafter, the solution was filtered to remove the insolubles to obtain a titanium citrate aqueous solution. The Ti concentration was 5.0% by mass as TiO₂ (molecular weight 79.87 g/mol).

### (Preparation of solid solution active material C14)

1. To 7.99 g of the above titanium citrate complex aqueous solution (5.0% by mass as TiO₂), 15.93 g of manganese acetate tetrahydrate (molecular weight 245.09 g/mol), 6.22 g of nickel acetate tetrahydrate (molecular weight 248.84 g/mol), and 15.31 g of lithium acetate dihydrate (molecular weight 102.02 g/mol) were added in this order to obtain a mixture.
2. The mixture obtained in the above 1. was heated to 200°C to 300°C, and subjected to melting dissolution to obtain a molten solution (slurry).
3. The molten solution (slurry) obtained in the above 2. was sprayed in a heated state (200°C to 300°C) and dried using a spray dryer to obtain dry powder.
4. The dry powder obtained in the above 3. was subjected to temporary calcination at 400°C for 4 hours. Thereafter, the powder was subjected to calcination at 900°C for 12 hours to obtain solid solution active material C14.

The composition of solid solution active material C14 obtained in this way was as follows.

### [Numerical formula 9]

### Composition formula; Li_{1.5}[Ni_{0.375}Mn_{0.825}[Li]_{0.25}Ti_{0.05}]O_{z}

When this composition formula is applied to the composition formula (1), e = 0.05, a + b + c + d + e = 1.5, d = 0.25, a + b + c + e = 1.25, and z represents the number of oxygen atoms satisfying an atomic valence, meeting the requirement of the composition formula (1).

### [Examples 15 to 17]

In Examples 15 to 17, positive electrodes C15 to C17 of Examples 15 to 17 were manufactured using positive electrode active materials C15 to C17 obtained by coating solid solution active material C14 obtained in Example 14 with 1% by mass, 2% by mass, and 5% by mass of Al₂O₃, respectively, according to Example 14. Thereafter, laminate type batteries of Examples 15 to 17 were manufactured according to Example 14 to evaluate battery characteristics. Obtained results are shown in Table 1.

Here, as for the coat amount of alumina (change of 0.5 (% by mass) in Example 14 to 1, 2, and 5 (% by mass) in Examples 15 to 17), only the charged amount of aluminum nitrate nonahydrate in Examples 15 to 17 was changed to twice, four times, and 10 times. Other conditions were the same as in Example 14.

In the following Examples 18 and 19, the Al₂O₃ amount was 1% by mass, the same as that in Example 14, and the solid solution active materials had different compositions from one another. That is, a Zr citrate complex solution was used in place of the Ti citrate complex solution used in Examples 14 to 17. However, the preparation method was the same basically.

### [Example 18]

In Example 18, solid solution active material C18 obtained in the following preparation was used, and other conditions were the same as in Example 15. Positive electrode C18 of Example 18 was manufactured using positive electrode active material C18 obtained by coating solid solution active material C18 with 1% by mass of Al₂O₃. Thereafter, a laminate type battery of Example 18 was manufactured according to Example 15 to evaluate battery characteristics. Obtained results are shown in Table 1.

### (Preparation of zirconium citrate complex aqueous solution)

1. 60 g (0.3 mol) of anhydrous citric acid (molecular weight 192.12 g/mol) was added to 400 ml of acetone, heated to 60°C, and dissolved.
2. Subsequently, 77.53 g (0.2 mol) of zirconium tetraisopropoxide (molecular weight 387.67 g/mol) was added thereto, and a precipitate was formed.
3. The liquid of the above 2. including the precipitate was subjected to suction filtration to obtain a precipitate (pale yellow).
4. H₂O (200 ml) was added to the precipitate and heated to 50 to 60°C to dissolve the precipitate.
5. The solution obtained in the above 4. was allowed to stand for one day or more, and insolubles were precipitated. Thereafter, the solution was filtered to remove the insolubles to obtain a zirconium citrate complex aqueous solution. The Zr concentration was 5.0% by weight as ZrO₂.

### (Preparation of solid solution active material C18)

1. To 7.99 g of the above zirconium citrate complex aqueous solution (5.0% by mass as ZrO₂), 15.93 g of manganese acetate tetrahydrate (molecular weight 245.09 g/mol), 6.22 g of nickel acetate tetrahydrate (molecular weight 248.84 g/mol), and 15.31 g of lithium acetate dihydrate (molecular weight 102.02 g/mol) were added in this order to obtain a mixture.
2. The mixture obtained in the above 1. was heated to 200°C to 300°C, and subjected to melting dissolution to obtain a molten solution (slurry).
3. The molten solution (slurry) obtained in the above 2. was sprayed in a heated state (200°C to 300°C) and dried using a spray dryer to obtain dry powder.
4. The dry powder obtained in the above 3. was subjected to temporary calcination at 400°C for 4 hours. Thereafter, the powder was subjected to calcination at 900°C for 12 hours to obtain solid solution active material C18.

The composition of solid solution active material C18 obtained in this way was as follows.

### [Numerical formula 10]

### Composition formula; Li_{1.5}[Ni_{0.375}Mn_{0.825}[Li]_{0.25}Zr_{0.05}]O_{z}

When this composition formula is applied to the composition formula (1), e = 0.05, a + b + c + d + e = 1.5, d = 0.25, a + b + c + e = 1.25, and z represents the number of oxygen atoms satisfying an atomic valence, meeting the requirement of the composition formula (1).

### [Example 19]

In Example 19, a zirconium citrate complex aqueous solution was obtained in a similar manner to Example 18. Thereafter, solid solution active material C19 obtained in the following preparation was used, and other conditions were the same as in Example 15. Positive electrode C19 of Example 19 was manufactured using positive electrode active material C19 obtained by coating solid solution active material C19 with 1% by mass of Al₂O₃. Thereafter, a laminate type battery of Example 19 was manufactured according to Example 15 to evaluate battery characteristics. Obtained results are shown in Table 1.

### (Preparation of solid solution active material C19)

1. To 15.98 g of the above zirconium citrate complex aqueous solution (5.0% by mass as ZrO₂), 14.96 g of manganese acetate tetrahydrate (molecular weight 245.09 g/mol), 6.22 g of nickel acetate tetrahydrate (molecular weight 248.84 g/mol), and 15.31 g of lithium acetate dihydrate (molecular weight 102.02 g/mol) were added in this order to obtain a mixture.
2. The mixture obtained in the above 1. was heated to 200°C to 300°C, and subjected to melting dissolution to obtain a molten solution (slurry).
3. The molten solution (slurry) obtained in the above 2. was sprayed in a heated state (200°C to 300°C) and dried using a spray dryer to obtain dry powder.
4. The dry powder obtained in the above 3. was subjected to temporary calcination at 400°C for 4 hours. Thereafter, the powder was subjected to calcination at 900°C for 12 hours to obtain solid solution active material C19.

The composition of solid solution active material C19 obtained in this way was as follows.

### [Numerical formula 11]

### Composition formula; Li_{1.5}[Ni_{0.375}Mn_{0.775}[Li]_{0.25}Zr_{0.10}]O_{z}

When this composition formula is applied to the composition formula (1), e = 0.10, a + b + c + d + e = 1.5, d = 0.25, a + b + c + e = 1.25, and z represents the number of oxygen atoms satisfying an atomic valence, meeting the requirement of the composition formula (1).

### [Comparative Example 1]

In Comparative Example 1, positive electrode C20 of Comparative Example 1 was manufactured using positive electrode active material C20 (= solid solution active material C1) in which solid solution active material C1 was not coated with Al₂O₃ according to Reference Example 1. Thereafter, a laminate type battery of Comparative Example 1 was manufactured according to Reference Example 1 to evaluate battery characteristics. Obtained results are shown in Table 1.

### [Comparative Example 2]

In Comparative Example 2, the calcination temperature after the alumina coating treatment to the surface of solid solution active material C1 was changed from 450°C to 600°C, and other conditions were the same as in Reference Example 1. Positive electrode C21 of Comparative Example 2 was manufactured using positive electrode active material C21 obtained by coating solid solution active material C1 with 0.5% by mass of Al₂O₃ according to Reference Example 1. Thereafter, a laminate type battery of Comparative Example 2 was manufactured according to Reference Example 1 to evaluate battery characteristics. Obtained results are shown in Table 1.

**[Table 1]**

| | Composition | | | | | | Al₂O₃ coat layer | | | | | | Performance | Cycle durability |
|---|---|---|---|---|---|---|---|---|---|---|---|---|---|---|
| | Li | Nl | Mn | Co | [Li] | [M] | Al₂O₃/ wt% | Al element invasion depth/nm | Al₂O₃ layer average thickness/nm | (003) Δθ/° | (101) Δθ/° | Δθ/° | 0.1 C discharge capacity/mAh/g | Capacity retention rate/% |
| Ref. Example 1 | 1.50 | 0.40 | 0.60 | 0.40 | 0.10 | - | 0.5 | 5 | 3 | 0.00 | 0.00 | 0.00 | 233 | 80 |
| Ref. Example 2 | 1.50 | 0.40 | 0.60 | 0.40 | 0.10 | - | 1.0 | 8 | 5 | -0.01 | 0.01 | 0.01 | 240 | 85 |
| Ref. Example 3 | 1.50 | 0.40 | 0.60 | 0.40 | 0.10 | - | 2.0 | 16 | 10 | -0.02 | 0.02 | 0.02 | 248 | 88 |
| Ref. Example 4 | 1.50 | 0.40 | 0.60 | 0.40 | 0.10 | - | 5.0 | 24 | 15 | -0.03 | 0.03 | 0.03 | 250 | 91 |
| Ref. Example 5 | 1.50 | 0.40 | 0.60 | 0.40 | 0.10 | - | 10.0 | 30 | 55 | 0.00 | 0.00 | 0.00 | 176 | 85 |
| Ref. Example 6 | 1.50 | 0.25 | 0.75 | 0.25 | 0.25 | - | 1.0 | 16 | 10 | -0.01 | 0.01 | 0.01 | 264 | 86 |
| Ref: Example 7 | 1.50 | 0.15 | 0.85 | 0.15 | 0:35 | - | 1.0 | 16 | 10 | -0.01 | 0.01 | 0.01 | 290 | 85 |
| Ref. Example 8 | 1.50 | 0.60 | 0.80 | - | 0.10 | - | 0.5 | 5 | 3 | 0.00 | 0.00 | 0.00 | 238 | 82 |
| Ref. Example 9 | 1.50 | 0.60 | 0.80 | - | 0.10 | - | 1.0 | 8 | 5 | -0.01 | 0.01 | 0.01 | 245 | 87 |
| Ref. Example 10 | 1.50 | 0.60 | 0.80 | - | 0.10 | - | 2.0 | 17 | 10 | -0.02 | 0.02 | 0.02 | 252 | 90 |
| Ref. Example 11 | 1.50 | 0.60 | 0.80 | - | 0.10 | - | 5.0 | 25 | 15 | -0.03 | 0.03 | 0.03 | 255 | 93 |
| Ref. Example 12 | 1.50 | 0.375 | 0.875 | - | 0.25 | - | 1.0 | 17 | 10 | -0.01 | 0.01 | 0.01 | 269 | 88 |
| Ref. Example 13 | 1.50 | 0.225 | 0.925 | - | 0.35 | - | 1.0 | 17 | 10 | -0.01 | 0.01 | 0.01 | 296 | 87 |
| Example 14 | 1.50 | 0.375 | 0.825 | - | 0.25 | Ti 0.05 | 0.5 | 5 | 3 | 0.00 | 0.00 | 0.00 | 232 | 83 |
| Example 15 | 1.50 | 0.375 | 0.825 | - | 0.25 | Ti 0.05 | 1.0 | 8 | 5 | 0.00 | 0.00 | 0.00 | 239 | 88 |
| Example 16 | 1.50 | 0.375 | 0.825 | - | 0.25 | Ti 0.05 | 2.0 | 15 | 10 | -0.01 | 0.01 | 0.01 | 246 | 92 |
| Example 17 | 1.50 | 0.375 | 0.825 | - | 0.25 | Ti 0.05 | 5.0 | 23 | 15 | -0.02 | 0.02 | 0.02 | 249 | 95 |
| Example 18 | 1.50 | 0.375 | 0.825 | - | 0.25 | Zr 0.05 | 1.0 | 15 | 10 | 0.00 | 0.00 | 0.00 | 245 | 89 |
| Example 19 | 1.50 | 0.375 | 0.775 | - | 0.25 | Zr 0.10 | 1.0 | 15 | 10 | 0.00 | 0.00 | 0.00 | 237 | 88 |
| Comparative Example 1 | 1.50 | 0.40 | 0.60 | 0.40 | 0.10 | - | - | - | - | 0.00 | 0.00 | 0.00 | 225 | 76 |
| Comparative Example 2 | 1.50 | 0.40 | 0.60 | 0.40 | 0.10 | - | 0.5 | - | 3 | 0.00 | 0.00 | 0.00 | 220 | 78 |

"Al₂O₃/wt%" in Table 1 indicates a content (unit: wt%) of alumina in the positive electrode active material. All Reference Examples in this application are not forming part of the present invention.

"Al element invasion depth/nm" in Table 1 indicates a depth (unit: nm) from the surface of the solid solution active material not including the alumina layer.

"(003) Δθ/°" in Table 1 indicates a width of a peak shift (Δθ) (unit: ° (degree)) of (003) which is a layered rock salt structure peak in the X-ray diffraction of the positive electrode active material. A positive width of a peak shift (Δθ) indicates a shift width to a higher angle side. A negative width of a peak shift (Δθ) indicates a shift width to a lower angle side. 0.00° indicates that the width of a peak shift (Δθ) is zero (a peak is not shifted). " (101) Δθ/°" and " (104) Δθ/°" in Table 1 are similar to the above " (003) Δθ/°".

As shown in Table 1, in Reference Examples 1 to 13 and Examples 14 to 19 in which the surface of the solid solution active material is covered with alumina and a region (layer) containing Al is present at the interface between the solid solution active material and the alumina, it was possible to confirm exhibition of battery characteristics having an excellent capacity retention rate (refer to the effects of the present invention).

On the other hand, in Comparative Example 1 in which the surface of the solid solution active material is not covered with alumina, it was possible to confirm that the capacity retention rate was much lower than those in Reference Examples 1 to 13 and Examples 14 to 19, and an effect of preventing elution of a transition metal such as Mn from the solid solution positive electrode active material was not obtained sufficiently. Similarly, also in Comparative Example 2 in which the surface of the solid solution active material is covered with alumina but Al element is not present on the side of the surface of the solid solution active material in the interface between the solid solution active material and the alumina layer, it was possible to confirm that the capacity retention rate was much lower than those in Reference Examples 1 to 13 and Examples 14 to 19, and an effect of preventing elution of a transition metal such as Mn from the solid solution positive electrode active material was not obtained sufficiently.

In Reference Examples 1 to 13 and Examples 14 to 19, it was possible to confirm that in Reference Example 5 in which the content of alumina (not acting as an active material) was increased to 10% by mass, the 0.1 C discharge capacity of the battery characteristics was lower than those in other Examples (content of alumina : 0.5 to 5% by mass). This indicates that the content of alumina not acting as an active material was increased relatively and the capacity was lowered.

Reference Examples 1 to 4, 6, and 7 indicate that Reference Examples 2 to 4, 6, and 7 in which the solid solution active material is coated (covered) with 1 to 5% by mass of alumina exhibit battery characteristics having both a better 0.1 C discharge capacity and a better capacity retention rate than Reference Example 1 in which the solid solution active material is coated with 0.5% by mass of alumina. Reference Example 5 is the same as the above. From a different point of view, Reference Examples 2 to 4, 6, and 7 in which a shift was observed in the layered rock salt structure peaks (003) (101) (104) in the XRD measurement of the positive electrode active material of the battery exhibit battery characteristics having both a better 0.1 C discharge capacity and a better capacity retention rate than Reference Example 1 in which the shift was not observed.

Reference Examples 8 to 13 indicate that Reference Examples 9 to 13 in which the solid solution active material is coated with 1 to 5% by mass of alumina exhibit battery characteristics having both a better 0.1 C discharge capacity and a better capacity retention rate than Reference Example 8 in which the solid solution active material is coated with 0.5% by mass of alumina. From a different point of view, Reference Examples 9 to 13 in which a shift was observed in the layered rock salt structure peaks (003) (101) (104) in the XRD measurement of the positive electrode active material of the battery exhibit battery characteristics having both a better 0.1 C discharge capacity and a better capacity retention rate than Reference Example 8 in which the shift was not observed.

Examples 14 to 17 in which the solid solution contains Ti indicate that Examples 16 to 17 in which the solid solution active material is coated with 2 to 5% by mass of alumina exhibit battery characteristics having a better 0.1 C discharge capacity and a better capacity retention rate than Examples 14 and 15 in which the solid solution active material is coated with 0.5 to 1% by mass of alumina. From a different point of view, Examples 16 to 17 in which a shift was observed in the layered rock salt structure peaks (003) (101) (104) in the XRD measurement of the positive electrode active material exhibit battery characteristics having a better 0.1 C discharge capacity and a better capacity retention rate than Examples 14 and 15 in which the shift was not observed.

In Examples 18 and 19 in which the solid solution active material contains Zr, each solid solution active material is coated with 1.0% by mass of alumina, and a shift is not observed in the layered rock salt structure peaks (003) (101) (104) in the X-ray diffraction (XRD) measurement of the positive electrode active material of the battery. Therefore, it is difficult to perform direct comparison. However, Examples 16 and 17 in which the solid solution active material contains Ti and is coated with 2 to 3% by mass of alumina, and the peak shift of the layered rock salt structure was observed exhibit battery characteristics having a better 0.1 C discharge capacity and a better capacity retention rate. Therefore, it is easily predicted that the solid solution active material which contains Zr and is coated with 2 to 3% by mass of alumina would have the peak shift of the layered rock salt structure. As a result, it can be predicted that the solid solution active material which contains Zr and is coated with 2 to 3% by mass of alumina would exhibit battery characteristics having a better 0.1 C discharge capacity and a better capacity retention rate than Examples 18 and 19.

In Reference Examples 6 and 7, the [Li] compositions of the solid solution active material are 0.25 and 0.35, higher than 0.10 in Reference Examples 1 to 4. A comparison among Reference Examples 2, 6, and 7 in which the solid solution active material is coated with 1.0% by mass of alumina indicates that a solid solution active material having a higher [Li] composition can further improve battery characteristics, particularly the 0.1 C discharge capacity.

Also in Reference Examples 12 and 13, the [Li] compositions of the solid solution active material are 0.25 and 0.35, higher than 0.10 in Reference Examples 8 to 11. A comparison among Examples 9, 12, and 13 in which the solid solution active material is coated with 1.0% by mass of alumina indicates that a solid solution active material having a higher [Li] composition can further improve battery characteristics, particularly the 0.1 C discharge capacity.

### Reference Signs List

- 10a: parallel laminated type battery
- 10b: series laminated type battery
- 11: negative electrode current collector
- 11a: outermost layer negative electrode current collector
- 12: negative electrode active material layer
- 13: electrolyte layer
- 14: positive electrode current collector
- 15: positive electrode active material layer
- 16: unit battery layer
- 17: power generating element
- 18: negative electrode current collecting plate
- 19: positive electrode current collecting plate
- 20: negative electrode terminal lead
- 21: positive electrode terminal lead
- 22: laminate film
- 23: current collector
- 23a: outermost layer positive electrode current collector
- 23b: outermost layer negative electrode current collector
- 24: bipolar electrode
- 25: sealing portion (insulating part)

## Claims

1. A positive electrode active material for a non-aqueous electrolyte secondary battery, comprising:
a solid solution active material represented by the composition formula (1):
[Numerical formula 1]
Li_{1.5}[NiₐMn_{b}Co_{c}[Li]_{d}[X]ₑ]O_{z} (1)
wherein X represents at least one selected from Ti, Zr and Nb, 0 < e ≤ 0.5, a + b + c + d + e = 1.5, 0.1 ≤ d ≤ 0.4, and 1.1 ≤ [a + b + c + e] ≤ 1.4, and z represents the number of oxygen atoms satisfying an atomic valence; and
an alumina cover layer on the surface of the solid solution active material and a region in which Al element is present on the side of the surface of the solid solution active material in the interface between the solid solution active material and the alumina cover layer, wherein
a content of the alumina is 1 to 5% by mass with respect to the total amount of the positive electrode active material.

2. The positive electrode active material for a non-aqueous electrolyte secondary battery according to claim 1, having shifts in layered rock salt structure peaks (003), (101), and (104) in X-ray diffraction of the positive electrode active material.

3. The positive electrode active material for a non-aqueous electrolyte secondary battery according to claim 2, wherein, as for the shifts in layered rock salt structure peaks (003), (101), and (104) in X-ray diffraction of the positive electrode active material,
the layered rock salt structure peak (003) is shifted to a lower angle side,
the layered rock salt structure peak (101) is shifted to a higher angle side, and
the layered rock salt structure peak (104) is shifted to a higher angle side,
with respect to each layered rock salt structure peak in the X-ray diffraction only of the solid solution active material.

4. The positive electrode active material for a non-aqueous electrolyte secondary battery according to claim 2 or 3, wherein
shifts of the layered rock salt structure peaks (003), (101), and (104) are observed in the X-ray diffraction of the positive electrode active material, and
a width of each peak shift is, with respect to each layered rock salt structure peak in the X-ray diffraction of the positive electrode active material only of the solid solution active material,
(003): -0.08° ≤ Δθ < 0.00°,
(101): 0.00° < Δθ ≤ 0.05°, and
(104): 0.00° < Δθ ≤ 0.05°.

5. The positive electrode active material for a non-aqueous electrolyte secondary battery according to any one of claims 1 to 4, wherein the Al element is present in a region inside the active material of a thickness of up to 35 nm from the surface of the solid solution active material.

6. The positive electrode active material for a non-aqueous electrolyte secondary battery according to any one of claims 1 to 5, wherein the alumina cover layer covers the whole of the solid solution active material particles.

7. The positive electrode active material for a non-aqueous electrolyte secondary battery according to any one of claims 1 to 6, wherein an average thickness of the alumina cover layer is 1 to 60 nm.

8. A method for producing a positive electrode active material for a non-aqueous electrolyte secondary battery according to claim 1, comprising a step of coating a surface of a solid solution active material represented by the composition formula (1):
[Numerical formula 3]
Li_{1.5}[NiₐMn_{b}Co_{c}[Li]_{d}[X]ₑ]O_{z} (1)
wherein X represents at least one selected from Ti, Zr and Nb, 0 < e ≤ 0.5, a + b + c + d + e = 1.5, 0.1 ≤ d ≤ 0.4, and 1.1 ≤ [a + b + c + e] ≤ 1.4, and z represents the number of oxygen atoms satisfying an atomic valence, with alumina; and further comprising a step of preparing the solid solution active material, wherein the step comprises:
a first step of mixing an organic acid salt of a transition metal having a melting point of 100°C to 350°C and a citrate of at least one of Ti, Zr and Nb;
a second step of melting the mixture obtained in the first step at 100°C to 350°C;
a third step of subjecting the molten substance obtained in the second step to pyrolysis at a temperature equal to or higher than the melting point;
a fourth step of calcining the pyrolysate obtained in the third step;
a fifth step of mixing the solid solution active material and an aluminum nitrate solution at pH of 7 to 8;
a sixth step of drying the solid solution active material precursor obtained in the fifth step; and
a seventh step of calcining the dry solid solution active material precursor obtained in the sixth step at a temperature of 450°C ± 50°C.

9. The method according to claim 8, wherein an organic acid salt of an alkali metal is further mixed in the first step.

10. A positive electrode for a non-aqueous electrolyte secondary battery, comprising the positive electrode active material set forth in any one of claims 1 to 7.

11. A non-aqueous electrolyte secondary battery comprising:
the positive electrode set forth in claim 10;
a negative electrode comprising a negative electrode active material capable of inserting and releasing lithium ions; and
an electrolyte layer interposed between the positive electrode and the negative electrode.

12. The non-aqueous electrolyte secondary battery according to claim 11, wherein the surface of the negative electrode active material is covered with an amorphous carbon layer, the negative electrode active material is made of a graphite material not having a scaly shape, the negative electrode active material has a BET specific surface area of 0.8 to 1.5 m²/g and a tap density of 0.9 to 1.2 g/cm³.

13. The non-aqueous electrolyte secondary battery according to claim 11 or 12, comprising at least one additive for an electrolyte solution selected among organic sulfone compounds, organic disulfone compounds, vinylene carbonate derivatives, ethylene carbonate derivatives, ester derivatives, dihydric phenol derivatives, terphenyl derivatives, phosphate derivatives, and lithium fluorophosphate derivatives.

## Patentansprüche

1. Aktivmaterial der positiven Elektrode für eine Sekundärbatterie mit nicht-wässrigem Elektrolyten, umfassend:
ein Aktivmaterial in Form einer festen Lösung, das durch die Zusammensetzungsformel (1) wiedergegeben ist:
[Numerische Formel 1]
Li_{1,5}[NiₐMn_{b}Co_{c}[Li]_{d}[X]ₑ]O_{z} (1)
wobei X wenigstens eines, ausgewählt aus Ti, Zr und Nb, bedeutet, 0 < e ≤ 0,5, a + b + c + d + e = 1,5, 0,1 ≤ d ≤ 0,4, und 1,1 ≤ [a + b + c + e] ≤ 1,4, und z die Zahl der Sauerstoffatome bedeutet, die einer Atomwertigkeit entsprechen; und
eine Aluminiumoxiddeckschicht auf der Oberfläche des Aktivmaterials in Form einer festen Lösung und eine Region, in der ein Al-Element auf der Seite der Oberfläche des Aktivmaterials in Form einer festen Lösung in der Grenzfläche zwischen dem Aktivmaterial in Form einer festen Lösung und der Aluminiumoxiddeckschicht vorhanden ist, wobei ein Gehalt des Aluminiumoxids 1 bis 5 Masse%, bezogen auf die Gesamtmenge des Aktivmaterials der positiven Elektrode, beträgt.

2. Aktivmaterial der positiven Elektrode für eine Sekundärbatterie mit nicht-wässrigem Elektrolyten gemäß Anspruch 1, das Verschiebungen in den Peaks (003), (101) und (104) der geschichteten Steinsalzstruktur in der Röntgenbeugung des Aktivmaterials der positiven Elektrode aufweist.

3. Aktivmaterial der positiven Elektrode für eine Sekundärbatterie mit nicht-wässrigem Elektrolyten gemäß Anspruch 2, wobei, was die Verschiebungen in den Peaks (003), (101) und (104) der geschichteten Steinsalzstruktur in der Röntgenbeugung des Aktivmaterials der positiven Elektrode anbelangt,
der Peak (003) der geschichteten Steinsalzstruktur zu einer Seite mit niedrigerem Winkel verschoben ist,
der Peak (101) der geschichteten Steinsalzstruktur zu einer Seite mit höherem Winkel verschoben ist, und
der Peak (104) der geschichteten Steinsalzstruktur zu einer Seite mit höherem Winkel verschoben ist,
bezogen auf jeden Peak der geschichteten Steinsalzstruktur in der Röntgenbeugung nur von dem Aktivmaterial in Form einer festen Lösung.

4. Aktivmaterial der positiven Elektrode für eine Sekundärbatterie mit nicht-wässrigem Elektrolyten gemäß Anspruch 2 oder 3, wobei
Verschiebungen der Peaks (003), (101) und (104) der geschichteten Steinsalzstruktur in der Röntgenbeugung des Aktivmaterials der positiven Elektrode beobachtet werden, und eine Breite von jeder Peakverschiebung, bezogen auf jeden Peak der geschichteten Steinsalzstruktur in der Röntgenbeugung des Aktivmaterials der positiven Elektrode nur von dem Aktivmaterial in Form einer festen Lösung,
(003): -0,08° ≤ Δθ < 0,00°,
(101): 0,00° < Δθ ≤ 0,05°, und
(104): 0,00° < Δθ ≤ 0,05° ist.

5. Aktivmaterial der positiven Elektrode für eine Sekundärbatterie mit nicht-wässrigem Elektrolyten gemäß einem der Ansprüche 1 bis 4, wobei das Al-Element in einer Region im Inneren des Aktivmaterials mit einer Dicke von bis zu 35 nm von der Oberfläche des Aktivmaterials in Form einer festen Lösung her vorhanden ist.

6. Aktivmaterial der positiven Elektrode für eine Sekundärbatterie mit nicht-wässrigem Elektrolyten gemäß einem der Ansprüche 1 bis 5, wobei die Aluminiumoxiddeckschicht die Gesamtheit der Teilchen des Aktivmaterials in Form einer festen Lösung bedeckt.

7. Aktivmaterial der positiven Elektrode für eine Sekundärbatterie mit nicht-wässrigem Elektrolyten gemäß einem der Ansprüche 1 bis 6, wobei eine mittlere Dicke der Aluminiumoxiddeckschicht 1 bis 60 nm beträgt.

8. Verfahren zum Herstellen eines Aktivmaterials der positiven Elektrode für eine Sekundärbatterie mit nicht-wässrigem Elektrolyten gemäß Anspruch 1, umfassend einen Schritt des Beschichtens einer Oberfläche eines Aktivmaterials in Form einer festen Lösung, das durch die Zusammensetzungsformel (1) wiedergegeben ist:
[Numerische Formel 3]
Li_{1,5}[NiₐMn_{b}Co_{c}[Li]_{d}[X]ₑ]O_{z} (1)
wobei X wenigstens eines, ausgewählt aus Ti, Zr und Nb, bedeutet, 0 < e ≤ 0,5, a + b + c + d + e = 1,5, 0,1 ≤ d ≤ 0,4 und 1,1 ≤ [a + b + c + e] ≤ 1,4, und z die Zahl von Sauerstoffatomen bedeutet, die einer Atomwertigkeit entsprechen, mit Aluminiumoxid; und außerdem umfassend einen Schritt des Herstellens des Aktivmaterials in Form einer festen Lösung, wobei der Schritt umfasst:
einen ersten Schritt des Mischens eines organischen Säuresalzes von einem Übergangsmetall mit einem Schmelzpunkt von 100 °C bis 350 °C und eines Citrats von wenigstens einem von Ti, Zr und Nb;
einen zweiten Schritt des Schmelzens der in dem ersten Schritt erhaltenen Mischung bei 100 °C bis 350 °C;
einen dritten Schritt des Unterwerfens der in dem zweiten Schritt erhaltenen geschmolzenen Substanz einer Pyrolyse bei einer Temperatur, die gleich oder höher als der Schmelzpunkt ist;
einen vierten Schritt des Calcinierens des in dem dritten Schritt erhaltenen Pyrolysats;
einen fünften Schritt des Mischens des Aktivmaterials in Form einer festen Lösung und einer Aluminiumnitratlösung bei einem pH von 7 bis 8;
einen sechsten Schritt des Trocknens der in dem fünften Schritt erhaltenen Vorstufe eines Aktivmaterials in Form einer festen Lösung; und
einen siebenten Schritt des Calcinierens der in dem sechsten Schritt erhaltenen trockenen Vorstufe eines Aktivmaterials in Form einer festen Lösung bei einer Temperatur von 450 °C ± 50 °C.

9. Verfahren gemäß Anspruch 8, wobei ein organisches Säuresalz von einem Alkalimetall außerdem in dem ersten Schritt gemischt wird.

10. Positive Elektrode für eine Sekundärbatterie mit nicht-wässrigem Elektrolyten, umfassend das Aktivmaterial der positiven Elektrode, das in einem der Ansprüche 1 bis 7 angegeben ist.

11. Sekundärbatterie mit nicht-wässrigem Elektrolyten, umfassend:
die in Anspruch 10 angegebene positive Elektrode;
eine negative Elektrode, umfassend ein Aktivmaterial der negativen Elektrode, das im Stande ist, Lithiumionen einzubauen und freizusetzen; und
eine zwischen der positiven Elektrode und der negativen Elektrode eingeschobene Elektrolytschicht.

12. Sekundärbatterie mit nicht-wässrigem Elektrolyten gemäß Anspruch 11, wobei die Oberfläche des Aktivmaterials der negativen Elektroden mit einer amorphen Kohlenstoffschicht bedeckt ist, das Aktivmaterial der negativen Elektrode aus einem Graphitmaterial gefertigt ist, das keine schuppenartige Form aufweist, das Aktivmaterial der negativen Elektrode eine spezifische BET-Oberfläche von 0,8 bis 1,5 m²/g und eine Klopfdichte von 0,9 bis 1,2 g/cm³ aufweist.

13. Sekundärbatterie mit nicht-wässrigem Elektrolyten gemäß Anspruch 11 oder 12, umfassend wenigstens einen Zusatz für eine Elektrolytlösung, ausgewählt aus organischen Sulfonverbindungen, organischen Disulfonverbindungen, Vinylencarbonatderivaten, Ethylencarbonatderivaten, Esterderivaten, zweiwertigen Phenolderivaten, Terphenylderivaten, Phosphatderivaten und Lithiumfluorphosphatderivaten.

## Revendications

1. Matériau actif d'électrode positive destiné à une batterie secondaire à électrolyte non aqueux, comprenant :
un matériau actif en solution solide représenté par la formule de composition (1) :
[Formule numérique 1]
Li_{1,5}[NiₐMn_{b}Co_{c}[Li]_{d}[X]ₑ]O_{z} (1)
dans laquelle X représente au moins l'un sélectionné parmi Ti, Zr et Nb, 0 < e ≤ 0,5, a + b + c + d + e = 1,5, 0,1 ≤ d ≤ 0,4, et 1,1 ≤ [a + b + c + e] ≤ 1,4, et z représente le nombre d'atomes d'oxygène satisfaisant une valence atomique ; et
une couche d'alumine de recouvrement sur la surface du matériau actif en solution solide et une région dans laquelle l'élément Al est présent sur le côté de la surface du matériau actif en solution solide dans l'interface entre le matériau actif en solution solide et la couche d'alumine de recouvrement, où
une teneur de l'alumine est de 1 à 5 % en masse par rapport à la quantité totale du matériau actif d'électrode positive.

2. Matériau actif d'électrode positive destiné à une batterie secondaire à électrolyte non aqueux selon la revendication 1, présentant des décalages dans les pics de structure de sel de roche stratifiée (003), (101), et (104) en diffraction des rayons X du matériau actif d'électrode positive.

3. Matériau actif d'électrode positive destiné à une batterie secondaire à électrolyte non aqueux selon la revendication 2, dans lequel, concernant les décalages dans les pics de structure de sel de roche stratifiée (003), (101), et (104) en diffraction des rayons X du matériau actif d'électrode positive,
le pic de structure de sel de roche stratifiée (003) est décalé vers un côté des angles inférieurs,
le pic de structure de sel de roche stratifiée (101) est décalé vers un côté des angles supérieurs, et
le pic de structure de sel de roche stratifiée (104) est décalé vers un côté des angles supérieurs,
par rapport à chaque pic de structure de sel de roche stratifiée en diffraction des rayons X uniquement du matériau actif en solution solide.

4. Matériau actif d'électrode positive destiné à une batterie secondaire à électrolyte non aqueux selon la revendication 2 ou 3, dans lequel
les décalages des pics de structure de sel de roche stratifiée (003), (101), et (104) sont observés en diffraction des rayons X du matériau actif d'électrode positive, et
une largeur de chaque décalage de pic est, par rapport à chaque pic de structure de sel de roche stratifiée en diffraction des rayons X du matériau actif d'électrode positive uniquement du matériau actif en solution solide,
(003) : -0,08° ≤ Δθ < 0,00°,
(101) : 0,00° < Δθ ≤ 0,05°, et
(104) : 0,00° < Δθ ≤ 0,05°.

5. Matériau actif d'électrode positive destiné à une batterie secondaire à électrolyte non aqueux selon l'une quelconque des revendications 1 à 4, dans lequel l'élément Al est présent dans une région à l'intérieur du matériau actif d'une épaisseur supérieure à 35 nm de la surface du matériau actif en solution solide.

6. Matériau actif d'électrode positive destiné à une batterie secondaire à électrolyte non aqueux selon l'une quelconque des revendications 1 à 5, dans lequel la couche d'alumine de recouvrement recouvre l'intégralité des particules de matériau actif en solution solide.

7. Matériau actif d'électrode positive destiné à une batterie secondaire à électrolyte non aqueux selon l'une quelconque des revendications 1 à 6, dans lequel une épaisseur moyenne de la couche d'alumine de recouvrement est de 1 à 60 nm.

8. Procédé de production d'un matériau actif d'électrode positive destiné à une batterie secondaire à électrolyte non aqueux selon la revendication 1, comprenant une étape de revêtement d'une surface d'un matériau actif en solution solide représenté par la formule de composition (1) :
[Formule numérique 3]
Li_{1,5}[NiₐMn_{b}CO_{c}[Li]_{d}[X]ₑ]O_{z} (1)
dans laquelle X représente au moins l'un sélectionné parmi Ti, Zr et Nb, 0 < e ≤ 0,5, a + b + c + d + e = 1, 5, 0,1 ≤ d ≤ 0,4, et 1,1 ≤ [a + b + c + e] ≤ 1,4, et z représente le nombre d'atomes d'oxygène satisfaisant une valence atomique, avec l'alumine ; et comprenant en outre une étape de préparation du matériau actif en solution solide, l'étape comprenant :
une première étape de mélange d'un sel d'acide organique d'un métal de transition ayant un point de fusion de 100°C à 350°C et d'un citrate d'au moins l'un de Ti, Zr et Nb ;
une seconde étape de fusion du mélange obtenu dans la première étape à 100°C à 350°C ;
une troisième étape de soumission de la substance fondue obtenue dans la seconde étape à la pyrolyse à une température supérieure ou égale au point de fusion ;
une quatrième étape de calcination du pyrolysat obtenu dans la troisième étape ;
une cinquième étape de mélange du matériau actif en solution solide et d'une solution de nitrate d'aluminium au pH de 7 à 8 ;
une sixième étape de séchage du précurseur de matériau actif en solution solide obtenu dans la cinquième étape ; et
une septième étape de calcination du précurseur sec de matériau actif en solution solide obtenu dans la sixième étape à une température de 450°C ± 50°C.

9. Procédé selon la revendication 8, dans lequel un sel d'acide organique d'un métal alcalin est en outre mélangé dans la première étape.

10. Électrode positive destinée à une batterie secondaire à électrolyte non aqueux, comprenant le matériau actif d'électrode positive exposé selon l'une quelconque des revendications 1 à 7.

11. Batterie secondaire à électrolyte non aqueux comprenant :
l'électrode positive exposée dans la revendication 10 ;
une électrode négative comprenant un matériau actif d'électrode négative capable d'insertion et de libération d'ions lithium ; et
une couche d'électrolyte interposée entre l'électrode positive et l'électrode négative.

12. Batterie secondaire à électrolyte non aqueux selon la revendication 11, dans laquelle la surface du matériau actif d'électrode négative est recouverte d'une couche de carbone amorphe, le matériau actif d'électrode négative étant constitué d'un matériau de graphite ne présentant pas de forme en écailles, le matériau actif d'électrode négative présentant une surface spécifique BET de 0,8 à 1,5 m²/g et une masse volumique à l'état tassé de 0,9 à 1,2 g/cm³.

13. Batterie secondaire à électrolyte non aqueux selon la revendication 11 ou 12, comprenant au moins un additif destiné à une solution d'électrolyte sélectionnée parmi les composés de sulfone organique, les composés de disulfone organique, les dérivés de carbonate de vinylène, les dérivés de carbonate d'éthylène, les dérivés ester, les dérivés dihydriques de phénol, les dérivés terphényliques, les dérivés phosphates, et les dérivés de phosphate fluoré de lithium.
